(19)

**Europäisches Patentamt**
**European Patent Office**
**Office européen des brevets**

(11) **EP 2 763 412 A1**

(12) **EUROPEAN PATENT APPLICATION**
published in accordance with Art. 153(4) EPC

(43) Date of publication:
**06.08.2014 Bulletin 2014/32**

(51) Int Cl.:
***H04N 7/26*** (0000.00)

(21) Application number: **12835723.3**

(22) Date of filing: **20.09.2012**

(86) International application number:
**PCT/JP2012/074093**

(87) International publication number:
**WO 2013/047326 (04.04.2013 Gazette 2013/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.09.2011 JP 2011211530**

(71) Applicant: **Sony Corporation Tokyo 108-0075 (JP)**

(72) Inventor: **SATO Kazushi Tokyo 108-0075 (JP)**

(74) Representative: **Malden, Nicholas D Young & Co LLP 120 Holborn London EC1N 2DY (GB)**

(54) **IMAGE PROCESSING DEVICE AND METHOD**

(57) The present disclosure relates to an image processing device and a method for enabling coding processing and decoding processing more efficiently. An image processing device of the present disclosure includes a coding-unit setting unit configured to set a size of a coding unit indicating granularity of a slice border to a size equal to or more than a minimum size of a coding unit for setting a quantization parameter, a quantization parameter setting unit configured to set the quantization parameter for the coding unit in accordance with the size of the coding unit set by the coding-unit setting unit, a quantization unit configured to quantize coefficient data of the image using the quantization parameter that is set by the quantization parameter setting unit, and an encoding unit configured to generate encoded stream by coding the coefficient data that are quantized by the quantization unit. The present disclosure can be applied to an image processing device.

FIG. 6

EP 2 763 412 A1

**Description**

TECHNICAL FIELD

The present disclosure relates to an image processing device and a method and relates to an image processing device and a method for performing a quantization process or an inverse quantization process.

BACKGROUND ART

Recently, an device complying with a system such as MPEG (Moving Picture Experts Group), which digitally treats image information and compresses the same by an orthogonal transform such as a discrete cosine transform and motion compensation by using redundancy specific to the image information in order to efficiently transmit and accumulate the information at that time, has been widely used in both of information distribution in a broadcast station and information reception in standard home.

In particular, MPEG2 (ISO (International Organization for Standardization)/IEC (International Electrotechnical Commission) 13818-2) is defined as a general-purpose image coding method, and with a standard covering both of an interlaced scanned image and sequentially scanned image and a standard resolution image and a high-definition image, it is now widely used for wide range of applications for professionals and consumers. When the MPEG2 compression method is used, high compression rate and high image quality can be achieved by allocating, for example, 4 to 8 Mbps as an amount of codes (bit rate) for an interlaced scanned image of a standard resolution having 720 by 480 pixels and 18 to 22 Mbps for an interlaced scanned image of a high resolution having 1920 by 1088 pixels.

MPEG2 is mainly targeted for high image quality coding suitable for broadcasting, but does not support coding method of a less amount of codes (bit rate) than MPEG1. In other words, MPEG2 does not support higher compression rate. As portable terminals become widely prevalent, needs for such coding methods are considered to grow in the future, and in order to respond to such needs, MPEG4 coding method has been standardized. With regard to image coding method, the specification is admitted as ISO/IEC 14496-2 in international standard on December, 1998.

Further, in recent years, a standard called H.26L (ITU-T (International Telecommunication Union Telecommunication Standardization Sector) Q6/16 VCEG (Video Coding Expert Group)) is standardized for the purpose of image coding for teleconference in the first place. As compared with conventional coding methods such as MPEG2 and MPEG4, H.26L is known to require a higher amount of computation in coding and decoding thereof, but achieve a still higher degree of coding efficiency. In addition, currently, as one of activities of MPEG4, standardization of achieving a still higher degree of efficiency based on H.26L by incorporating functions not supported by H.26L is being done in Joint Model of Enhanced-Compression Video Coding.

With regard to the schedule of standardization, it was made into international standard under the name of H.264 and MPEG-4 Part10 (Advanced Video Coding, hereinafter referred to as AVC) on March, 2003.

Further, as an expansion thereto, standardization of FRExt (Fidelity Range Extension) including 8 by 8 DCT (Discrete Cosine Transform) and quantization matrix defined by MPEG-2 and coding required for business such as RGB, 4 : 2 : 2, and 4 : 4 : 4 is completed on February, 2005, and therefore, using AVC, this is made into a coding method capable of expressing film noise included in movies in a preferable manner and is beginning to be used in wide range of applications such as Blu-Ray Disc.

However, recently, the needs for coding with a still higher degree of compression rate are growing. For example, it is desired to compress an image of about 4000 by 2000 pixels which is four times the high vision image or distribute high vision image in a limited transmission capacity environment such as the Internet. Therefore, in VCEG (Video Coding Expert Group) under ITU-T, improvement of the coding efficiency is continuously considered.

By the way, there is a method for dividing a picture of an image of coding target into multiple slices and performing coding processing on each slice independently. For example, there is a method for processing each slice in parallel, thus performing coding processing at a high speed.

Coding of picture is performed for predetermined partial area of a picture, e.g., a macro block and a coding unit. Therefore, a border position of a slice is limited to between such partial areas. More specifically, the granularity of slice is configured to be an integer multiple of such partial area.

As described above, a method has been devised to cause a coding-side device to set a parameter slice_granularity representing the granularity of slice and transmit it to a decoding-side device (for example, see Non-Patent Document 1). Like the case of the coding processing, the decoding-side device looks up the value of slice_granularity which has been transmitted, thus capable of dividing a slice like the case of the coding processing, and therefore, the decoding processing can be performed according to the method corresponding to the coding processing.

By the way, Non-Patent Document 1 discloses a method for performing quantization processing for each partial area in order to reduce the amount of code in such image coding. The quantization parameter used in this quantization processing can be set for each of a predetermined number of partial areas by the coding-side device, and can be transmitted to the decoding-side device (in reality, difference value is transmitted). The lower limit of the size of the partial area for which the quantization parameter is set (transmitted) is defined by a parameter max_cu_qp_delta_depth.

CITATION LIST

NON-PATENT DOCUMENT

Non-Patent Document 1: Benjamin Bross, Woo-Jin Han, Jens-Rainer Ohm, Gary J. Sullivan, Thomas Wiegand, "Working Draft 4 of High-Efficiency Video Coding", JCTVC-F803_d0, Joint Collaborative Team on Video Coding (JCT-VC)of ITU-T SG16 WP3 and ISO/IEC JTC1/SC29/WG116th Meeting: Torino, IT, 14-22 July, 2011

SUMMARY OF THE INVENTION

PROBLEMS TO BE SOLVED BY THE INVENTION

However, when the granularity of slice (slice_granularity) is less than the lower limit (max_cu_qp_delta_depth) of the size of the partial area for which the quantization parameter is set (transmitted), then a partial area may occur at the head of the slice for which the quantization parameter is not set (transmitted).

When the quantization parameter is not set in the partial area in question which is the processing target, the quantization parameter used in the partial area processed previously is applied. Therefore, when the quantization parameter is not set (transmitted) in the partial area at the head of the slice as described above, it becomes necessary to use the setting of the partial area of the previous slice, and this may make it impossible to perform processing independently for each slice, and reduce the efficiency of the quantization processing and the inverse-quantization processing (coding processing and decoding processing).

The present disclosure is made in view of such circumstances, and it is an object of the present disclosure to perform coding processing and decoding processing more efficiently while ensuring the independence of processing for each slice.

SOLUTION TO PROBLEMS

An aspect of the present disclosure is an image processing device for coding an image with a unit having a hierarchical structure, and the image processing device includes a coding-unit setting unit configured to set a size of a coding unit indicating granularity of a slice border to a size equal to or more than a minimum size of a coding unit for setting a quantization parameter, a quantization parameter setting unit configured to set the quantization parameter for the coding unit in accordance with the size of the coding unit set by the coding-unit setting unit, a quantization unit configured to quantize coefficient data of the image using the quantization parameter that is set by the quantization parameter setting unit, and an encoding unit configured to generate encoded stream by coding the coefficient data that are quantized by the quantization unit.

The coding-unit setting unit may set, as a setting condition, a condition that the size of the coding unit indicating the granularity of the slice border is equal to or more than the minimum size of the coding unit for setting the quantization parameter.

The coding-unit setting unit may limit the size of the coding unit indicating the granularity of the slice border to a size equal to or more than the minimum size of the coding unit for setting the quantization parameter.

The image processing device may further include an identification information setting unit configured to set limitation identification information for identifying that the size of the coding unit indicating the granularity of the slice border is to be limited to a size equal to or more than the minimum size of the coding unit for setting the quantization parameter, and a transmission unit configured to transmit limitation identification information that is set by the identification information setting unit and an encoded stream that is generated by the encoding unit.

The coding-unit setting unit may use a parameter indicating the granularity of the border of the slice and a parameter indicating the minimum size of the coding unit for setting the quantization parameter to set the setting condition.

The image processing device may further include a transmission unit for transmitting the parameter indicating the granularity of the border of the slice that is set by the coding-unit setting unit and the encoded stream generated by the encoding unit.

The transmission unit may transmit a parameter indicating the minimum size of the coding unit for setting the quantization parameter.

An aspect of the present disclosure is an image processing method for an image processing device for coding an image with a unit having a hierarchical structure, wherein the image processing device sets a size of a coding unit indicating granularity of a slice border to a size equal to or more than a minimum size of a coding unit for setting a quantization parameter, the image processing device sets the quantization parameter for the coding unit in accordance with the size of the coding unit that is set, the image processing device quantizes coefficient data of the image using the quantization parameter that is set, and the image processing device generates encoded stream by coding the coefficient data that are quantized by the quantization unit.

Another aspect of the present disclosure is an image processing device for decoding an image encoded with a unit having a hierarchical structure, and the image processing device includes a decoding unit configured to decode an encoded stream obtained by coding coefficient data of the image quantized, a reception unit configured to receive a size of a coding unit indicating granularity of a slice border that is set to be equal to or more than a minimum size of a coding unit for setting a quantization parameter, a quantization parameter setting unit configured to set the quantization parameter for the coding unit in accordance with the size of the coding unit received by the reception unit, and an inverse-quantization unit configured to obtain the coefficient data of the image by performing inverse-quantization on the coefficient data of the image quantized that is obtained by the decoding unit, using the quantization parameter that is set by the quantization parameter setting unit.

The reception unit may receive a condition that the size of the coding unit indicating the granularity of the slice border is equal to or more than the minimum size of the coding unit for setting the quantization parameter that is set as a setting condition.

The reception unit may receive the size of the coding unit indicating the granularity of the slice border, which is limited to be equal to or more than the minimum size of the coding unit for setting the quantization parameter.

The reception unit further may receive limitation identification information for identifying that the size of the coding unit indicating the granularity of the slice border is limited to be equal to or more than the minimum size of the coding unit for setting the quantization parameter.

The reception unit may use a parameter indicating the granularity of the border of the slice and a parameter indicating the minimum size of the coding unit for setting the quantization parameter to receive the setting condition that has been set.

The reception unit may receive the parameter indicating the granularity of the border of the slice and the encoded stream.

The reception unit may receive the parameter indicating the minimum size of the coding unit for setting the quantization parameter.

Another aspect of the present disclosure is an image processing method for an image processing device for decoding an image encoded with a unit having a hierarchical structure, wherein the image processing device decodes an encoded stream obtained by coding coefficient data of the image quantized, the image processing device receives a size of a coding unit indicating granularity of a slice border that is set to be equal to or more than a minimum size of a coding unit for setting a quantization parameter, the image processing device sets the quantization parameter for the coding unit in accordance with the size of the coding unit, and the image processing device obtains the coefficient data of the image by performing inverse-quantization on the coefficient data of the image quantized, using the quantization parameter that is set.

A still another aspect of the present disclosure is an image processing device for coding an image with a unit having a hierarchical structure, and the image processing device includes a coding-unit setting unit configured to set a minimum size of a coding unit for setting a quantization parameter to a size equal to or more than a minimum size of a transform unit, a quantization parameter setting unit configured to set the quantization parameter for the coding unit in accordance with the size of the coding unit set by the coding-unit setting unit, a quantization unit configured to quantize coefficient data of the image using the quantization parameter that is set by the quantization parameter setting unit, and an encoding unit configured to generate encoded stream by coding the coefficient data that are quantized by the quantization unit.

A still another aspect of the present disclosure is an image processing method for an image processing device for coding an image with a unit having a hierarchical structure, wherein the image processing device sets a minimum size of a coding unit for setting a quantization parameter to a size equal to or more than a minimum size of a transform unit, the image processing device sets a the quantization parameter for the coding unit in accordance with the size of the coding unit that is set, the image processing device quantizes coefficient data of the image using the quantization parameter that is set, and the image processing device generates encoded stream by coding the coefficient data that are quantized.

A still another aspect of the present disclosure is an image processing device for decoding an image encoded with a unit having a hierarchical structure, and the image processing device includes a decoding unit configured to decode an encoded stream obtained by coding coefficient data of the image quantized, a reception unit configured to receive a size of a coding unit indicating granularity of a slice border that is set to be equal to or more than a minimum size of a transform unit, a quantization parameter setting unit configured to set the quantization parameter for the coding unit in accordance with the size of the coding unit received by the reception unit, and an inverse-quantization unit configured to obtain the coefficient data of the image by performing inverse-quantization on the coefficient data of the image quantized that is obtained by the decoding unit, using the quantization parameter that is set by the quantization parameter setting unit.

A still another aspect of the present disclosure is an image processing method for an image processing device for decoding an image encoded with a unit having a hierarchical structure, wherein the image processing device decodes an encoded stream obtained by coding coefficient data of the image quantized, the image processing device receives a size of a coding unit indicating granularity of a slice border that is set to be equal to or more than a minimum size of a transform unit, the image processing device sets the quantization parameter for the coding unit in accordance with the size of the coding unit received, and the image processing device obtains the coefficient data of the image by performing inverse-quantization on the coefficient data of the image quantized, using the quantization parameter that is set.

In an aspect of the present disclosure, the size of the coding unit indicating the granularity of the slice border is set as a size equal to or more than the minimum size of the coding unit for setting the quantization parameter, and the quantization parameter for the coding unit is set in accordance with the size of the coding unit thus set, and the coefficient data of the image is quantized using the quantization parameter that is set, and the encoded stream is generated by coding the coefficient data quantized.

In another aspect of the present disclosure, the encoded stream obtained by coding the coefficient data of the image quantized is decoded, and the size of the coding unit indicating the granularity of the slice border that is set to be equal to or more than the minimum size of the coding unit for setting the quantization parameter is received, and the quantization parameter for the coding unit is set in accordance with the size of the coding unit received, and the coefficient data of the image are obtained by performing inverse-quantization on the coefficient data of the image quantized, using the quantization parameter that have been set.

In a still another aspect of the present disclosure, the minimum size of the coding unit for setting the quantization parameter is set to be equal to or more than the minimum size of the transform unit, and the quantization parameter for the coding unit is set in accordance with the size of the coding unit that has been set, and the coefficient data of the image are quantized using the quantization parameter that has been set, and the encoded stream is generated by coding the coefficient data quantized.

In a still another aspect of the present disclosure, the encoded stream obtained by coding the coefficient data of the image quantized is decoded, and the size of the coding unit indicating the granularity of the slice border that is set to be equal to or more than the minimum size of the transform unit is received, and the quantization parameter for the coding unit is set in accordance with the size of the coding unit received, and the coefficient data of the image are obtained by performing the inverse-quantization on the coefficient data of the image quantized, using the quantization parameter that has been set.

EFFECTS OF THE INVENTION

According to the present disclosure, an image can be processed. In particular, the coding processing and the decoding processing can be performed more efficiently.

BRIEF DESCRIPTION OF DRAWINGS

Fig. 1 is a block diagram illustrating an example of main configuration of an image coding device.
Fig. 2 is a view illustrating a configuration example of a coding unit.
Fig. 3 is a view illustrating an example of the syntax of picture parameter set.
Fig. 4 is a view illustrating an example of the syntax of a slice header.
Fig. 5 is a figure explaining an example of slice border.
Fig. 6 is a block diagram for explaining an example of main configuration of a quantization setting unit.
Fig. 7 is a flowchart illustrating an example of a flow of a coding process.
Fig. 8 is a flowchart explaining an example of a flow of quantization setting processing.
Fig. 9 is a flowchart explaining an example of a flow of quantization setting processing.
Fig. 10 is a block diagram illustrating an example of main configuration of an image decoding device.
Fig. 11 is a block diagram for explaining an example of main configuration of an inverse-quantization setting unit.
Fig. 12 is a flowchart explaining an example of a flow of decoding processing.
Fig. 13 is a flowchart explaining an example of a flow of inverse-quantization setting processing.
Fig. 14 is a figure explaining another method of quantization parameter setting.
Fig. 15 is a block diagram for explaining another example of configuration of a quantization setting unit.
Fig. 16 is a flowchart explaining another example of a flow of quantization setting processing.

Fig. 17 is a flowchart explaining another example of a flow of quantization setting processing.

Fig. 18 is a block diagram for explaining another example of configuration of an inverse-quantization setting unit.

Fig. 19 is a flowchart explaining another example of a flow of inverse-quantization setting processing.

Fig. 20 is a figure comparing and explaining each method.

Fig. 21 is a view illustrating another example of the syntax of picture parameter set.

Fig. 22 is a figure for explaining an example of transmission of delta QP.

Fig. 23 is a view illustrating an example of a multi-view image coding system.

Fig. 24 is a view illustrating a principal configuration example of the multi-viewpoint image coding device to which the present technology is applied.

Fig. 25 is a view illustrating a principal configuration example of a multi-viewpoint image decoding device to which the present technology is applied.

Fig. 26 is a view illustrating an example of a hierarchical image coding system.

Fig. 27 is a view illustrating a principal configuration example of a hierarchical image coding device to which the present technology is applied.

Fig. 28 is a view illustrating a principal configuration example of a hierarchical image decoding device to which the present technology is applied.

Fig. 29 is a block diagram illustrating an example of main configuration of a computer.

Fig. 30 is a block diagram illustrating a principal configuration example of a television device.

Fig. 31 is a block diagram illustrating a principal configuration example of a mobile terminal.

Fig. 32 is a block diagram illustrating a principal configuration example of a recording/reproducing device.

Fig. 33 is a block diagram illustrating a principal configuration example of an imaging device.

MODE FOR CARRYING OUT THE INVENTION

Hereinafter, modes for carrying out the present disclosure (hereinafter referred to as embodiments) will be described. Note that the description is given in the following order.

1. First Embodiment (Image Coding device/Image Decoding device)
2. Second Embodiment (Image Coding device/Image Decoding device)
3. Third Embodiment (limitation)
4. Fourth Embodiment (Multi-View Image Coding/Multi-Viewpoint Image Decoding devices)
5. Fifth Embodiment (Hierarchical Image Coding/Hierarchical Image Decoding devices)
6. Sixth Embodiment (Computer)
7. Seventh embodiment (television receiver)
8. Eighth embodiment (cellular phone)
9. Ninth embodiment (recording/reproducing device)
10. Tenth embodiment (image-capturing device)

<1. First Embodiment>

[Image Coding device]

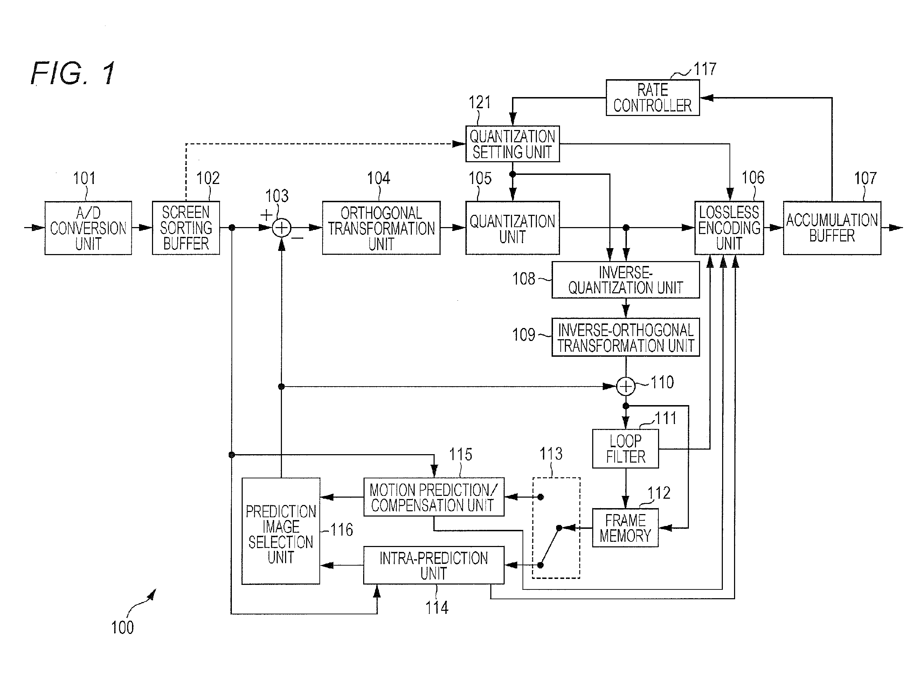

Fig. 1 is a block diagram illustrating a principal configuration example of an image coding device, which is an image processing device, to which the present technology is applied.

An image coding device 100 as illustrated in Fig. 1 encodes image data of motion picture using, e.g., HEVC (High Efficiency Video Coding) coding method, H.264 and MPEG (Moving Picture Experts Group) 4 Part10 (AVC (Advanced Video Coding)) coding method.

As illustrated in Fig. 1, the image coding device 100 includes an A/D conversion unit 101, a screen sorting buffer 102, a calculation unit 103, an orthogonal transformation unit 104, a quantization unit 105, a lossless encoding unit 106, and an accumulation buffer 107. The image coding device 100 includes an inverse-quantization unit 108, an inverse-orthogonal transformation unit 109, a calculation unit 110, a loop filter 111, a frame memory 112, a selection unit 113, an intra-prediction unit 114, a motion prediction/compensation unit 115, a prediction image selection unit 116, and a rate controller 117. Further, the image coding device 100 has a quantization setting unit 121.

The A/D conversion unit 101 performs A/D conversion on received image data, and provides converted image data (digital data) to the screen sorting buffer 102 to store the image data therein. The screen sorting buffer 102 sorts images of frames in the stored display order into the order of frames for coding in accordance with GOP (Group Of Picture), and provides the images of which frame order has been sorted to the calculation unit 103. The screen sorting buffer 102 supplies the image, in which order of the frames has been reordered, also to the intra-prediction unit 114 and the motion prediction/compensation unit 115.

Further, the screen sorting buffer 102 provides the quantization setting unit 121 with an address (CU address) of a partial area (CU (Coding Unit)) of processing target.

The calculation unit 103 subtracts a prediction image, which is provided from the intra-prediction unit 114 or the motion prediction/compensation unit 115 via the prediction image selection unit 116, from an image read from the screen sorting buffer 102, and provides difference information thereof to the orthogonal transformation unit 104. For example, in a case of the image to which intra coding is performed, the calculation unit 103 subtracts, from the image read from the screen sorting buffer 102, the predicted image supplied from the intra-prediction unit 114. Also, in a case of the image to which inter coding is performed, for example, the calculation unit 103 subtracts, from the image read from the screen sorting buffer 102, the predicted image supplied from the motion prediction/compensation unit 115.

The orthogonal transformation unit 104 applies orthogonal transformation such as discrete cosine transform and Karhunen-Loeve conversion on difference information provided from the calculation unit 103. It should be noted that the method of this orthogonal transformation may be any method. The orthogonal transformation unit 104 provides conversion coefficients to the quantization unit 105.

The quantization unit 105 quantizes the conversion coefficients from the orthogonal transformation unit 104. The quantization unit 105 performs quantization using a quantization parameter set by the quantization setting unit 121. The quantization unit 105 supplies the quantized transform coefficient to the lossless encoding unit 106.

The lossless encoding unit 106 encodes the conversion coefficients quantized by the quantization unit 105 using any coding method. The coefficient data are quantized under the control of the rate controller 117, and therefore, the amount of code becomes a target value set by the rate controller 117 (or becomes close to the target value).

The lossless encoding unit 106 obtains intra-prediction information including information indicating mode of intra-prediction and the like from the intra-prediction unit 114, and obtains inter-prediction information including information indicating mode of inter-prediction, motion vector information, and the like from the motion prediction/compensation unit 115. Further, the lossless encoding unit 106 obtains filter coefficients and the like used by the loop filter 111.

The lossless encoding unit 106 also obtains various kinds of information about quantization provided from the quantization setting unit 121. For example, the lossless encoding unit 106 obtains about the granularity of the slice border and information about transmission minimum unit of quantization parameter. For example, the lossless encoding unit 106 obtains information about the quantization parameter of picture, information about the quantization parameter of slice, and information about the quantization parameter of coding unit (CU).

The lossless encoding unit 106 encodes various kinds of information as described above using any coding method, and makes them into a part of header information of coded data (multiplexing). The lossless encoding unit 106 supplies the coded data obtained by the coding to the accumulation buffer 107 for accumulation.

Examples of coding methods of the lossless encoding unit 106 include variable length coding or arithmetic coding. An example of variable length coding includes CAVLC (Context-Adaptive Variable Length Coding) and the like defined in H.264/AVC method. An example of arithmetic coding includes CABAC (Context-Adaptive Binary Arithmetic Coding).

The accumulation buffer 107 temporarily holds coded data provided by the lossless encoding unit 106. With predetermined timing, the accumulation buffer 107 outputs the coded data held therein, as a bit stream, to, for example, a recording device (recording medium), a transmission path, and the like, not shown, provided in a later stage. More specifically, various kinds of encoded information are provided to the decoding-side device.

The transform coefficient quantized by the quantization unit 105 is also supplied to the inverse-quantization unit 108. The inverse-quantization unit 108 inversely quantizes the quantized transform coefficient by a method corresponding to the quantization by the quantization unit 105, using the quantization parameter set by the quantization setting unit 121 like the case of the quantization unit 105. The inverse-quantization unit 108 supplies an obtained transform coefficient to the inverse-orthogonal transformation unit 109.

The inverse-orthogonal transformation unit 109 performs inverse-orthogonal transformation on the conversion coefficients provided by the inverse-quantization unit 108 according to a method corresponding to the orthogonal transformation processing by the orthogonal transformation unit 104. The method of the inverse-orthogonal transformation may be any method as long as it is a method corresponding to the orthogonal transformation processing by the orthogonal transformation unit 104. The output obtained from the inverse-orthogonal transformation (locally restored difference information) is provided to the calculation unit 110.

The calculation unit 110 adds a prediction image, which is provided from the intra-prediction unit 114 or the motion prediction/compensation unit 115 via the prediction image selection unit 116, to the inverse-orthogonal transformation result provided from the inverse-orthogonal transformation unit 109, i.e., locally restored difference information, and obtains locally reconfigured image (reconfigured image). The reconfigured image is provided to the loop filter 111 or the frame memory 112.

The loop filter 111 includes a deblock filter, an adaptive loop filter, and the like, and applies filter processing to the decoded image provided from the calculation unit 110 as necessary. For example, the loop filter 111 applies deblock filter processing to the decoded image to remove block noise from the decoded image. For example, the loop filter 111 applies loop filter processing to the deblock filter processing result (decoded image from which only the block noise has been removed) using Wiener Filter, thus improving the image equality.

It should be noted that the loop filter 111 may apply any given filter processing to the decoded image. As necessary, the loop filter 111 provides information such as filter coefficients used in the filter processing to the lossless encoding unit 106 to have the lossless encoding unit 106 encode it.

The loop filter 111 provides filter processing result (hereinafter referred to as decoded image) to the frame memory 112.

The frame memory 112 stores the reconfigured image provided from the calculation unit 110 and the decoded image provided from the loop filter 111. The frame memory 112 provides the stored reconfigured image to the intra-prediction unit 114 via the selection unit 113 with predetermined timing or on the basis of external request such as the intra-prediction unit 114. The frame memory 112 provides the stored decoded image to the motion prediction/compensation unit 115 via the selection unit 113 with predetermined timing or on the basis of external request such as the motion prediction/compensation unit 115.

The selection unit 113 indicates the destination of the image which is output from the frame memory 112. For example, in a case of intra-prediction, the selection unit 113 reads a not yet filtered image (reconfigured image) from the frame memory 112, and provides it as surrounding pixels to the intra-prediction unit 114.

For example, in a case of inter-prediction, the selection unit 113 reads a filtered image (decoded image) from the frame memory 112, and provides it as the reference image to the motion prediction/compensation unit 115.

When the intra-prediction unit 114 obtains an image of a surrounding region around a processing target region (surrounding image) from the frame memory 112, the intra-prediction unit 114 uses pixel values in the surrounding image to perform intra-prediction (prediction within screen) for generating a prediction image by basically adopting a prediction unit (PU) as a processing unit. The intra-prediction unit 114 performs this intra-prediction with multiple modes prepared in advance (intra-prediction modes).

The intra-prediction unit 114 generates prediction images with all the intra-prediction modes which can be candidates, and uses an input image provided from the screen sorting buffer 102 to evaluate cost function value of each prediction image, thus selecting the optimum mode. When the optimum intra-prediction mode is selected, the intra-prediction unit 114 provides the prediction image generated with the optimum mode to the prediction image selection unit 116.

The intra-prediction unit 114 provides intra-prediction information including information indicating the optimum intra-prediction mode to the lossless encoding unit 106 as necessary, and have the lossless encoding unit 106 to perform coding.

The motion prediction/compensation unit 115 uses the input image provided from the screen sorting buffer 102 and the reference image provided from the frame memory 112 to perform motion prediction (inter-prediction) by basically adopting the PU as a processing unit, performs motion compensation processing in accordance with a detected motion vector, and generates a prediction image (inter-prediction image information). The motion prediction/compensation unit 115 performs such inter-prediction with multiple modes prepared in advance (inter-prediction mode).

The motion prediction/compensation unit 115 generates prediction images with all the inter-prediction modes which can be candidates, and evaluates cost function value of each prediction image, thus selecting the optimum mode. When the optimum inter-prediction mode is selected, the motion prediction/compensation unit 115 provides the prediction image generated with the optimum mode to the prediction image selection unit 116.

The motion prediction/compensation unit 115 provides inter-prediction information including information indicating the optimum inter-prediction mode to the lossless encoding unit 106, and have the lossless encoding unit 106 to perform coding.

The prediction image selection unit 116 selects the source of the prediction image provided to the calculation unit 103 and the calculation unit 110. For example, in a case of intra-coding, the prediction image selection unit 116 selects the intra-prediction unit 114 as a source of prediction image, and provides a prediction image, which is provided from the intra-prediction unit 114, to the calculation unit 103 and the calculation unit 110. For example, in a case of inter-coding, the prediction image selection unit 116 selects the motion prediction/compensation unit 115 as a source of prediction image, and provides a prediction image, which is provided from the motion prediction/compensation unit 115 to the calculation unit 103 and the calculation unit 110.

The rate controller 117 controls the rate of the quantization operation of the quantization unit 105 so as not to cause overflow and underflow, on the basis of the amount of code of the coded data accumulated in the accumulation buffer 107. The rate controller 117 provides information about the rate to the quantization setting unit 121.

The quantization setting unit 121 sets the quantization parameter on the basis of the information provided by the rate controller 117, and provides it to the quantization unit 105 and the inverse-quantization unit 108. The quantization setting unit 121 provides the lossless encoding unit 106 with the information about the quantization parameter that has been set, and transmits it to the decoding side. Further, the quantization setting unit 121 generates the parameter (the parameter concerning the quantization) used for generation of the quantization parameter. The quantization setting unit 121 provides the parameter concerning the quantization to the lossless encoding unit 106, and transmits it to the decoding side.

[Coding unit]

Hereinafter, first, coding unit (Coding Unit) defined in HEVC coding method will be described.

The coding unit (CU) is also referred to as a Coding Tree Block (CTB), and is a partial area of an image of picture unit, which is a counterpart of the macro block in AVC. More specifically, the CU is a unit of coding processing (coding unit). In the macro block, the size is fixed to 16 by 16 pixels, but in the CU, the size is not fixed, and in each sequence, the size is designated in image compression information.

In particular, a CU having the maximum size is referred to as an LCU (Largest Coding Unit), and a CU having the smallest size is referred to as an SCU (Smallest Coding Unit). More specifically, the LCU is a maximum coding unit, and the SCU is a minimum coding unit. For example, in the sequence parameter set included in the image compression information, the size of such area is designated, but each is limited to a square and a size represented by a power of two.

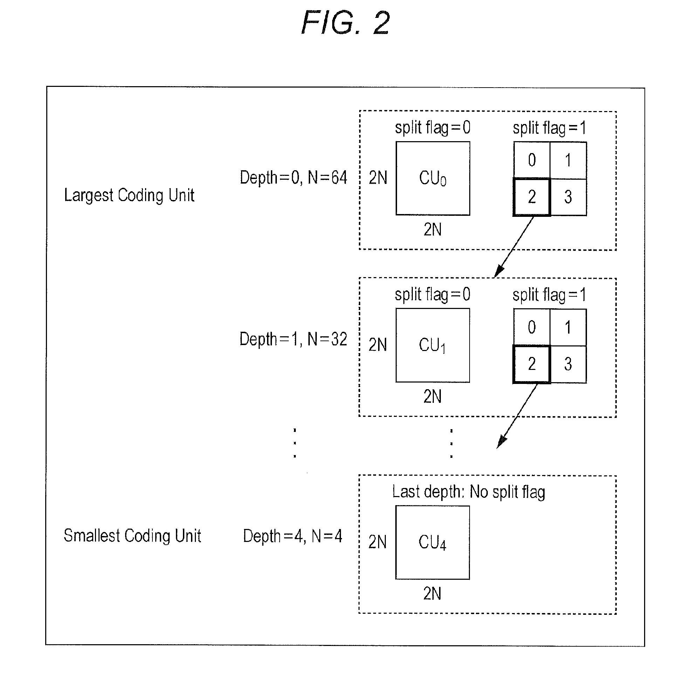

Fig. 2 illustrates an example of coding unit (Coding Unit) defined by HEVC. In the example of Fig. 2, the size of the LCU is 128 (2N (N = 64)), and maximum hierarchical depth is 5 (Depth = 4). When the value of split_flag is "1", a CU of which size is 2N by 2N is divided into CUs of which size is N by N, which is a hierarchy in one level below.

Further, the CU is divided into Prediction Units (PUs), which are areas serving as processing unit of intra- or inter-prediction (partial areas of image of picture unit), and divided into Transform Units (TUs) which are areas serving as processing unit of orthogonal transformation (partial areas of image of picture unit).

The image coding device 100 performs each processing about coding using the partial area of the image of the picture unit as processing unit. In the explanation below, a case where the image coding device 100 uses the CU defined in the HEVC as the coding unit will be described. More specifically, the LCU is the maximum coding unit, the SCU is the minimum coding unit. However, the processing unit of each processing of coding with the image coding device 100 is not limited thereto and may be anything. For example, the macro block and sub-macro block defined in the AVC may be adopted as processing unit.

In the explanation below, "(partial) area" includes all of various kinds of area explained above (for example, macro block, sub-macro block, LCU, CU, SCU, PU, and TU) (or may be at least one of them). Of course, units other than explained above may be included, and units which are impossible according to the contents of explanation are excluded as necessary.

[Transmission of parameter]

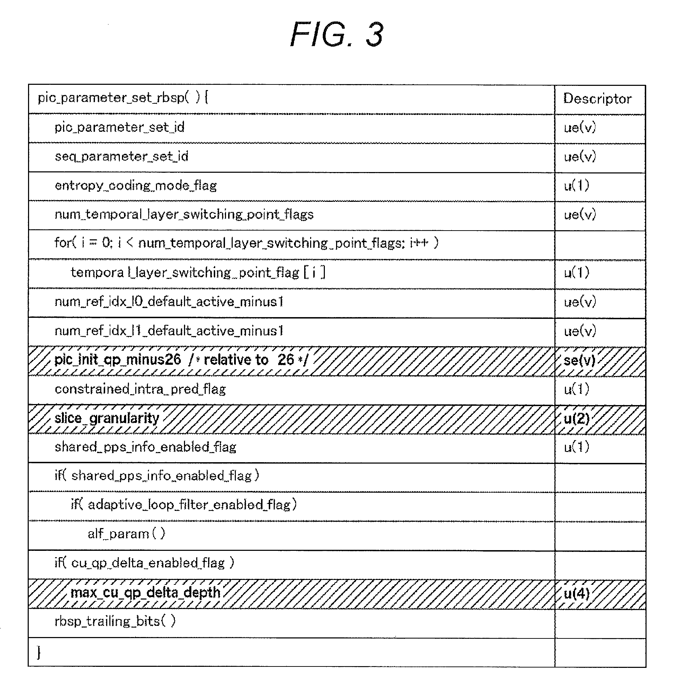

Fig. 3 is a view illustrating an example of the syntax of picture parameter set of the HEVC coding method. In the case of the HEVC coding method, as shown in Fig. 3, parameters such as slice_granularity and max_cu_qp_delta_depth are defined, and are transmitted to the decoding-side device in such a manner that it is included in the picture parameter set (see Non-Patent Document 1).

slice_granularity is a parameter indicating the granularity of the slice border. In the coding processing of picture, division into multiple slices can be done with which processing can be done independently from each other. For example, coding processing of each slice can be executed in parallel. In the coding processing, the CU is treated as processing unit, and therefore, the border of the CU is the slice header. slice_granularity designates what size of CU of the slice border. More specifically, it designates the size of the CU at the head.

max_cu_qp_delta_depth is a parameter indicating the unit of the minimum CU transmitting the quantization parameter. In the HEVC coding method, quantization parameter CUQP for each CU can be set. However, the quantization parameter CUQP for each CU thus set (in reality, difference quantization parameter ΔQP) needs to be transmitted to the decoding side. Therefore, the efficiency of quantization is improved when setting can be made with a smaller unit, but the amount of code of the quantization parameter increases. Therefore, even if quantization parameter can be set with unnecessarily small unit, the coding efficiency may be reduced. max_cu_qp_delta_depth defines the minimum unit for setting the quantization parameter (i.e., the minimum unit of transmission). Quantization of a CU smaller than the size designated by max_cu_qp_delta_depth is performed using the quantization parameter of the CU processed before the CU in question.

In the case of the HEVC coding method, as shown in Fig. 3, information about the quantization parameter of corresponding picture pic_init_qp_minus 26 are defined, and are transmitted to the decoding-side device in such a manner that it is included in the picture parameter set (see Non-Patent Document 1). pic_init_qp_minus 26 indicates the initial value of the quantization parameter of the corresponding picture.

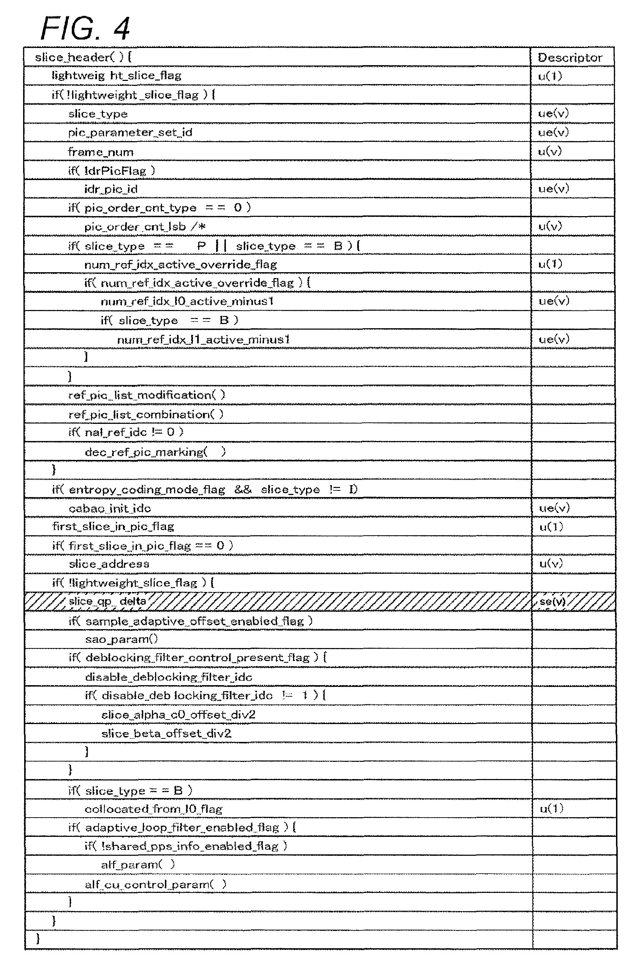

Fig. 4 is a view illustrating an example of the syntax of a slice header of the HEVC coding method. In the case of the HEVC coding method, as shown in Fig. 4, information about the quantization parameter of corresponding slice slice_qp_delta are defined, and are transmitted to the decoding-side device in such a manner that it is included in the picture parameter set (see Non-Patent Document 1). In the case of the HEVC coding method, quantization parameter Slice QP for each slice is set. The difference value slice_qp_delta is transmitted as a parameter indicating the quantization parameter Slice QP of the slice of this slice to the decoding-side device in such a manner that it is included in the picture parameter set.

By the way, in Non-Patent Document 1 does not indicate the relationship of the size of slice_granularity and max_cu_qp_delta_depth. Therefore, for example, with max_cu_qp_delta_depth, the unit of the minimum CU transmitting the quantization parameter is allowed to be designated as $32 \times 32$, and with slice_granularity, the granularity of the slice border is allowed to be designated as the CU having a size $16 \times 16$. More specifically, the difference quantization parameter $\Delta QP$ of the CU at the head of the slice may not be transmitted (the quantization parameter of the CU at the head of the slice may not be set).

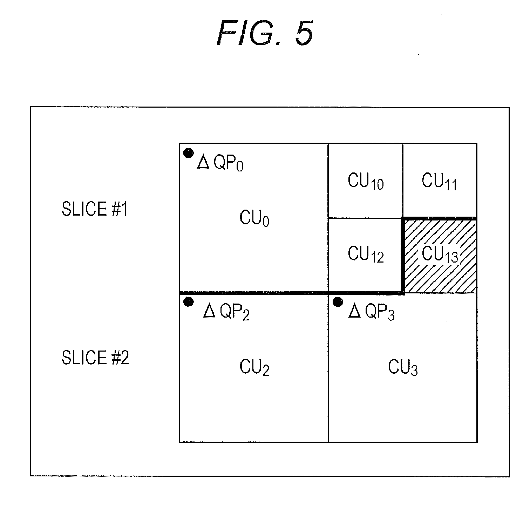

Fig. 5 illustrates an example of LCU provided with slice border. As shown in the example of Fig. 5, the slice can be divided with a CU unit which is smaller than the LCU (slice #1 and slice #2). Therefore, when the slice border is set as shown by a thick line in Fig. 5, a $CU_{13}$ indicated by diagonal line pattern is the CU at the head of the slice #2. The difference quantization parameter $\Delta QP$ is designated so as to make setting for each CU which is higher than the $CU_{13}$ by one ($\Delta QP_0$ to $AQP_3$).

However, in such case, Non-Patent Document 1 does not define a method as to how decoding processing is performed on the difference quantization parameter $\Delta QP$. Therefore, with such setting, the coding-side device and the decoding-side device may be unable to correctly perform quantization and inverse-quantization on the CU at the head of the slice.

For example, when the slice border is not set in the LCU of the example of Fig. 5, the $CU_{13}$ uses the difference quantization parameter $\Delta QP_1$ to perform the quantization. However, in the example of Fig. 5, slice border (thick line) is set, and in order to maintain independence of the slice, it is not allowed to look up beyond the slice border. More specifically, in the example of Fig. 5, the quantization parameter (difference quantization parameter) of the $CU_{13}$ at the head of the slice is not set, and this may make it impossible to correct perform quantization and inverse-quantization.

The slice may be divided, for example, based on the number of blocks or based on the amount of code. For example, the slice may be divided so that the number of blocks included in each slice is as equal as possible. For example, the slice may be divided so that the amount of code of each slice is as equal as possible.

Especially, when the slice is divided so that the amount of code is as equal as possible, the border of the slice may not be the border of the LCU as shown in the example of Fig. 5, and may become a border of a finer CU. Therefore, this may increase the chance of occurrence of inability to correctly perform quantization and inverse-quantization as described above.

Accordingly, the image coding device 100 performs coding processing of an image basically in the same manner as the case of the HEVC coding method, but as described above, when the quantization parameter CUQP for each CU is not set for the CU at the head of the slice, the quantization setting unit 121 sets the quantization parameter Slice QP for each slice as the quantization parameter CUQP for the CU in question. By doing so, the CU at the head of the slice is always set with the quantization parameter CUQP, and therefore, the quantization unit 105 and the inverse-quantization unit 108 can perform quantization and inverse-quantization of the CU at the head of the slice, using the quantization parameter CUQP. The quantization parameter CUQP of the CU at the head of the slice thus set (in reality, difference quantization parameter $\Delta QP$) is also transmitted to the decoding-side device. Therefore, the decoding-side device can also obtain the quantization parameter of the CU at the head of the slice. More specifically, the decoding-side device can also correctly perform inverse-quantization of the CU at the head of the slice.

[Quantization setting unit]

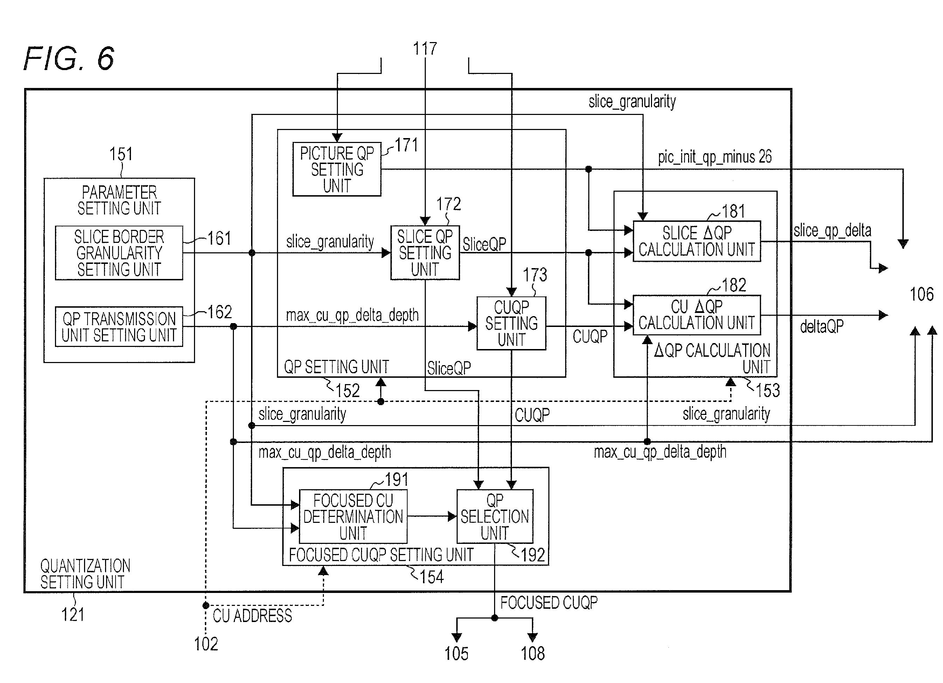

Fig. 6 is a block diagram for explaining an example of main configuration of a quantization setting unit 121. As shown in Fig. 6, the quantization setting unit 121 includes a parameter setting unit 151, a QP (Quantization parameter) setting unit 152, a $\Delta QP$ calculation unit 153, and a focused CUQP setting unit 154.

The parameter setting unit 151 sets the parameter concerning the quantization. For example, the parameter setting unit 151 includes a slice border granularity setting unit 161 and a QP transmission unit setting unit 162.

Like the case of the HEVC coding method, the slice border granularity setting unit 161 sets the slice border, and sets a parameter slice_granularity indicating the granularity thereof. For example, slice border granularity setting unit 161 sets the slice border on the basis of any given information such as user's designation, hardware performance, and profile, and further, sets a parameter slice_granularity indicating the granularity of the slice border. The slice border granularity setting unit 161 provides information about the slice border thus set and the slice_granularity to the QP setting unit 152 (slice QP setting unit 172), the $\Delta QP$ calculation unit 153 (slice $\Delta QP$ calculation unit 181), and the focused CUQP setting unit 154 (focused CU determination unit 191). The slice border granularity setting unit 161 also provides the information about the slice border thus set and slice_granularity to the lossless encoding unit 106, and transmits, to the decoding device (decoding-side device), encoded data which the image coding device 100 generates by coding the image data.

Like the case of the HEVC coding method, the QP transmission unit setting unit 162 sets a parameter max_cu_qp_delta_depth indicating the unit of the minimum CU with which the quantization parameter is transmitted. For example, the QP transmission unit setting unit 162 sets max_cu_qp_delta_depth on the basis of any given information such as user's designation, hardware performance, and profile. The QP transmission unit setting unit 162 provides max_cu_qp_delta_depth thus set to the QP setting unit 152 (CUQP setting unit 173), the ΔQP calculation unit 153 (CU ΔQP calculation unit 182), and the focused CUQP setting unit 154 (focused CU determination unit 191). The QP transmission unit setting unit 162 provides max_cu_qp_delta_depth thus set to the lossless encoding unit 106, and transmits it to the decoding-side device.

The QP setting unit 152 sets quantization parameter (QP (Quantization parameter)) for each predetermined data unit. For example, the QP setting unit 152 includes a picture QP setting unit 171, a slice QP setting unit 172, and a CUQP setting unit 173.

Like the case of the HEVC coding method, the picture QP setting unit 171 sets information pic_init_qp_minus 26 about the (initial value of) the quantization parameter of the picture of processing target (focused picture) on the basis of information about the rate provided from the rate controller 117. The QP setting unit 152 receives, from the screen sorting buffer 102, information about an address (CU address) of the CU of processing target (focused CU). Every time the focused picture changes, the picture QP setting unit 171 sets quantization parameter Picture QP for each picture on the basis of the CU address, and sets pic_init_qp_minus 26 as shown in the equation (1) below.

$$\text{pic\_init\_qp\_minus26} = \text{PictureQP} - 26 \dots (1)$$

The picture QP setting unit 171 provides the pic_init_qp_minus 26 thus set to the ΔQP calculation unit 153 (slice ΔQP calculation unit 181). The picture QP setting unit 171 provides the pic_init_qp_minus 26 thus set to the lossless encoding unit 106, and transmits it to the decoding-side device.

Like the case of the HEVC coding method, the slice QP setting unit 172 sets quantization parameter Slice QP of the slice of processing target (focused slice) on the basis of information about the rate provided from the rate controller 117. The QP setting unit 152 receives, from the screen sorting buffer 102, information about the CU address of the focused CU. The slice QP setting unit 172 sets the Slice QP every time the focused slice changes, on the basis of the information about the slice border set by the slice border granularity setting unit 161 and the CU address thereof.

The slice QP setting unit 172 provides the Slice QP thus set to the ΔQP calculation unit 153 (the slice ΔQP calculation unit 181 and the CU ΔQP calculation unit 182). Further, the slice QP setting unit 172 provides the Slice QP thus set to the focused CUQP setting unit 154 (QP selection unit 192).

Like the case of the HEVC coding method, the CUQP setting unit 173 sets the quantization parameter CUQP of the CU of processing target (focused CU), on the basis of the information about the rate provided by the rate controller 117. The QP setting unit 152 receives, from the screen sorting buffer 102, information about the CU address of the focused CU. On the basis of the CU address, the CUQP setting unit 173 sets CUQP for each CU of the level designated by max_cu_qp_delta_depth provided by the QP transmission unit setting unit 162. In other words, the CUQP setting unit 173 does not set CUQP for a CU smaller than the level designated by max_cu_qp_delta_depth.

The CUQP setting unit 173 provides the CUQP thus set to the ΔQP calculation unit 153 (CU ΔQP calculation unit 182). The CUQP setting unit 173 provides the CUQP thus set to the focused CUQP setting unit 154 (QP selection unit 192).

The ΔQP calculation unit 153 calculates, as the quantization parameter for transmission, the difference value of the quantization parameter (difference quantization parameter ΔQP). By transmitting the difference value as described above, the image coding device 100 can reduce the amount of code of the quantization parameter. The ΔQP calculation unit 13 includes, for example, a slice ΔQP calculation unit 181 and a CU ΔQP calculation unit 182.

Like the case of the HEVC coding method, the slice ΔQP calculation unit 181 calculates the difference value slice_qp_delta of Slice QP which is set by the slice QP setting unit 172. The ΔQP calculation unit 153 receives, from the screen sorting buffer 102, information about the CU address of the focused CU. The slice ΔQP calculation unit 181 calculates slice_qp_delta every time the Slice SP is set, on the basis of the information about the slice border set by the slice border granularity setting unit 161 and the CU address thereof.

For example, as shown in the equation (2) below, the slice ΔQP calculation unit 181 uses pic_init_qp_minus 26 set by the picture QP setting unit 171 to calculate, as slice_qp_delta, the difference value of the quantization parameter of the focused picture and Slice QP.

$$slice\_qp\_delta = pic\_init\_qp\_minus26 - SliceQP \ ...$$

$$(2)$$

The slice ΔQP calculation unit 181 provides the calculated slice_qp_delta to the lossless encoding unit 106, and transmits it to the decoding-side device.

Like the case of the HEVC coding method, the CU ΔQP calculation unit 182 calculates the difference value delta QP of CUQP set by the CUQP setting unit 173. The ΔQP calculation unit 153 receives, from the screen sorting buffer 102, information about the CU address of the focused CU. The CU ΔQP calculation unit 182 calculates the delta QP every time the CUQP is set, on the basis of max_cu_qp_delta_depth set by the QP transmission unit setting unit 162 and the CU address thereof.

For example, when the focused CU is a CU in which CUQP is set at the first in the focused slice, the CU ΔQP calculation unit 182 calculates, as the delta QP, the difference value of the Slice QP set by the slice QP setting unit 172 and the CUQP set by the CUQP setting unit 173 as shown in the equation (3) below.

$$deltaQP = SliceQP - CUQP \ ... \ (3)$$

For example, when the CUQP is already set in the focused slice, the CU ΔQP calculation unit 182 calculates, as the delta QP, the difference value of CUQP (N-1) set previously and the CUQP (N) of the CUQP of the focused CU (N) as shown in the equation (4) below.

$$deltaQP = CUQP(N-1) - CUQP(N) \ ... \ (4)$$

The CU ΔQP calculation unit 182 provides the calculated delta QP to the lossless encoding unit 106, and transmits it to the decoding-side device.

More specifically, the information transmitted to the decoding-side device is the same as that of the HEVC coding method.

The focused CUQP setting unit 154 sets the quantization parameter of the focused CU (focused CUQP) on the basis of the parameter set by the parameter setting unit 151 and the CU address of the focused CU provided by the screen sorting buffer 102. The focused CUQP setting unit 154 includes a focused CU determination unit 191 and a QP selection unit 192.

The focused CU determination unit 191 determines the position of the focused CU. For example, the focused CU determination unit 191 determines whether the focused CU is a CU at the head of the focused slice, on the basis of the information about the slice border provided by the slice border granularity setting unit 161 and the CU address of the focused CU. For example, when the focused CU is a CU at the head of the focused slice, the focused CU determination unit 191 compares the sizes of slice_granularity provided by the slice border granularity setting unit 161 and max_cu_qp_delta_depth provided by the QP transmission unit setting unit 162, and the CUQP setting unit 173 determines whether the CUQP is set for the focused CU.

For example, when the granularity of the slice border indicated by slice_granularity is smaller than the size of the CU indicated by max_cu_qp_delta_depth, the focused CU determination unit 191 determines that the CUQP of the focused CU is not set. On the contrary, when the granularity of the slice border indicated by slice_granularity is equal to or more than the size of the CU indicated by max_cu_qp_delta_depth, the focused CU determination unit 191 determines that the CUQP of the focused CU is set.

The focused CU determination unit 191 provides the determination result to the QP selection unit 192.

On the basis of the CU address of the focused CU provided by the screen sorting buffer 102, every time the focused CU changes, the QP selection unit 192 sets the quantization parameter of the focused CU (focused CUQP) in accordance with the determination result provided by the focused CU determination unit 191.

For example, when the focused CU is not a CU at the head of the focused slice, the QP selection unit 192 selects, as the focused CUQP, the latest CUQP provided by the CUQP setting unit 173 (the CUQP of the focused CU (N) or the CUQP of the CU processed before the focused CU (N-1)), as shown in the equation (5) below.

$$focused\ CUQP = CUQP \ ...\ (5)$$

For example, when the focused CU is a CU at the head of the focused slice, and the granularity of the slice border indicated by slice_granularity is equal to or more than the size of the CU indicated by max_cu_qp_delta_depth, the QP selection unit 192 selects the CUQP of the focused CU (N) provided by the CUQP setting unit 173 as the focused CUQP as shown in the equation (6) below.

$$focused\ CUQP = CUQP\ (N)\ ...\ (6)$$

Further, for example, when the focused CU is a CU at the head of the focused slice, and the granularity of the slice border indicated by slice_granularity is less than the size of the CU indicated by max_cu_qp_delta_depth, the QP selection unit 192 selects Slice QP of the focused slice provided by the slice QP setting unit 172 as the focused CUQP as shown in the equation (7) below.

$$focused\ CUQP = Slice\ QP\ ...\ (7)$$

The QP selection unit 192 provides the focused CUQP thus set to the quantization unit 105 and the inverse-quantization unit 108. The quantization unit 105 quantizes the focused CU using the focused CUQP provided by the QP selection unit 192. The inverse-quantization unit 108 uses the focused CUQP provided by the QP selection unit 192 to perform the inverse-quantization of the focused CU.

As described above, the quantization parameter of the CU at the head of the slice is set at all times, and therefore, the quantization unit 105 can correctly perform quantization even when the granularity of the slice border indicated by slice_granularity is less than the size of the CU indicated by max_cu_qp_delta_depth. Likewise, even when the granularity of the slice border indicated by slice_granularity is less than the size of the CU indicated by max_cu_qp_delta depth, the inverse-quantization unit 108 can perform inverse-quantization correctly.

More specifically, the image coding device 100 ensures independence of processing for each slice, and can perform coding processing more efficiently.

[Flow of Coding Process]

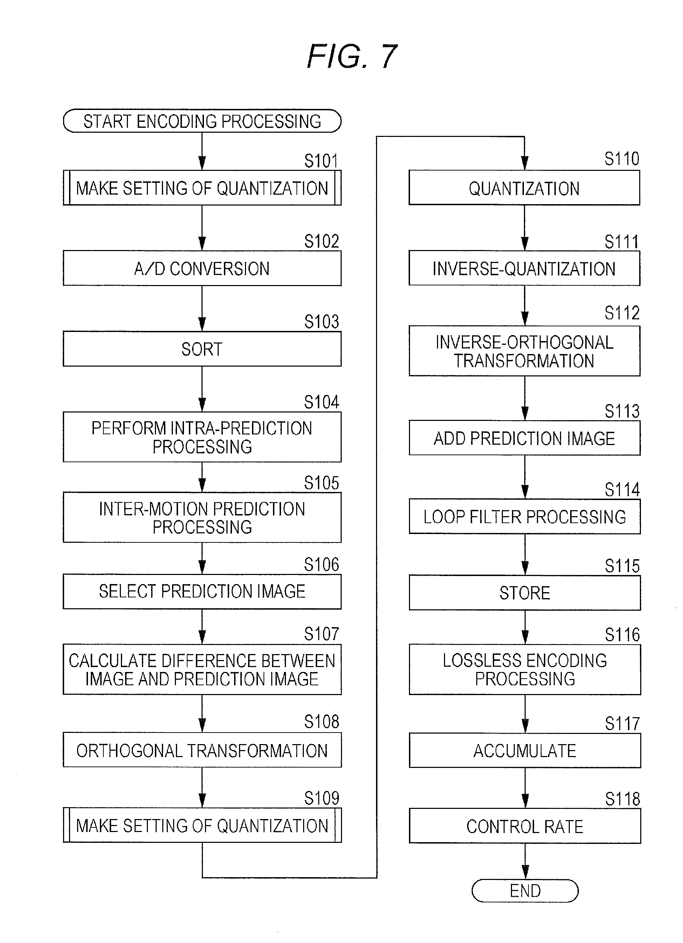

Next, a flow of each process executed by the above-described image coding device 100 is described. First, an example of a flow of a coding process is described with reference to a flowchart in Fig. 7.

In step S101, the quantization setting unit 121 makes setting concerning quantization such as setting of slice_granularity and max_cu_qp_delta_depth. In step S102, the A/D conversion unit 101 A/D converts the input image. In step S103, the screen sorting buffer 102 stores images that have been subjected to the A/D conversion, and sorts them from the order in which pictures are displayed into the order in which they are encoded.

In step S104, the intra-prediction unit 114 performs the intra-prediction processing of the intra-prediction mode. In step S105, the motion prediction/compensation unit 115 performs inter-motion prediction processing for performing motion prediction and motion compensation in the inter-prediction mode.

In step S106, the prediction image selection unit 116 determines the optimum prediction mode on the basis of each cost function value which is output from the intra-prediction unit 114 and the motion prediction/compensation unit 115. More specifically, the prediction image selection unit 116 selects any one of the prediction image generated by the intra-prediction unit 114 and the prediction image generated by the motion prediction/compensation unit 115.

In step S107, the calculation unit 103 calculates difference between the image sorted in the processing in step S102 and the prediction image selected in the processing in step S106. The amount of data of the difference data is reduced as compared with the original image data. Therefore, the amount of data can be compressed as compared with a case where an image is compressed as it is.

In step S108, the orthogonal transformation unit 104 performs orthogonal transformation on difference information generated by the processing in step S103. More specifically, orthogonal transformation such as discrete cosine transform and Karhunen-Loeve conversion and the like is performed and, conversion coefficients are output.

In step S109, the quantization setting unit 121 makes setting concerning quantization such as setting of the quantization parameter and the difference quantization parameter. In step S110, the quantization unit 105 uses the quantization parameter and the like calculated in the processing of step S109 to quantize the orthogonal transformation coefficients obtained in the processing in step S108.

As a result of the processing in step S110, the quantized difference information is locally decoded as follows. More specifically, in step S111, the inverse-quantization unit 108 uses the quantization parameter derived in the processing of step S109 to perform inverse-quantization. This inverse-quantization processing is performed according to the same method as the image decoding device 200 explained later. Therefore, the inverse-quantization will be described in the description about the image decoding device 200 described later.

In step S112, the inverse-orthogonal transformation unit 109 performs inverse-orthogonal transformation on the orthogonal transformation coefficients obtained the processing in step S111 according to the method corresponding to the method of the processing in step S108.

In step S113, the calculation unit 110 adds the prediction image to difference information locally decoded, and generates a locally decoded image (image corresponding to input to the calculation unit 103). In step S114, the loop filter 111 filters the image generated by the process in step S113. According to this, the block distortion is removed.

In step S115, the frame memory 112 stores the image from which the block distortion has been removed by the process in step S114. It should be noted that the frame memory 112 also receives an image to which filter processing is not applied by the loop filter 111 from the calculation unit 110, and stores such image.

The image stored in this frame memory 112 is used for processing in step S104 and the processing in step S105.

In step S116, the lossless encoding unit 106 codes the transform coefficient quantized by the process in step S110, thus generating encoded data. That is, the lossless coding such as the variable-length coding and the arithmetic coding is performed to a difference image (secondary difference image in a case of inter).

Meanwhile, the lossless encoding unit 106 codes the quantization parameter calculated in step S109. The lossless encoding unit 106 encodes information about the prediction mode of the prediction image selected in the processing in step S106, and adds the information to the coded data obtained by coding the difference image. For example, when intra-prediction mode is selected, the lossless encoding unit 106 encodes intra-prediction mode information. For example, when inter-prediction mode is selected, the lossless encoding unit 106 encodes inter-prediction mode information. Such information is added (multiplexed) to the encoded data as, e.g., header information.

In step S117, the accumulation buffer 107 accumulates the coded data generated in the processing in step S116. The coded data accumulated in the accumulation buffer 107 is appropriately read to be transmitted to the device of the decoding side through the transmission channel.

In step S118, the rate controller 117 controls the rate of the quantization operation of the quantization unit 105 such that the overflow or the underflow does not occur based on the compressed image accumulated in the accumulation buffer 107 by the process in step S117. This control result is used for the processing in step S109 and the processing in step S101 for the CU processed later in terms of time.

When the processing in step S118 is finished, the coding processing is terminated.

[Flow of quantization setting processing]

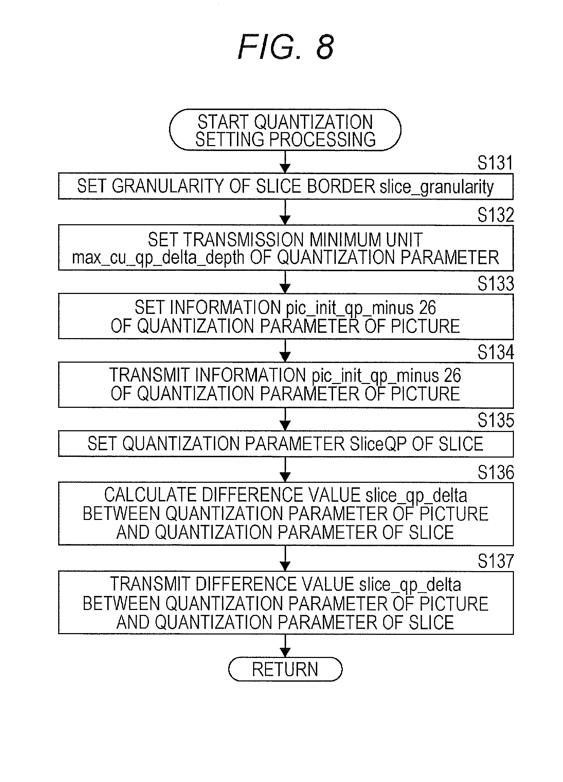

Subsequently, an example of flow of the quantization setting processing executed in step S101 of Fig. 7 will be described with reference to the flowchart of Fig. 8.

When the quantization setting processing is started, the slice border granularity setting unit 161 sets the parameter slice_granularity indicating the granularity of the slice border in step S131. When slice_granularity is already set, this processing is omitted. For example, when parameter slice_granularity is incorporated into the picture parameter set and is transmitted, and slice_granularity for the focused picture has been set, this processing is omitted. The slice border granularity setting unit 161 provides slice_granularity thus set to the lossless encoding unit 106, so that it is incorporated into the picture parameter set and is transmitted to the decoding-side device.

In step S132, the QP transmission unit setting unit 162 sets parameter max_cu_qp_delta_depth indicating the minimum unit with which the quantization parameter is transmitted. When parameter max_cu_qp_delta_depth is already set, this processing is omitted. For example, when parameter max_cu_qp_delta_depth is incorporated into the picture parameter set and is transmitted, and max_cu_qp_delta_depth for the focused picture has been set, this processing is omitted. The QP transmission unit setting unit 162 provides max_cu_qp_delta_depth thus set to the lossless encoding unit 106, so that it is incorporated into the picture parameter set and is transmitted to the decoding-side device.

In step S133, the picture QP setting unit 171 sets information pic_init_qp_minus 26 about the quantization parameter of the focused picture. When pic_init_qp_minus 26 about the focused picture is already set, this processing is omitted. In step S134, picture QP setting unit 171 provides pic_init_qp_minus 26 thus set in step S133 to the lossless encoding unit 106, so that it is incorporated into the picture parameter set and is transmitted to the decoding-side device. When the processing in step S133 is omitted, the processing in step S134 is naturally omitted.

In step S135, the slice QP setting unit 172 sets the quantization parameter Slice QP of the focused slice. When Slice QP about the focused slice is already set, this processing is omitted.

In step S136, the slice ∆QP calculation unit 181 calculates difference value slice_qp_delta between the pic_init_qp_minus 26 of the focused picture that is set by the processing in step S134 and the Slice QP of the focused slice that is set by the processing in step S135.

In step S137, the slice ∆QP calculation unit 181 provides slice_qp_delta of the focused slice calculated in step S136 to the lossless encoding unit 106, so that it is incorporated into the slice header of the focused slice and is transmitted to the decoding-side device. When the processing in step S135 is omitted, the processing in steps S136 and S137 is naturally omitted.

When the processing in step S137 is finished, the quantization setting unit 121 terminates the quantization setting processing, and the processing in Fig. 7 is performed back again, and the processing subsequent thereto is executed.

[Flow of quantization setting processing]

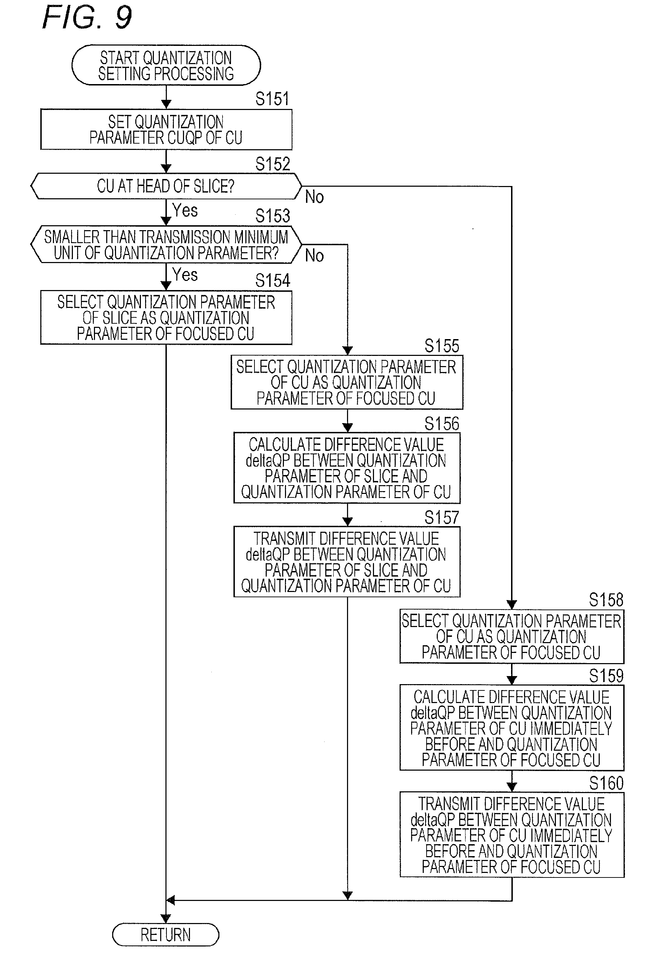

Subsequently, an example of flow of the quantization setting processing executed in step S109 of Fig. 7 will be described with reference to the flowchart of Fig. 9.

When the quantization setting processing is started, the CUQP setting unit 173 sets the quantization parameter CUQP for each CU in step S151. For example, when the focused CU is a CU of which size is equal to or more than the size designated by max_cu_qp_delta_depth, the CUQP setting unit 173 sets new quantization parameter CUQP on the basis of the information provided by the rate controller 117. When the focused CU is a CU of which size is less than the size designated by max_cu_qp_delta_depth, the CUQP setting unit 173 employs a value that is set immediately before.

In step S152, the focused CU determination unit 191 determines whether the focused CU which is the processing target is at the head of the slice. When it is determined to be at the head of the slice, the focused CU determination unit 191 proceeds to the processing in step S153.

In step S153, the focused CU determination unit 191 determines whether the parameter slice_granularity is less than the parameter max_cu_qp_delta_depth. When slice_granularity is less than max_cu_qp_delta_depth, and the quantization parameter CUQP for each CU is determined not to be set for the focused CU at the head of the slice, the focused CU determination unit 191 proceeds to the processing in step S154.

In step S154, the QP selection unit 192 selects the quantization parameter Slice QP of the focused slice as the quantization parameter of the focused CU (focused CUQP). This focused CUQP is used for the quantization processing in step S110 and the inverse-quantization processing in step S111.

When the processing in step S154 is finished, the quantization setting unit 121 terminates the quantization setting processing, and the processing in Fig. 7 is performed back again, and the processing subsequent thereto is executed.

When, in step S153 of Fig. 9, slice_granularity is equal to or more than max_cu_qp_delta_depth, and the quantization parameter CUQP for each CU is determined to be set for the focused CU at the head of the slice, the focused CU determination unit 191 proceeds to the processing in step S155.

In step S155, the QP selection unit 192 selects, as the focused CUQP, the quantization parameter CUQP for each CU set in step S151. This focused CUQP is used for the quantization processing in step S110 and the inverse-quantization processing in step S111.

In step S156, the CU ∆QP calculation unit 182 calculates the difference value delta QP between the quantization parameter Slice QP of the focused slice and the quantization parameter of the focused CU (focused CUQP). In step S157, the CU ∆QP calculation unit 182 provides the calculated delta QP to the lossless encoding unit 106, thus transmitting it to the decoding-side device. As described above, by transmitting the difference value delta QP instead of the focused CUQP, the image coding device 100 can reduce the amount of code of the quantization parameter.

When the processing in step S157 is finished, the quantization setting unit 121 terminates the quantization setting processing, and the processing in Fig. 7 is performed back again, and the processing subsequent thereto is executed.

Further, when, in step S152, the focused CU is determined not to be at the head of the slice, the focused CU determination unit 191 proceeds to the processing in step S158.

In step S158, the QP selection unit 192 selects, as the focused CUQP, the quantization parameter CUQP for each CU set in step S151. This focused CUQP is used for the quantization processing in step S110 and the inverse-quantization processing in step S111.

In step S159, the CU ∆QP calculation unit 182 calculates the difference value delta QP between the quantization parameter CUQP of the CU that is set immediately before and the quantization parameter of the focused CU (focused CUQP). When, in step S151, the value that is set immediately before is employed as the quantization parameter CUQP for each CU, this processing is omitted. More specifically, when the focused CU is a CU of which size of less than the size designated by the size designated by max_cu_qp_delta_depth, this processing is omitted.

In step S160, the CU ∆QP calculation unit 182 provides the calculated delta QP calculated in the processing of step S159 to the lossless encoding unit 106, thus transmitting it to the decoding-side device. As described above, by transmitting the difference value delta QP instead of the focused CUQP, the image coding device 100 can reduce the amount of code of the quantization parameter. When the processing in step S159 is omitted, the processing in step S160 is naturally omitted.

When the processing in step S160 is finished, the quantization setting unit 121 terminates the quantization setting processing, and the processing in Fig. 7 is performed back again, and the processing subsequent thereto is executed.

By executing each processing as described above, the image coding device 100 ensures independence of processing for each slice, and can perform coding processing more efficiently.

[Image decoding device]

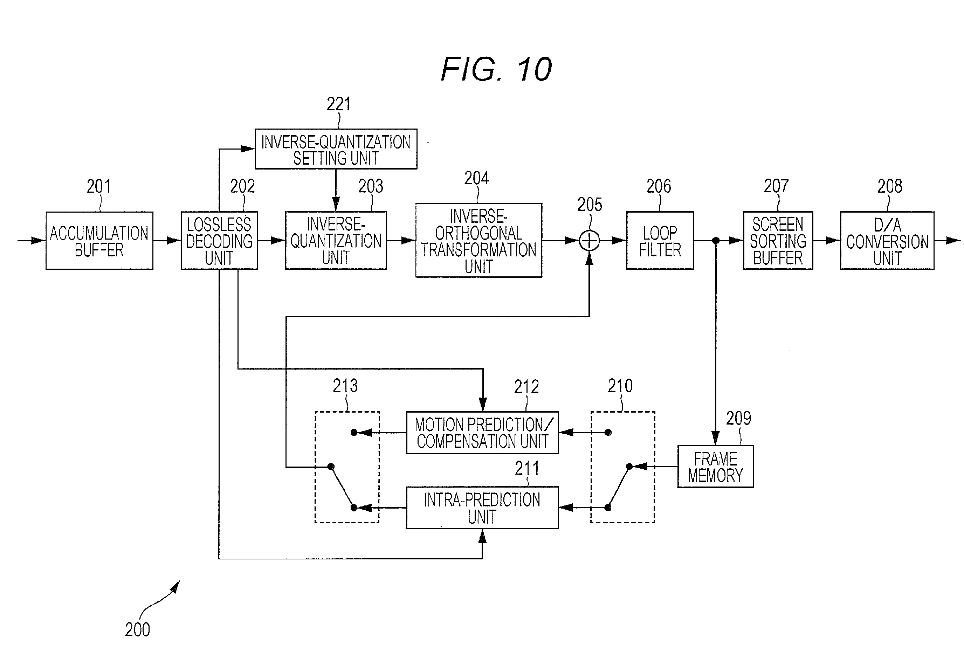

Fig. 10 is a block diagram illustrating a principal configuration example of an image decoding device, serving as an image processing device, to which the present technology is applied. An image decoding device 200 illustrated in Fig. 10, which corresponds to the above-described image coding device 100, correctly decodes a bit stream (coded data) generated by the coding of the image data by the image coding device 100 to generate a decoded image.

As illustrated in Fig. 10, the image decoding device 200 includes an accumulation buffer 201, a lossless decoding unit 202, an inverse-quantization unit 203, an inverse-orthogonal transformation unit 204, a calculation unit 205, a loop filter 206, a screen sorting buffer 207, and a D/A conversion unit 208. The image decoding device 200 also includes a frame memory 209, a selector 210, an intra-prediction unit 211, a motion prediction/compensation unit 212, and a selector 213.

Further, the image decoding device 200 includes an inverse-quantization setting unit 221.

The accumulation buffer 201 accumulates received coded data, and provides the coded data to the lossless decoding unit 202 with predetermined timing. The lossless decoding unit 202 decodes information, which is provided by the accumulation buffer 201 and encoded by the lossless encoding unit 106 of Fig. 1, in accordance with the method corresponding to the coding method of the lossless encoding unit 106. The lossless decoding unit 202 provides the inverse-quantization unit 203 with quantized coefficient data of the difference image obtained as a result of decoding.

The lossless decoding unit 202 refers to the information about the optimum prediction mode obtained by decoding the encoded data, and determines whether intra-prediction mode or inter-prediction mode is selected as the optimum prediction mode. More specifically, the lossless decoding unit 202 determines whether the prediction mode employed in the encoded data transmitted is the intra-prediction or the inter-prediction.

The lossless decoding unit 202 provides the information about the prediction mode to the intra-prediction unit 211 or the motion prediction/compensation unit 212 on the basis of the determination result. For example, when the image coding device 100 selects the intra-prediction mode as the optimum prediction mode, the lossless decoding unit 202 provides the intra-prediction unit 211 with the intra-prediction information which is information about the intra-prediction mode thus selected, which is provided from the coding-side. For example, when the image coding device 100 selects the inter-prediction mode as the optimum prediction mode, the lossless decoding unit 202 provides the motion prediction/compensation unit 212 with the inter-prediction information which is information about the inter-prediction mode thus selected, which is provided from the coding-side.

Further, the lossless decoding unit 202 extracts various kinds of parameters about the quantization added (multiplexed) to the encoded data, and provides them to the inverse-quantization setting unit 221.

The inverse-quantization unit 203 uses the quantization parameter that is set by the inverse-quantization setting unit 221 to inversely quantize the quantized coefficient data obtained by decoding process performed by the lossless decoding unit 202. More specifically, the inverse-quantization unit 203 performs inverse-quantization according to the method corresponding to the quantization method of the quantization unit 105 of Fig. 1 (the method that is the same as the inverse-quantization unit 108).

The inverse-quantization unit 203 supplies the inversely quantized coefficient data to the inverse-orthogonal transformation unit 204.

The inverse-orthogonal transformation unit 204 performs inverse-orthogonal transformation on the coefficient data, which are provided from the inverse-quantization unit 203, in accordance with the method corresponding to the orthogonal transformation method of the orthogonal transformation unit 104 of the Fig. 1. As a result of this inverse-orthogonal transformation processing, the inverse-orthogonal transformation unit 204 obtains difference image corresponding to difference image before the orthogonal transformation is performed by the image coding device 100.

The difference image obtained from the inverse-orthogonal transformation is provided to the calculation unit 205. A predicted image is supplied from the intra-prediction unit 211 or the motion prediction/compensation unit 212 through the selector 213 to the calculation unit 205.

The calculation unit 205 adds the difference image and the prediction image, and obtains reconfigured image corresponding to image before the prediction image is subtracted by the calculation unit 103 of the image coding device 100. The calculation unit 205 provides the reconfigured image to the loop filter 206.

As necessary, the loop filter 206 applies loop filter processing including deblock filter processing, adaptive loop filter processing, and the like, to the provided reconfigured image as necessary, and generates a decoded image. For example, the loop filter 206 applies deblock filter processing to the reconfigured image to remove block noise. For example, the loop filter 206 applies loop filter processing to the deblock filter processing result (reconfigured image from which only the block noise has been removed) using Wiener Filter, thus improving the image equality.

It should be noted that the type of filter processing performed by the loop filter 206 may be any type, and filter processing other than what has been explained above may be performed. The loop filter 206 may also apply applies deblock filter processing using filter coefficients provided from the image coding device 100 of Fig. 1.

The loop filter 206 provides the decoded image which is the filter processing result to the screen sorting buffer 207 and the frame memory 209. It should be noted that the filter processing performed by the loop filter 206 may be omitted. More specifically, the output of the calculation unit 205 may not be filtered, and may be stored to the frame memory 209. For example, the intra-prediction unit 211 uses the pixel values of the pixels included in the image as the pixel values of the surrounding pixels.

The screen sorting buffer 207 sorts the decoded images provided. That is, frames reordered into order for coding by a screen sorting buffer 102 in Fig. 1 are reordered into original order of display. The D/A conversion unit 208 performs D/A conversion on a decoded image provided from the screen sorting buffer 207, outputs the image to a display, not shown, and causes the display to show the image.

The frame memory 209 stores the reconfigured image and the decoded images provided. The frame memory 209 provides the stored reconfigured image and the decoded image to the intra-prediction unit 211 and the motion prediction/compensation unit 212 with predetermined timing or on the basis of external request such as the intra-prediction unit 211 and the motion prediction/compensation unit 212 via the selector 210.

The intra-prediction unit 211 basically performs the same processing as the intra-prediction unit 114 of Fig. 2. However, the intra-prediction unit 211 performs intra-prediction only on the region where the prediction image is generated by intra-prediction during coding.

The motion prediction/compensation unit 212 performs inter-motion prediction processing on the basis of inter-prediction information provided from the lossless decoding unit 202, and generates a prediction image. It should be noted that the motion prediction/compensation unit 212 performs inter-motion prediction processing only on the region where inter-prediction is performed during coding, on the basis of inter-prediction information provided from the lossless decoding unit 202, and generates a prediction image.

The intra-prediction unit 211 or the motion prediction/compensation unit 212 provides the prediction image to the calculation unit 205 via the selector 213 for each region of prediction processing unit.

The selector 213 provides the prediction image provided from the intra-prediction unit 211 or the prediction image provided from the motion prediction/compensation unit 212 to the calculation unit 205.

The inverse-quantization setting unit 221 uses the parameter concerning the quantization provided by the lossless decoding unit 202 to restructure the quantization parameter of the CU in question. The parameter provided by the lossless decoding unit 202 is transmitted from the image coding device 100. More specifically, the inverse-quantization setting unit 221 restructures the quantization parameter set by the quantization setting unit 121 of the image coding device 100. More specifically, the inverse-quantization setting unit 221 restructures the quantization parameter used for the quantization processing of the quantization unit 105 that is performed during generation of the encoded data decoded by the image decoding device 200.

The image decoding device 200 performs decoding processing basically in the same manner as the case of the case of the HEVC coding method, but when the quantization parameter CUQP for each CU is not set for the CU at the head of the slice, the inverse-quantization setting unit 221 sets the quantization parameter Slice QP for each slice in the quantization parameter CUQP of the CU.

More specifically, as described above, for the CU at the head of the slice for which the quantization parameter CUQP for each CU is not set, the image coding device 100 sets the quantization parameter Slice QP for each slice as the quantization parameter CUQP for the CU in question and performs the quantization. Likewise, for the CU at the head of the slice for which the quantization parameter CUQP for each CU is not set, the inverse-quantization setting unit 221 adopts the quantization parameter Slice QP of the focused slice as the quantization parameter CUQP of the focused CU.

By doing so, the quantization parameter CUQP of the CU at the head of the slice is always set, and therefore, the inverse-quantization unit 108 can correctly perform the inverse-quantization. More specifically, the image decoding device 200 ensures independence of processing for each slice, and can perform decoding processing more efficiently.

[Inverse-quantization setting unit]

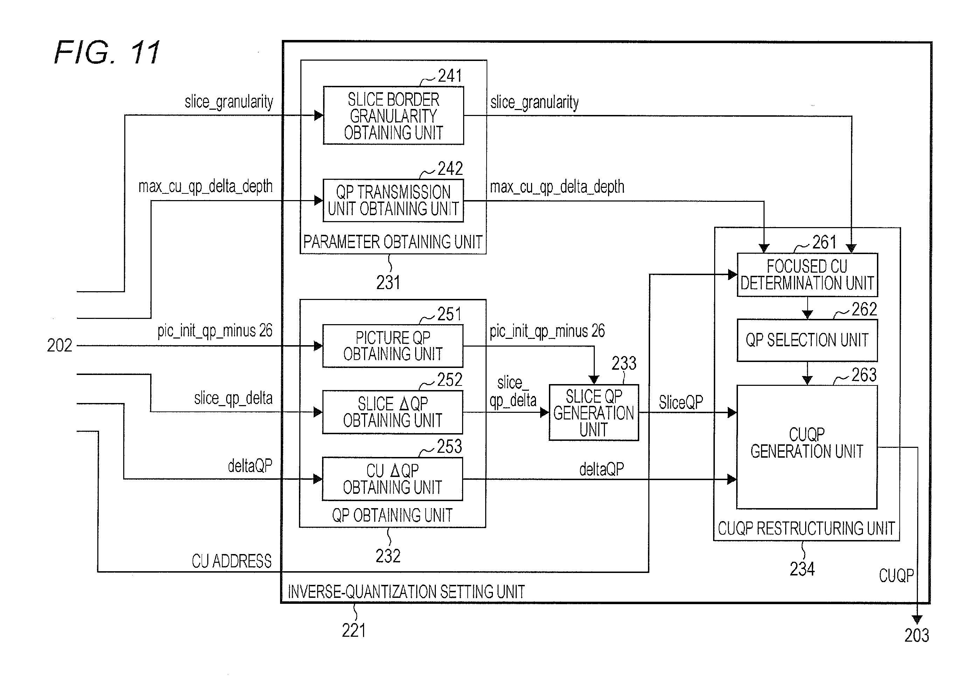

Fig. 11 is a block diagram for explaining an example of main configuration of the inverse-quantization setting unit 221. As shown in Fig. 11, the inverse-quantization setting unit 221 includes a parameter obtaining unit 231, a QP obtaining unit 232, a slice QP generation unit 233, and a CUQP restructuring unit 234.

The parameter obtaining unit 231 obtains the parameter concerning the quantization extracted from the encoded data in the lossless decoding unit 202. For example, parameter obtaining unit 231 includes a slice border granularity obtaining unit 241 and a QP transmission unit obtaining unit 242.

The slice border granularity obtaining unit 241 obtains the parameter slice_granularity indicating the granularity of the slice border provided by the image coding device 100. The slice border granularity obtaining unit 241 stores the obtained slice_granularity, and with predetermined timing, or on the basis of the request of the CUQP restructuring unit 234, the slice_granularity thereof is provided to the CUQP restructuring unit 234 (focused CU determination unit 261).

The QP transmission unit obtaining unit 242 obtains the parameter max_cu_qp_delta_depth indicating the unit of the minimum CU for which the quantization parameter provided by the image coding device 100 is transmitted. The QP transmission unit obtaining unit 242 stores the obtained max_cu_qp_delta_depth, and with predetermined timing, or on the basis of the request of the CUQP restructuring unit 234, the max_cu_qp_delta_depth thereof is provided to the CUQP restructuring unit 234 (focused CU determination unit 261).

The QP obtaining unit 232 obtains the information about the quantization parameter of the predetermined data unit extracted from the encoded data in the lossless decoding unit 202. For example, the QP obtaining unit 232 includes a picture QP obtaining unit 251, a slice ΔQP obtaining unit 252, and a CU ΔQP obtaining unit 253.

The picture QP obtaining unit 251 obtains the information about the quantization parameter pic_init_qp_minus 26 for each picture, provided from the image coding device 100. The picture QP obtaining unit 251 stores the obtained pic_init_qp_minus 26, and with predetermined timing, or on the basis of the request of the slice QP generation unit 233, the pic_init_qp_minus 26 thereof is provided to the slice QP generation unit 233.

The slice ΔQP obtaining unit 252 obtains the information about the quantization parameter slice_qp_delta for each slice, provided from the image coding device 100. As described above, slice_qp_delta is the difference value between the quantization parameter of the focused slice and the quantization parameter for each picture. The slice ΔQP obtaining unit 252 stores the obtained slice_qp_delta, and with predetermined timing, or on the basis of the request of the slice QP generation unit 233, the slice_qp_delta thereof is provided to the slice QP generation unit 233.

The CU ΔQP obtaining unit 253 obtains the information delta QP about the quantization parameter for each CU, provided from the image coding device 100. As described above, the delta QP is the difference value between the quantization parameter of the focused slice and the quantization parameter of the focused CU and the difference value between the quantization parameter of the CU that is set previously and the quantization parameter of the focused CU. The CU ΔQP obtaining unit 253 stores the obtained delta QP, and with predetermined timing, or on the basis of the request of the CUQP restructuring unit 234, the delta QP thereof is provided to the CUQP restructuring unit 234 (CUQP generation unit 263).

As shown in the equation (8) below, the slice QP generation unit 233 uses the pic_init_qp_minus 26 provided by the picture QP obtaining unit 251 and slice_qp_delta provided by the slice ΔQP obtaining unit 252 to generate the quantization parameter Slice QP of the focused slice.

$$\mathrm{SliceQP} = 26 + \mathrm{pic\_init\_qp\_minus26} +$$
$$\mathrm{slice\_qp\_delta} \ ... \ (8)$$

The slice QP generation unit 233 provides the generated Slice QP to the CUQP restructuring unit 234 (CUQP generation unit 263).

The CUQP restructuring unit 234 restructures the quantization parameter of the focused CU (focused CUQP) generated by the image coding device 100. The CUQP restructuring unit 234 uses slice_granularity and max_cu_qp_delta_depth provided by the parameter obtaining unit 231, the delta QP provided by the QP obtaining unit 232, the Slice QP provided by the slice QP generation unit 233, and information about the address of the focused CU (CU address) transmitted from the image coding device 100 and extracted by the lossless decoding unit 202 to restructure the quantization parameter of the focused CU (focused CUQP).

For example, the CUQP restructuring unit 234 includes a focused CU determination unit 261, a QP selection unit 262, and a CUQP generation unit 263.

The focused CU determination unit 261 determines which position the focused CU of processing target is at.

For example, on the basis of the information about the CU address of the focused CU provided by the lossless decoding unit 202, the focused CU determination unit 261 determines whether the focused CU is a CU at the head of the focused slice or not. For example, when the focused CU is not a CU at the head of the focused slice, the focused CU determination unit 261 determines whether the information about the CUQP of the focused CU (delta QP) is transmitted or not, on the basis of max_cu_qp_delta_depth and the CU address.

For example, when the size of the focused CU is equal to or more than the size designated by max_cu_qp_delta_depth, the focused CU determination unit 261 determines that the information about the CUQP of the focused CU (delta QP) is transmitted. For example, when the size of the focused CU is less than the size designated by max_cu_qp_delta_depth, the focused CU determination unit 261 determines that the information about the CUQP of the focused CU (delta QP) is not transmitted.

Further, for example, when the focused CU is a CU at the head of the focused slice, the focused CU determination unit 261 compares the sizes of slice_granularity provided by the slice border granularity obtaining unit 241 and max_cu_qp_delta_depth provided by the QP transmission unit obtaining unit 242, and determines whether the information about the CUQP of the focused CU (delta QP) is transmitted or not.

For example, when the granularity of the slice border indicated by slice_granularity is less than the size of the CU indicated by max_cu_qp_delta_depth, the focused CU determination unit 261 determines that the delta QP of the focused CU is not transmitted from the image coding device 100. On the contrary, when the granularity of the slice border indicated by slice_granularity is equal to or more than the size of the CU indicated by max_cu_qp_delta_depth, the focused CU determination unit 261 determines that the delta QP of the focused CU is transmitted from the image coding device 100.

The focused CU determination unit 261 provides the determination result to the QP selection unit 262.

The QP selection unit 262 selects restructuring method of the focused CU in accordance with the determination result provided by the focused CU determination unit 261. In accordance with the method selected by the QP selection unit 262, the CUQP generation unit 263 uses, as necessary, the Slice QP provided by the slice QP generation unit 233 and the delta QP provided by the CU ΔQP obtaining unit 253 to generate the quantization parameter of the focused CU (focused CUQP).

For example, when the focused CU determination unit 261 determines that the focused CU is not a CU at the head of the slice and that the information about the CUQP of the focused CU (delta QP) is not transmitted, the CUQP generation unit 263 adopts a CUQP generated immediately before (N-1) as the focused CUQP in accordance with the selection made by the QP selection unit 262 as shown in the equation (9) below.

$$focused~CUQP = CUQP~(N-1) ~...~ (9)$$

For example, when the focused CU determination unit 261 determines that the focused CU is not a CU at the head of the slice and that the information about the CUQP of the focused CU (delta QP) is transmitted, the CUQP generation unit 263 adopts, as the focused CUQP, a result of addition of the CUQP generated immediately before (N-1) and the delta QP of the focused CU in accordance with the selection made by the QP selection unit 262 as shown in the equation (10) below.

$$focused~CUQP = CUQP~(N-1) + delta~QP ~...~ (10)$$

Further, for example, when the focused CU determination unit 261 determines that the focused CU is a CU at the head of the slice and that the delta QP of the focused CU is transmitted from the image coding device 100, the CUQP generation unit 263 adopts, as the focused CUQP, a result of addition of the Slice QP of the focused slice and the delta QP of the focused CU in accordance with the selection made by the QP selection unit 262 as shown in the equation (11) below.

$$focused~CUQP = Slice~QP + delta~QP ~...~ (11)$$

Further, for example, when the focused CU determination unit 261 determines that the focused CU is a CU at the head of the slice and that the delta QP of the focused CU is not transmitted from the image coding device 100, the CUQP generation unit 263 adopts the Slice QP of the focused slice as the focused CUQP in accordance with the selection made by the QP selection unit 262 as shown in the equation (12) below.

$$focused~CUQP = Slice~QP ~...~ (12)$$

19

The CUQP generation unit 263 provides the generated focused CUQP to the inverse-quantization unit 203. The inverse-quantization unit 203 uses the focused CUQP provided by the CUQP generation unit 263 to perform the inverse-quantization on the focused CU.

By doing so, the inverse-quantization setting unit 221 can correctly restructure the quantization parameter of the CU at the head of the slice. Therefore, the inverse-quantization unit 203 can correctly perform the inverse-quantization even when the granularity of the slice border indicated by slice_granularity is less than the size of the CU indicated by max_cu_qp_delta_depth.

More specifically, the image decoding device 200 ensures independence of processing for each slice, and can perform decoding processing more efficiently.

[Flow of decoding processing]

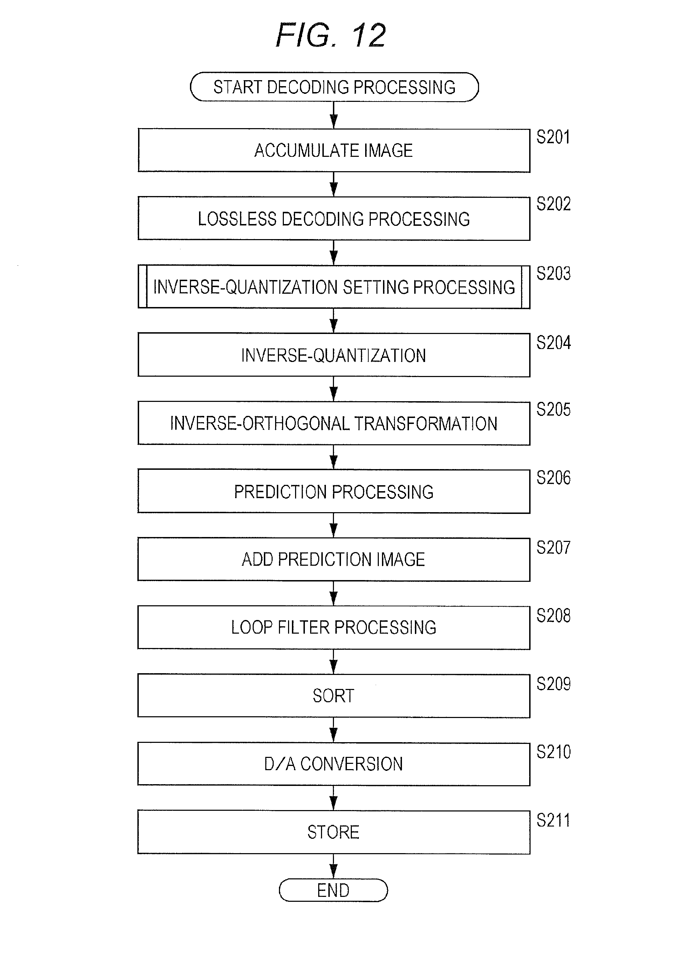

Subsequently, the flow of each processing executed by the image decoding device 200 will be described. First, an example of flow of decoding processing will be described with reference to the flowchart of Fig. 12.

When the decoding processing is started, the accumulation buffer 201 accumulates received encoded data in step S201. In step S202, the lossless decoding unit 202 decodes the coded data supplied from the accumulation buffer 201. That is, an I picture, a P picture, and a B picture coded by the lossless encoding unit 106 in Fig. 1 are decoded.

At that time, the motion vector information, the reference frame information, the prediction mode information (intra prediction mode or inter prediction mode), and the information such as the flag and the quantization parameter are also decoded.

When the prediction mode information is the intra prediction mode information, the prediction mode information is supplied to the intra-prediction unit 211. When the prediction mode information is the inter prediction mode information, the motion vector information corresponding to the prediction mode information is supplied to the motion prediction/compensation unit 212.

In step S203, the inverse-quantization setting unit 221 performs the inverse-quantization setting processing to restructure the quantization parameter of the focused area. In step S204, the inverse-quantization unit 203 dequantizes the quantized orthogonal transformation coefficients obtained from the decoding performed by the lossless decoding unit 202. The inverse-quantization unit 203 uses the quantization parameter restructured in the processing of step S203 to perform the inverse-quantization processing.

In step S205, the inverse-orthogonal transformation unit 204 inversely orthogonally transforms the orthogonal transform coefficient obtained by the inverse quantization by the inverse-quantization unit 203 by a method corresponding to the orthogonal transformation unit 104 in Fig. 1. According to this, difference information corresponding to an input of the orthogonal transformation unit 104 in Fig. 1 (output of the calculation unit 103) is decoded.

In step S206, the intra-prediction unit 211 or the motion prediction/compensation unit 212 performs a prediction process of the image according to the prediction mode information supplied from the lossless decoding unit 202. That is, in a case where the intra prediction mode information is supplied from the lossless decoding unit 202, the intra-prediction unit 211 performs an intra prediction process in the intra prediction mode. Also, in a case where the inter prediction mode information is supplied from the lossless decoding unit 202, the motion prediction/compensation unit 212 performs a motion prediction process in the inter prediction mode.

In step S207, the calculation unit 205 adds the predicted image obtained in the processing of step S206 to the difference information obtained by the process in step S204. According to this, original image data is decoded.

In step S208, as necessary, the loop filter 206 applies loop filter processing including deblock filter processing, adaptive loop filter processing, and the like, to the reconfigured image obtained in the processing in step S207.

In step S209, the screen sorting buffer 207 reorders the frames of the decoded image data. That is, the frames of the decoded image data reordered for the coding by the screen sorting buffer 102 of the image coding device 100 (Fig. 1) are reordered into the original order of display.

In step S210, the D/A conversion unit 208 D/A converts the decoded image data of which frames are reordered by the screen sorting buffer 207. The decoded image data is output to a display not illustrated and the image is displayed.

In step S211, the frame memory 209 stores the decoded image filtered in the processing of step S208.

[Flow of inverse-quantization setting processing]

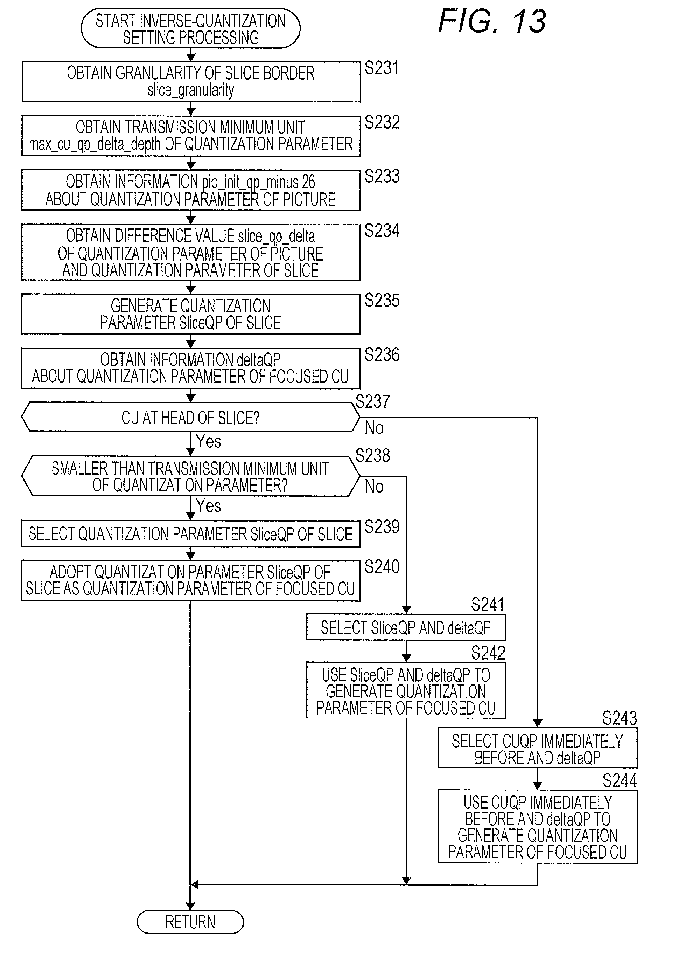

Subsequently, an example of flow of the inverse-quantization setting processing executed in step S203 of Fig. 12 will be described with reference to the flowchart of Fig. 13.

When the inverse-quantization setting processing is started, the slice border granularity obtaining unit 241 obtains the parameter slice_granularity indicating the granularity of the slice border in step S231. When slice_granularity is already obtained, this processing is omitted. For example, when parameter slice_granularity is incorporated into the picture parameter set and is transmitted, and slice_granularity for the focused picture has been obtained, this processing is omitted.

In step S232, the QP transmission unit obtaining unit 242 obtains the parameter max_cu_qp_delta_depth indicating the minimum unit with which the quantization parameter is transmitted. When parameter max_cu_qp_delta_depth is already obtained, this processing is omitted. For example, when parameter max_cu_qp_delta_depth is incorporated into the picture parameter set and is transmitted, and max_cu_qp_delta_depth for the focused picture has been obtained, this processing is omitted.

In step S233, the picture QP obtaining unit 251 sets information pic_init_qp_minus 26 about the quantization parameter of the focused picture. When pic_init_qp_minus 26 about the focused picture is already obtained, this processing is omitted.

In step S234, the slice ΔQP obtaining unit 252 obtains, with regard to the focused slice, the difference value slice_qp_delta between the quantization parameter of picture and the quantization parameter of slice. When slice_qp_delta about the focused slice is already obtained, this processing is omitted.

In step S235, the slice QP generation unit 233 uses the pic_init_qp_minus 26 obtained in step S233 and slice_qp_delta obtained in step S234 to generate the quantization parameter Slice QP of the focused slice. When the processing in step S234 is omitted, the processing in step S235 is naturally omitted.

In step S236, the CU ΔQP obtaining unit 253 obtains the information delta QP about the quantization parameter of the focused CU. When the focused CU is a CU of which size of less than the size designated by the size designated by max_cu_qp_delta_depth, the delta QP is not transmitted, and therefore, this processing is omitted.

In step S237, the focused CU determination unit 261 determines whether focused CU is a CU at the head of the slice. When the focused CU is determined to be at the head of the slice, the focused CU determination unit 261 proceeds to the processing in step S238.

In step S238, the focused CU determination unit 261 determines whether the parameter slice_granularity is less than the parameter max_cu_qp_delta_depth. When slice_granularity is determined to be less than max_cu_qp_delta_depth, and the delta QP about the focused CU is determined not to be transmitted, the focused CU determination unit 261 proceeds to the processing in step S239.

In step S239, the QP selection unit 262 selects the quantization parameter Slice QP of the slice.

In step S240, the CUQP generation unit 263 adopts the quantization parameter Slice QP of the slice selected in step S239 as the quantization parameter of the focused CU (focused CUQP). This focused CUQP is used for the inverse-quantization processing in step S204.

When the processing in step S240 is finished, the inverse-quantization setting unit 221 terminates the inverse-quantization setting processing, and returns back to the processing in Fig. 12, and executes the processing subsequent thereto.

When, in step S238 of Fig. 13, the parameter slice_granularity is equal to or more than the parameter max_cu_qp_delta_depth, and the delta QP about the focused CU is determined to be transmitted, the focused CU determination unit 261 proceeds to the processing in step S241.

In step S241, the QP selection unit 262 selects the Slice QP of the focused slice and the delta QP of the focused CU.

In step S242, the CUQP generation unit 263 adds the delta QP of the focused CU to the Slice QP of the focused slice selected in step S241, and generates the quantization parameter of the focused CU (focused CUQP). This focused CUQP is used for the inverse-quantization processing in step S204.

When the processing in step S242 is finished, the inverse-quantization setting unit 221 terminates the inverse-quantization setting processing, and returns back to the processing in Fig. 12, and executes the processing subsequent thereto.

Further, when, in step S237 of Fig. 13, the focused CU is determined not to be at the head of the slice, the focused CU determination unit 261 proceeds to the processing in step S243.

In step S243, the QP selection unit 262 selects the CUQP that is set immediately before and the delta QP of the focused CU. When the delta QP of the focused CU is not transmitted, only the CUQP that is set immediately before is selected.

In step S244, the CUQP generation unit 263 adds the delta QP of the focused CU to the CUQP that is set immediately before which has been selected in step S241, and generates the quantization parameter of the focused CU (focused CUQP). When only the CUQP that is set immediately before is selected, the CUQP generation unit 263 adopts, as the focused CUQP, the CUQP that is set immediately before. This focused CUQP is used for the inverse-quantization processing in step S204.

When the processing in step S244 is finished, the inverse-quantization setting unit 221 terminates the inverse-quantization setting processing, and returns back to the processing in Fig. 12, and executes the processing subsequent thereto.

By executing each processing as described above, the image decoding device 200 ensures independence of processing for each slice, and can perform decoding processing more efficiently.

[Another example of quantization parameter of CU at the head of the slice]

In the above explanation, when slice_granularity is less than max_cu_qp_delta_depth, more specifically, when the quantization parameter CUQP for each CU is not set for the CU at the head of the slice, the quantization parameter Slice QP for slice is set for the quantization parameter CUQP of the CU, but the value of this quantization parameter CUQP may be any value.

In order to correctly perform the quantization processing and the inverse-quantization processing, the quantization parameter CUQP for each CU may be set for all the CUs. More specifically, as described above, when the quantization parameter is not set for the CU at the head of the slice, the value that is set as the quantization parameter of the CU may be any value, and is not limited to the example explained above.

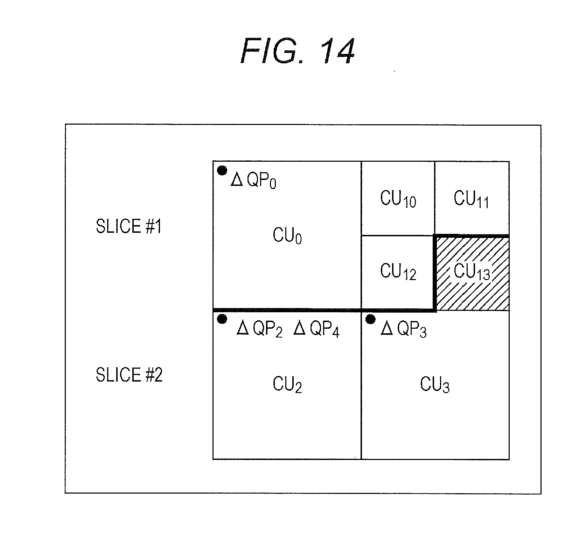

For example, a predetermined fixed value (for example, a predetermined value defined in advance) may be adopted as the CUQP of the CU at the head of the slice. The CUQP that is set subsequently may be the CUQP of the CU at the head of the slice. For example, in a case of the LCU that is set with the slice border as shown by the thick line is set as shown in Fig. 14, the $CU_{13}$ which is the CU at the head of the slice #2 is a CU smaller than the size designated by max_cu_qp_delta_depth. Therefore, the quantization parameter CUQP for each CU is not newly set for the CU 13. In such example, the $CU_2$ is a CU having a size equal to or more than the size designated by max_cu_qp_delta_depth. Therefore, the quantization parameter CUQP of the $CU_2$ is the quantization parameter CUQP for each CU that is newly set subsequently.

The quantization parameter of the $CU_2$ may be adopted as the quantization parameter of the $CU_{13}$. More specifically, in this case, $\Delta QP_2$ which is the delta QP of the $CU_2$ is transmitted to the image decoding device 200. However, in this example, the image coding device 100 needs to perform the quantization processing on the $CU_{13}$ after the quantization parameter of the $CU_2$ is set, and therefore, a storage area for holding the information required about the $CU_{13}$ is needed. Likewise, in the case of this example, the image decoding device 200 needs to perform the inverse-quantization processing on the $CU_{13}$ after $\Delta QP_2$ which is the delta QP of the $CU_2$ is obtained. Therefore, the image decoding device 200 needs a storage area for holding information required about the $CU_{13}$ therefor.

The quantization parameter for the $CU_{13}$ may be separately generated by any given method. However, the image coding device 100 needs to transmit $\Delta QP_4$ which is the delta QP of the $CU_{13}$. Accordingly, as shown in Fig. 14, the image coding device 100 may transmit, to the image decoding device 200, the $\Delta QP_4$ as well as $\Delta QP_2$ of the $CU_2$ for which the quantization parameter is newly set subsequently. More specifically, the image coding device 100 may transmit the $\Delta QP_4$ as the information about the $CU_2$. However, in this case, after the image decoding device 200 obtains the $\Delta QP_4$ which is transmitted as the information about the $CU_2$, the image decoding device 200 needs to perform the inverse-quantization processing on the $CU_{13}$. Therefore, the image decoding device 200 needs a storage area for holding information required about the $CU_{13}$.

In a still another method, regardless of whether max_cu_qp_delta_depth is set in the picture parameter set (regardless of the value of max_cu_qp_delta_depth even if it is set), the image coding device 100 may always set, for the CU at the head of the slice, new quantization parameter CUQP for each CU (more specifically, the delta QP of the CU at the head of the slice may be transmitted to the image decoding device 200).

In this case, the image coding device 100 transmits the delta QP of the calculated CU at the head of the slice (in the example of Fig. 14, $CU_{13}$) as the information about the CU at the head of the slice to the image decoding device 200. More specifically, in this case, the delta QP of the $CU_{13}$ is not transmitted as the information about the $CU_2$ as described above, but is transmitted as the information about the $CU_{13}$.

In contrast, regardless of presence/absence of the setting of max_cu_qp_delta_depth (or the value of max_cu_qp_delta_depth), the image decoding device 200 performs the inverse-quantization always using the delta QP transmitted from the image coding device 100 for the CU at the head of the slice.

Using any one of the methods, even when slice_granularity is less than max_cu_qp_delta_depth, the quantization parameter of the CU at the head of the slice is set, so that the image coding device 100 and the image decoding device 200 ensures independence of processing of each slice, and can perform coding processing and decoding processing more efficiently.

<2. Second embodiment>

[Quantization setting unit]

In the above explanation, when slice_granularity is less than max_cu_qp_delta_depth, the quantization parameter of the CU at the head of the slice is set, whereby independence of processing for each slice is ensured, but when slice_granularity is set, the size of the CU designated by slice_granularity may be limited to a size equal to or more than the size of the CU designated by max_cu_qp_delta_depth.

By setting such limitation on the value of slice_granularity, a new quantization parameter for each CU is prevented from being set for the CU at the head of the slice. More specifically, in a more reliable manner, for the CU at the head of the slice, the new the quantization parameter for each CU is set, and therefore, independence of processing for each slice is ensured. Therefore, the image coding device 100 and the image decoding device 200 can perform coding processing and decoding processing more efficiently.

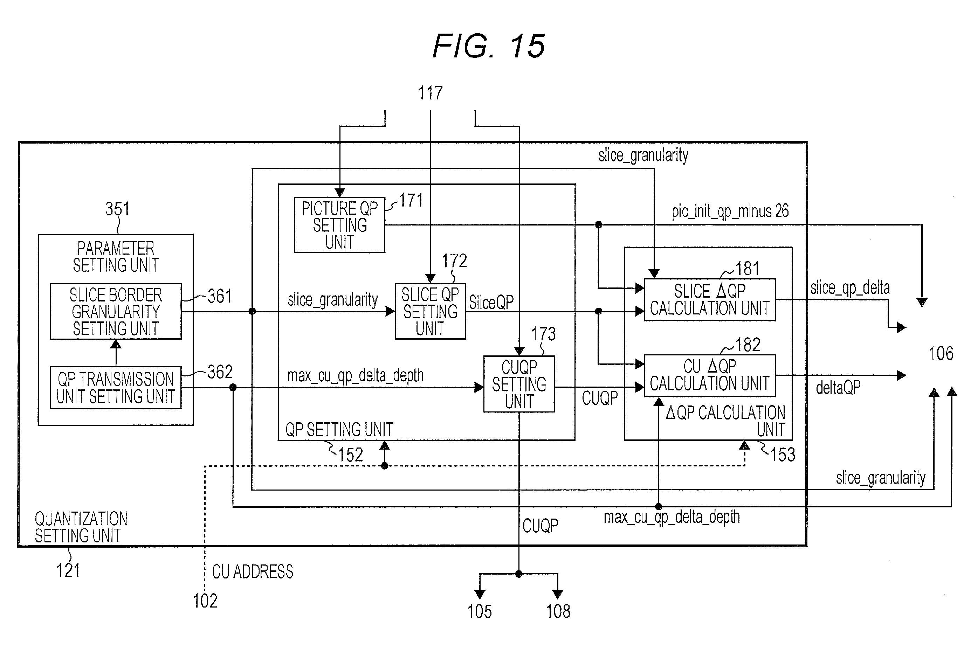

Fig. 15 is a block diagram for explaining an example of main configuration of a quantization setting unit 121 in that case. In this case, the image coding device 100 has the same configuration as Fig. 1 except the quantization setting unit 121.

In the example as shown in Fig. 15, the quantization setting unit 121 basically has the same configuration as the case of the example of Fig. 6, but it has a parameter setting unit 351 instead of the parameter setting unit 151 and does not have the focused CUQP setting unit 154.

The parameter setting unit 351 is basically the same processing unit as the parameter setting unit 151, but sets max_cu_qp_delta_depth and thereafter sets slice_granularity. The parameter setting unit 351 sets the value of slice_granularity so that the size of the CU designated by slice_granularity is equal to or more than the size of the CU designated by max_cu_qp_delta_depth.

The parameter setting unit 351 has a slice border granularity setting unit 361 and a QP transmission unit setting unit 362.

The slice border granularity setting unit 361 is basically the same processing unit as the slice border granularity setting unit 161, but obtains max_cu_qp_delta_depth set by the QP transmission unit setting unit 362, and sets the value of slice_granularity so that the size of the CU designated by slice_granularity is equal to or more than the size of the CU designated by max_cu_qp_delta_depth. The slice border granularity setting unit 361 provides slice_granularity thus set to the slice QP setting unit 172, the slice ΔQP calculation unit 181, and the lossless encoding unit 106.

The QP transmission unit setting unit 362 is basically the same processing unit as the QP transmission unit setting unit 162, but sets max_cu_qp_delta_depth before slice_granularity. The QP transmission unit setting unit 362 provides max_cu_qp_delta_depth thus set to the slice border granularity setting unit 361 so that it is used for setting slice_granularity.

Further, the QP transmission unit setting unit 362 provides max_cu_qp_delta_depth thus set to the CUQP setting unit 173, the CU ΔQP calculation unit 182, and the lossless encoding unit 106.

More specifically, the parameter setting unit 351 sets slice_granularity and max_cu_qp_delta_depth as described above, and therefore, even when the QP setting unit 152 and the ΔQP calculation unit 153 performs processing in the same manner as the HEVC coding method, a new quantization parameter for each CU is always set for the CU at the head of the slice. Therefore, in this case, the focused CUQP setting unit 154 is not required.

[Flow of quantization setting processing]

In this case, the coding process is performed in the same manner as the case described above with reference to the flowchart in Fig. 7.

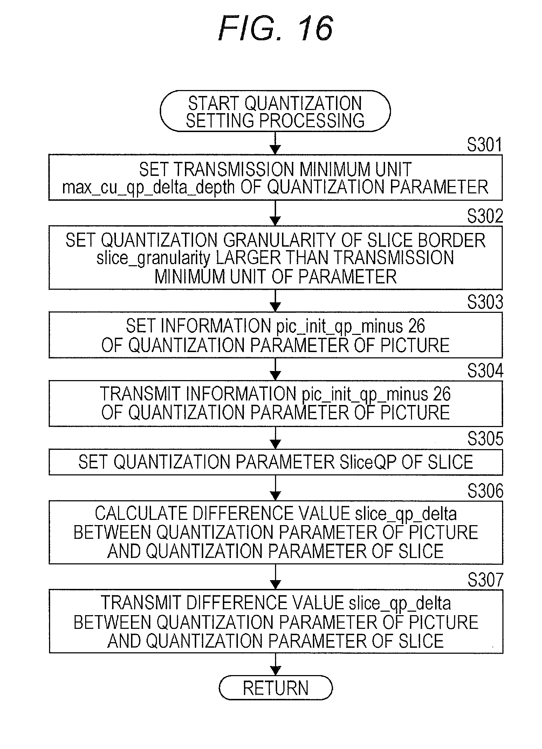

An example of flow of the quantization setting processing in this case that is executed in step S101 of Fig. 7 will be described with reference to the flowchart of Fig. 16.

When the quantization setting processing is started, the QP transmission unit setting unit 162 sets parameter max_cu_qp_delta_depth indicating the minimum unit with which the quantization parameter is transmitted in step S301. When parameter max_cu_qp_delta_depth is already set, this processing is omitted. For example, when parameter max_cu_qp_delta_depth is incorporated into the picture parameter set and is transmitted, and max_cu_qp_delta_depth for the focused picture has been set, this processing is omitted. The QP transmission unit setting unit 162 provides max_cu_qp_delta_depth thus set to the lossless encoding unit 106, so that it is incorporated into the picture parameter set and is transmitted to the decoding-side device.

When max_cu_qp_delta_depth is set, the slice border granularity setting unit 161 sets slice_granularity so that the granularity of the slice border is more than the size of the CU designated by max_cu_qp_delta_depth in step S302. When slice_granularity is already set, this processing is omitted. For example, when slice_granularity is incorporated into the picture parameter set and is transmitted, and slice_granularity for the focused picture has been set, this processing is omitted. The slice border granularity setting unit 161 provides slice_granularity thus set to the lossless encoding unit 106, so that it is incorporated into the picture parameter set and is transmitted to the decoding-side device.

Each processing in step S303 to step S307 is executed in the same manner as each processing in step S133 to step S137 of Fig. 8.

When the processing in step S307 is finished, the quantization setting unit 121 terminates the quantization setting processing, and the processing in Fig. 7 is performed back again, and the processing subsequent thereto is executed.

[Flow of quantization setting processing]

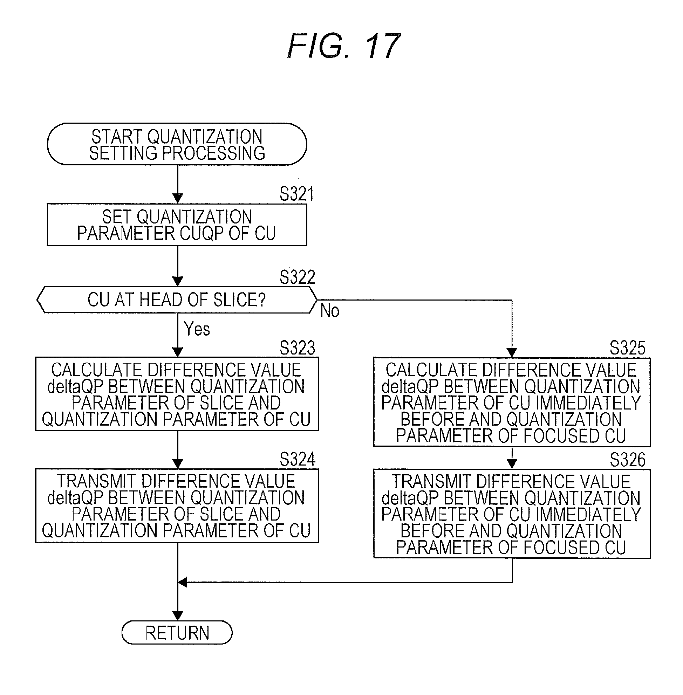

Subsequently, an example of flow of the quantization setting processing in this case executed in step S109 of Fig. 7 will be described with reference to the flowchart of Fig. 17. In this case, the size of the CU designated by slice_granularity is always equal to or more than the size of the CU designated by max_cu_qp_delta_depth, and therefore, this quantization setting processing is executed basically in the same manner as the case of the HEVC coding method.

When the quantization setting processing is started, the CUQP setting unit 173 sets the quantization parameter of the focused CU (focused CUQP) in step S321. For example, when the size of the focused CU is equal to or more than the size designated by max_cu_qp_delta_depth, the CUQP setting unit 173 sets new quantization parameter CUQP for each CU on the basis of the information provided by the rate controller 117. When the focused CU is a CU of which size is less than the size designated by max_cu_qp_delta_depth, the CUQP setting unit 173 employs a value that is set immediately before.

In step S322, the CU $\Delta$QP calculation unit 182 determines whether the focused CU which is the processing target is at the head of the slice. When it is determined to be at the head of the slice, the CU $\Delta$QP calculation unit 182 proceeds to the processing in step S323.

In step S323, the CU $\Delta$QP calculation unit 182 calculates the difference value delta QP between the quantization parameter Slice QP of the focused slice and the quantization parameter of the focused CU (focused CUQP). In step S324, the CU $\Delta$QP calculation unit 182 provides the calculated delta QP to the lossless encoding unit 106, thus transmitting it to the decoding-side device. As described above, by transmitting the difference value delta QP instead of the focused CUQP, the image coding device 100 can reduce the amount of code of the quantization parameter.

When the processing in step S324 is finished, the quantization setting unit 121 terminates the quantization setting processing, and the processing in Fig. 7 is performed back again, and the processing subsequent thereto is executed.

In step S322, when the focused CU is determined not to be at the head of the slice, the CU $\Delta$QP calculation unit 182 proceeds to the processing in step S325.

In step S325, the CU $\Delta$QP calculation unit 182 calculates the difference value delta QP between the quantization parameter CUQP of the CU that is set immediately before and the quantization parameter of the focused CU (focused CUQP). When, in step S321, the value that is set immediately before is employed as the focused CUQP, this processing is omitted. More specifically, when the focused CU is a CU of which size of less than the size designated by the size designated by max_cu_qp_delta_depth, this processing is omitted.

In step S326, the CU $\Delta$QP calculation unit 182 provides the calculated delta QP calculated in the processing of step S325 to the lossless encoding unit 106, thus transmitting it to the decoding-side device. As described above, by transmitting the difference value delta QP instead of the focused CUQP, the image coding device 100 can reduce the amount of code of the quantization parameter. When the processing in step S325 is omitted, the processing in step S326 is naturally omitted.

When the processing in step S326 is finished, the quantization setting unit 121 terminates the quantization setting processing, and the processing in Fig. 7 is performed back again, and the processing subsequent thereto is executed.

By executing each processing as described above, the image coding device 100 ensures independence of processing for each slice, and can perform coding processing more efficiently.

[Inverse-quantization setting unit]

Subsequently, the image decoding device 200 in this case will be described. As described above, when the size of the CU designated by slice_granularity is limited to a value equal to or more than the size of the CU designated by max_cu_qp_delta_depth, new quantization parameter for each CU is always set for the CU at the head of the slice in the encoded data provided to the image decoding device 200.

More specifically, the image decoding device 200 can correctly perform the decoding processing in accordance with the same method as the case of the HEVC coding method, and can ensure independence of processing for each slice, and can perform the decoding processing more efficiently.

Fig. 16 is a block diagram for explaining an example of main configuration of the inverse-quantization setting unit 221 in that case. The image decoding device 200 in this case has the same configuration as Fig. 10 except the inverse-quantization setting unit 221.

As shown in Fig. 16, the inverse-quantization setting unit 221 in this case basically has the same configuration as the example of Fig. 11 but has a CUQP restructuring unit 434 instead of the CUQP restructuring unit 234.

Like the CUQP restructuring unit 234, the CUQP restructuring unit 434 restructures the quantization parameter of the focused CU (focused CUQP) generated by the image coding device 100. For example, the CUQP restructuring unit 434 includes a focused CU determination unit 461, a QP selection unit 462, and a CUQP generation unit 463.

The focused CU determination unit 461 determines which position the focused CU of processing target is at.

For example, on the basis of the information about the CU address of the focused CU provided by the lossless decoding unit 202, the focused CU determination unit 461 determines whether the focused CU is a CU at the head of the focused slice or not. For example, when the focused CU is not a CU at the head of the focused slice, the focused CU determination unit 461 determines whether the information about the CUQP of the focused CU (delta QP) is transmitted or not, on the basis of max_cu_qp_delta_depth and the CU address.

For example, when the size of the focused CU is equal to or more than the size designated by max_cu_qp_delta_depth, the focused CU determination unit 461 determines that the information about the CUQP of the focused CU (delta QP) is transmitted. For example, when the size of the focused CU is less than the size designated by max_cu_qp_delta_depth, the focused CU determination unit 461 determines that the information about the CUQP of the focused CU (delta QP) is not transmitted.

The focused CU determination unit 461 provides the determination result to the QP selection unit 262.

The QP selection unit 462 selects restructuring method of the focused CU in accordance with the determination result provided by the focused CU determination unit 461. In accordance with the method selected by the QP selection unit 462, the CUQP generation unit 463 uses, as necessary, the Slice QP provided by the slice QP generation unit 233 and the delta QP provided by the CU ΔQP obtaining unit 253 to generate the quantization parameter of the focused CU (focused CUQP).

For example, when the focused CU determination unit 461 determines that the focused CU is not a CU at the head of the slice and that the information about the CUQP of the focused CU (delta QP) is not transmitted, the CUQP generation unit 463 adopts a CUQP generated immediately before (N-1) as the focused CUQP in accordance with the selection made by the QP selection unit 462 as shown in the equation (13) below.

$$\text{focused CUQP} = \text{CUQP } (N-1) \ \dots \ (13)$$

For example, when the focused CU determination unit 461 determines that the focused CU is not a CU at the head of the slice and that the information about the CUQP of the focused CU (delta QP) is transmitted, the CUQP generation unit 463 adopts, as the focused CUQP, a result of addition of the CUQP generated immediately before (N-1) and the delta QP of the focused CU in accordance with the selection made by the QP selection unit 462 as shown in the equation (14) below.

$$\text{focused CUQP} = \text{CUQP } (N-1) + \text{delta QP } \dots \ (14)$$

For example, when the focused CU determination unit 461 determines that the focused CU is a CU at the head of the slice, the information about the CUQP of the focused CU (delta QP) is always transmitted, and therefore, the CUQP generation unit 463 adopts, as the focused CUQP, a result of addition of the Slice QP of the focused slice and the delta QP of the focused CU in accordance with the selection made by the QP selection unit 462 as shown in the equation (15) below.

$$\text{focused CUQP} = \text{Slice QP} + \text{delta QP } \dots \ (15)$$

The CUQP generation unit 463 provides the generated focused CUQP to the inverse-quantization unit 203. The inverse-quantization unit 203 uses the focused CUQP provided by the CUQP generation unit 463 to perform the inverse-quantization on the focused CU.

By doing so, the inverse-quantization setting unit 221 can correctly restructure the quantization parameter of the CU at the head of the slice. Therefore, the inverse-quantization unit 203 can correctly perform the inverse-quantization. More specifically, the image decoding device 200 ensures independence of processing for each slice, and can perform decoding processing more efficiently.

[Flow of inverse-quantization setting processing]

In this case, the decoding process is performed in the same manner as the case described above with reference to the flowchart in Fig. 12.

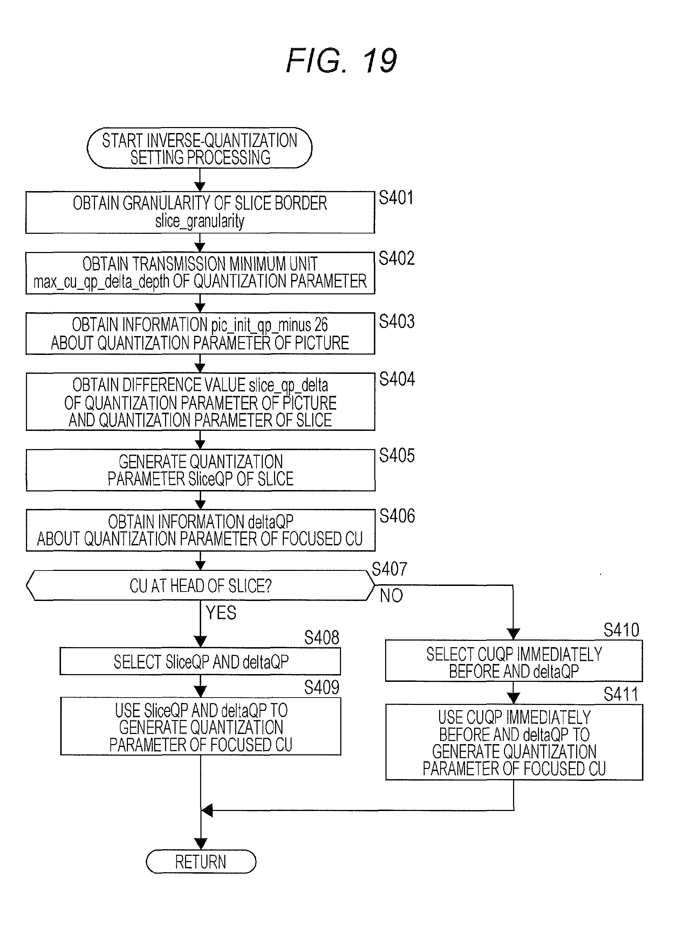

An example of flow of the inverse-quantization setting processing in this case executed in step S203 of Fig. 12 will be described with reference to the flowchart of Fig. 19.

When the inverse-quantization setting processing is started, each processing in step S401 to step S406 is executed in the same manner as each processing in step S231 to step S236 of Fig. 13.

In step S407, the focused CU determination unit 461 determines whether focused CU is a CU at the head of the slice. When the focused CU is determined to be at the head of the slice, the focused CU determination unit 461 proceeds to the processing in step S408.

In step S408, the QP selection unit 462 selects the Slice QP of the focused slice and the delta QP of the focused CU.

In step S409, the CUQP generation unit 463 adds the delta QP of the focused CU to the Slice QP of the focused slice selected in step S408, and generates the quantization parameter of the focused CU (focused CUQP). This focused CUQP is used for the inverse-quantization processing in step S204.

When the processing in step S409 is finished, the inverse-quantization setting unit 221 terminates the inverse-quantization setting processing, and returns back to the processing in Fig. 12, and executes the processing subsequent thereto.

Further, when, in step S407 of Fig. 19, the focused CU is determined not to be at the head of the slice, the focused CU determination unit 461 proceeds to the processing in step S410.

In step S410, the QP selection unit 462 selects the CUQP that is set immediately before and the delta QP of the focused CU. When the delta QP of the focused CU is not transmitted, only the CUQP that is set immediately before is selected.

In step S411, the CUQP generation unit 463 adds the delta QP of the focused CU to the CUQP that is set immediately before which has been selected in step S410, and generates the quantization parameter of the focused CU (focused CUQP). When only the CUQP that is set immediately before is selected, the CUQP generation unit 463 adopts, as the focused CUQP, the CUQP that is set immediately before. This focused CUQP is used for the inverse-quantization processing in step S204.

When the processing in step S411 is finished, the inverse-quantization setting unit 221 terminates the inverse-quantization setting processing, and returns back to the processing in Fig. 12, and executes the processing subsequent thereto.

By executing each processing as described above, the image decoding device 200 ensures independence of processing for each slice, and can perform decoding processing more efficiently.

[Mode selection]

Multiple methods explained above are may be prepared as modes, and the image coding device 100 and the image decoding device 200 may select any one of them based on any given information, e.g., user instruction, hardware performance, and profile.

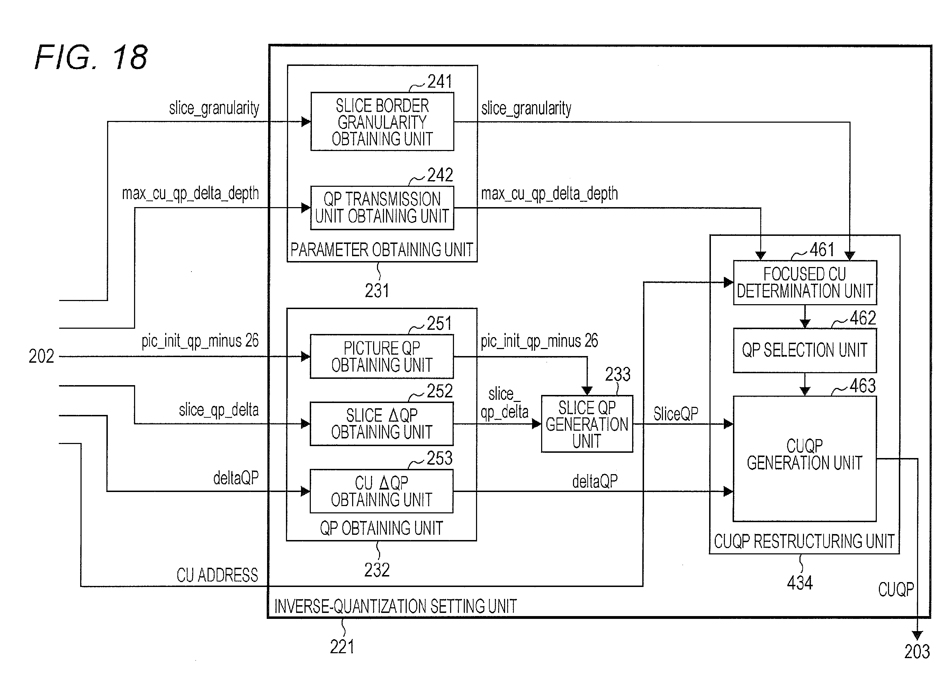

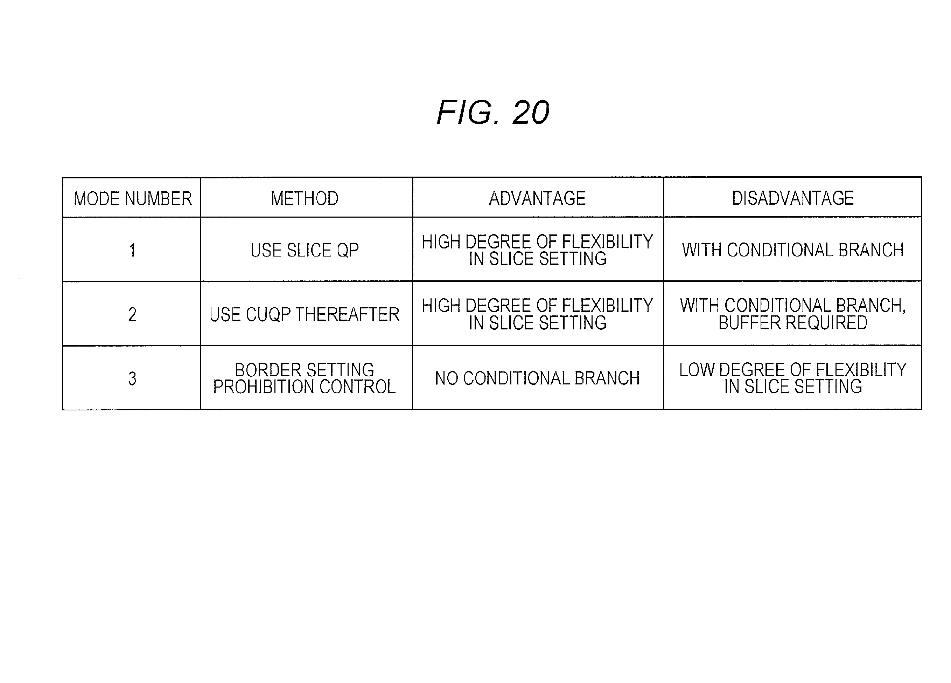

In the example as shown in Fig. 20, three modes, i.e., mode 1 to mode 3, are prepared in advance. As described with reference to Figs. 1 to 13, mode 1 is a mode in which the Slice QP of the focused slice is used as the quantization parameter of the CU at the head of the slice for which new quantization parameter CUQP for each CU is not set. As described with reference to Fig. 14, mode 2 is a mode in which the quantization parameter CUQP of the CU processed later in terms of time is used as the quantization parameter of the CU at the head of the slice for which new quantization parameter CUQP for each CU is not set. As described with reference to Figs. 15 to 19, mode 3 is a mode in which the size of the CU designated by slice_granularity is limited to a size equal to or more than the size of the CU designated by max_cu_qp_delta_depth.

The image coding device 100 and the image decoding device 200 select the optimum option from among the options as described above on the basis of any given information, and performs coding/decoding processing in that mode. At that occasion, the modes selected by the image coding device 100 and the image decoding device 200 need to be the same.

A method for causing the image coding device 100 and the image decoding device 200 to select the same mode may be any method, but, for example, when the image coding device 100 may add (multiplex) the mode selected for coding to the encoded data, and may transmit the encoded data to the image decoding device 200.

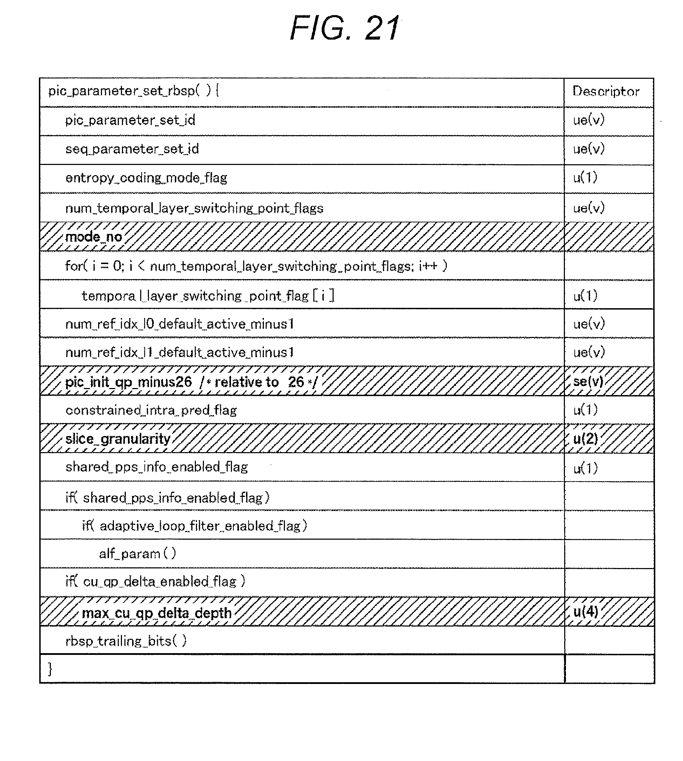

For example, like the syntax of the picture parameter set as shown in Fig. 21, parameter mode_no indicating identification information about the selected mode (for example, a mode number) may be designated in the picture parameter set. In this case, the image decoding device 200 identifies the mode selected by the image coding device 100 on the basis of the value of mode_no included in the picture parameter set, and performs the decoding processing in that mode. By doing so, the image coding device 100 and the image decoding device 200 can select the same mode, and the coding processing and the decoding processing of the image can be performed correctly.

<3. Third embodiment>

[Limitation]

For example, in HEVC, the minimum value of the orthogonal transformation size (more specifically, TU size) is designated by the parameter log2_min_transform_block_size_minus2 in the SPS (Sequence Parameter Set). Information about granularity of a CU with which the delta QP is transmitted is designated as parameter max_cu_qp_delta_depth in the PPS (Picture Parameter Set). These parameters are transmitted from the coding-side to the decoding-side.

However, the delta QP is transmitted in the first Non-Skip TU (non-0 coefficient) included in the CU of the size designated by the PPS size (parameter cu_qp_delta).

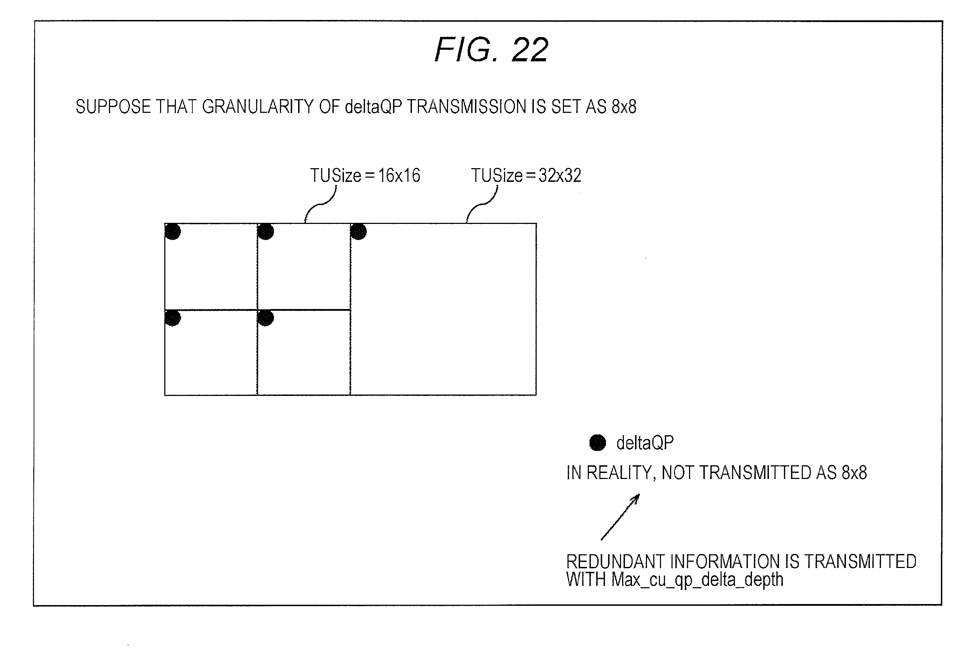

Therefore, for example, as shown in the example of Fig. 22, even when the size of the CU for transmitting the delta QP is designated as "8 × 8" (more specifically, "8 × 8" is designated by parameter max_cu_qp_delta_depth), the delta QP is transmitted for every "16 × 16" when the minimum value of the TU size depending on the value of the parameter cu_qp_delta is "16 × 16". More specifically, it is not transmitted as "8 × 8" and the bit for transmitting the value of 8 × 8" designated by max_cu_qp_delta_depth may become redundant.

Therefore, the image coding device 100 limits the block size designated by the parameter max_cu_qp_delta_depth to the minimum value of the TU size or more.

By doing so, the size of the CU for transmitting the delta QP designated by the parameter max_cu_qp_delta_depth is limited to the minimum value of the TU size or more, and therefore, the size of the CU for transmitting the delta QP is prevented from being more than the size designated by the parameter max_cu_qp_delta_depth (occurrence of the situation as shown in Fig. 22 can be suppressed).

In other words, the size of the CU for transmitting the delta QP is always designated by the parameter max_cu_qp_delta_depth, and therefore, this can suppress redundancy of the value of the parameter max_cu_qp_delta_depth. More specifically, the image coding device 100 can improve the coding efficiency.

In contrast, the image decoding device 200 may control the minimum size of the TU on the basis of the value of the parameter max_cu_qp_delta_depth provided from the image coding device 100. By doing so, the image decoding device 200 can improve the coding efficiency.

<4. Fourth embodiment>

[Application to Multi-View Image Coding/Multi-View Image Decoding]

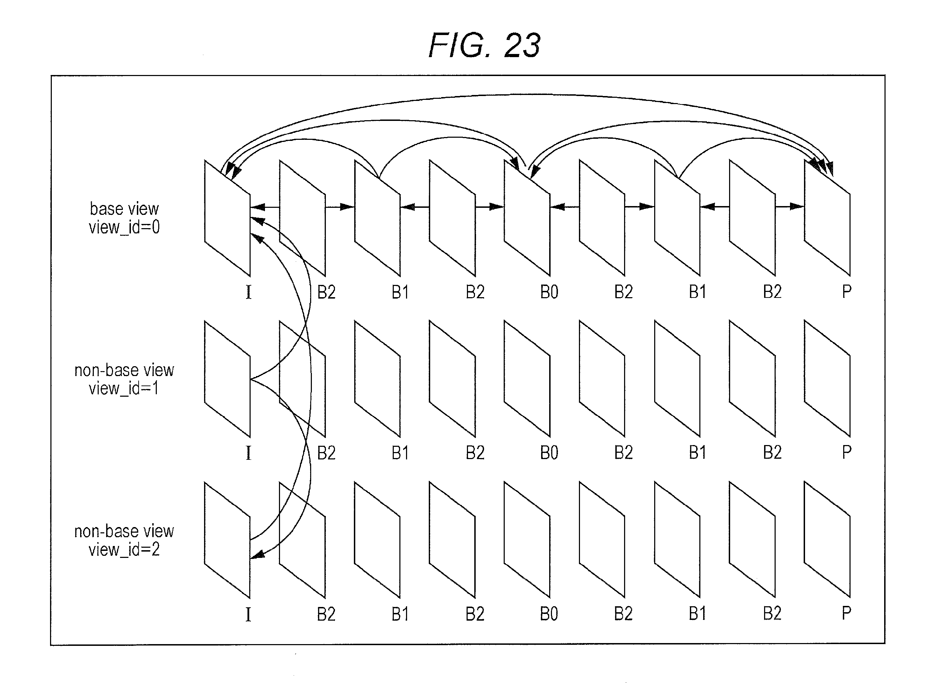

The above-described series of processes may be applied to multi-view image coding and multi-view image decoding. Fig. 23 illustrates an example of a multi-view image coding system.

As illustrated in Fig. 23, a multi-view image includes images from a plurality of viewpoints and an image from a predetermined viewpoint out of a plurality of viewpoints is specified as a base view image. An image from each viewpoint other than the base view image is treated as non-base view image.

When the multi-view image coding as illustrated in Fig. 23 is performed, it is also possible to obtain difference between quantization parameters of each view (identical view).

  (1) base-view:

    (1-1) dQP(base view) = Current_CU_QP(base view)-LCU_QP(base view)
    (1-2) dQP(base view) = Current_CU_QP(base view)-Previsous_CU_QP(base view)
    (1-3) dQP(base view) = Current_CU_QP(base view)-Slice_QP(base view)

  (2) non-base-view:

    (2-1) dQP(non-base view) = Current_CU_QP(non-base view) - LCU_QP(non-base view)
    (2-2) dQP(non-base view) = CurrentQP(non-base view) - PrevisousQP(non-base view)
    (2-3) dQP(non-base view) = Current_CU_QP(non-base view) - Slice_QP(non-base view)

When the multi-view image coding is performed, it is also possible to obtain the difference between the quantization parameters for each view (different views).

  (3)base-view/non-base view:

(3-1) dQP(inter-view) = Slice_QP(base view) - Slice_QP(non-base view)
(3-2) dQP(inter-view) = LCU_QP(base view) - LCU_QP(non-base view)

(4)non-base view/non-base view:

(4-1) dQP(inter-view) = Slice_QP(non-base view i)-Slice_QP(non-base view j)
(4-2) dQP(inter-view) = LCU_QP(non-base view i)-LCU_QP(non-base view j)

In this case, it is also possible to combine the above-described (1) to (4). For example, in the non-base view, a method of obtaining the difference between the quantization parameters in a slice level between the base view and the non-base view (3-1 and 2-3 are combined) and a method of obtaining the difference between the quantization parameters in an LCU level between the base view and the non-base view (3-2 and 2-1 are combined) are considered. In this manner, it is possible to improve coding efficiency also in a case where the multi-view coding is performed by repeatedly applying the difference.

As in the above-described method, it is also possible to set a flag to identify whether there is dQP of which value is not 0 for each dQP described above.

[Multi-viewpoint image coding device]

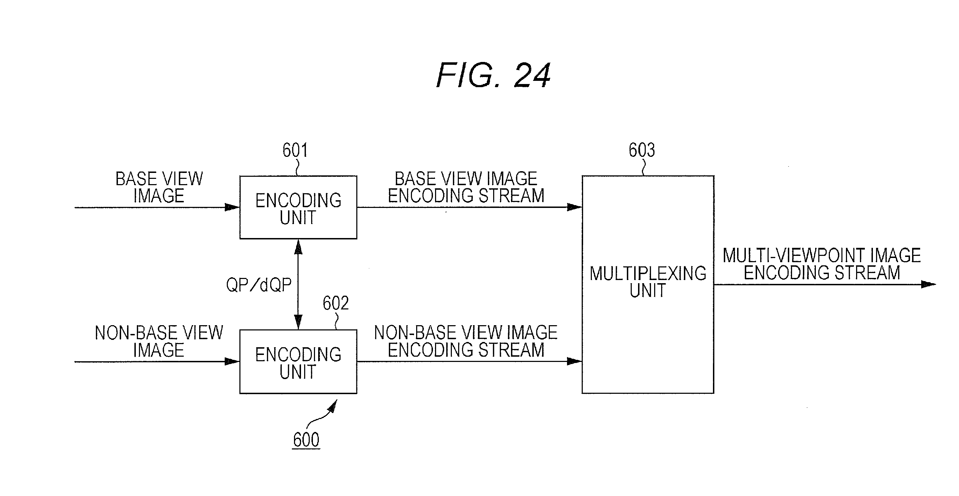

Fig. 24 is a view illustrating a multi-viewpoint image coding device, which performs the above-described multi-view image coding. As illustrated in Fig. 24, a multi-viewpoint image coding device 600 includes an encoding unit 601, an encoding unit 602, and a multiplexing unit 603.

The encoding unit 601 codes the base view image to generate a base view image coded stream. The coding unit 602 codes the non-base view image to generate a non-base view image coded stream. The multiplexing unit 603 multiplexes the base view image coded stream generated by the encoding unit 601 and the non-base view image coded stream generated by the encoding unit 602 to generate a multi-view image coded stream.

The image coding device 100 (Fig. 1) can be applied to the encoding unit 601 and the encoding unit 602 of the multi-viewpoint image coding device 600. In this case, the multi-viewpoint image coding device 600 sets a difference value between the quantization parameter set by the encoding unit 601 and the quantization parameter set by the encoding unit 602 to transmit.

[Multi-viewpoint image decoding device]

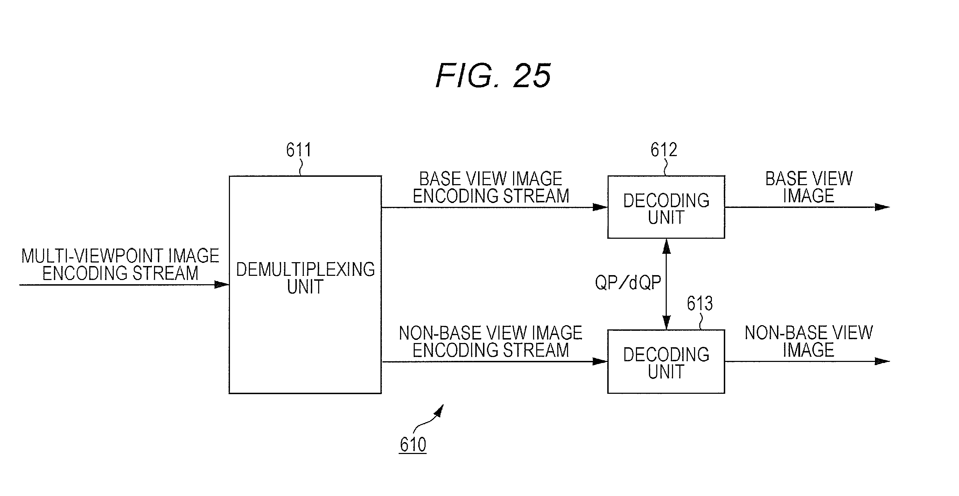

Fig. 25 is a view illustrating a multi-viewpoint image decoding device, which performs the above-described multi-view image decoding. As illustrated in Fig. 25, a multi-viewpoint image decoding device 610 includes a demultiplexing unit 611, a decoding unit 612, and a decoding unit 613.

The demultiplexing unit 611 demultiplexes the multi-view image coded stream in which the base view image coded stream and the non-base view image coded stream are multiplexed to extract the base view image coded stream and the non-base view image coded stream. The decoding unit 612 decodes the base view image coded stream extracted by the demultiplexing unit 611 to obtain the base view image. The decoding unit 613 decodes the non-base view image coded stream extracted by the demultiplexing unit 611 to obtain the non-base view image.

The image decoding device 200 (Fig. 10) can be applied to the decoding unit 612 and the decoding unit 613 of the multi-viewpoint image decoding device 610. In this case, the multi-viewpoint image decoding device 610 sets the quantization parameter from the difference value between the quantization parameter set by the encoding unit 601 and the quantization parameter set by the encoding unit 602 to perform inverse quantization.

<5. Fifth embodiment>

[Application to hierarchical image point coding and hierarchical image decoding]

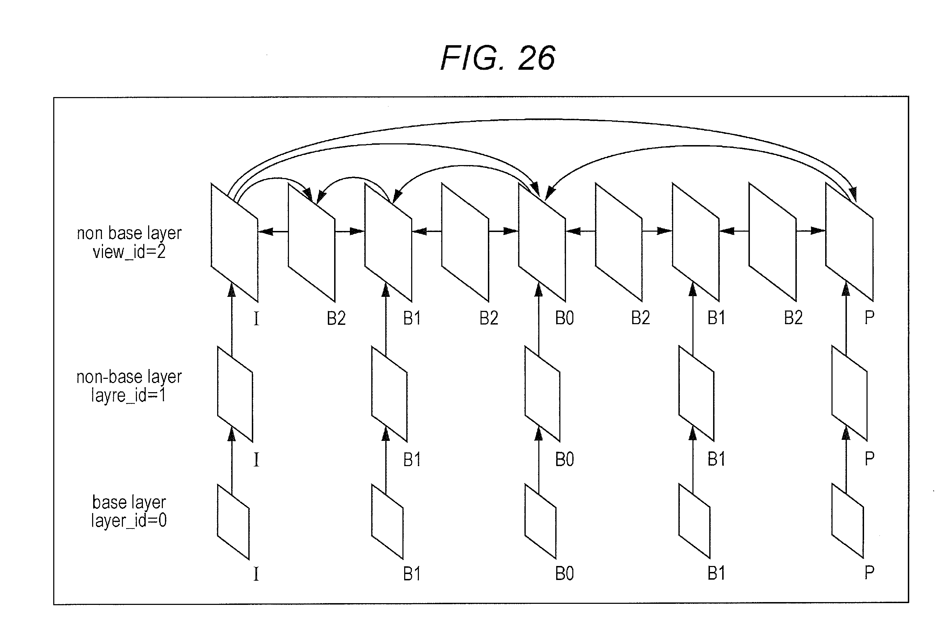

The above series of processing can be applied to hierarchical image coding and hierarchical image decoding. Fig. 26 illustrates an example of a multi-view image coding system.

As illustrated in Fig. 26, a hierarchical image includes images of a plurality of layers (resolutions) and an image of a predetermined layer out of a plurality of resolutions is specified as a base layer image. An image of each layer other than the base layer image is treated as a non-base layer image.

When the hierarchical image coding (spatial scalability) as illustrated in Fig. 26 is performed, it is also possible to obtain difference between quantization parameters of each layer (identical layer):

(1)base-layer:

(1-1)dQP(base layer) = Current_CU_QP(base layer)-LCU_QP(base layer)
(1-2)dQP(base layer) = Current_CU_QP(base layer) - Previsous_CU_QP(base layer)
(1-3)dQP(base layer) = Current_CU_QP(base layer)-Slice_QP(base layer)

(2)non-base-layer:

(2-1)dQP(non-base layer) = Current_CU_QP(non-base layer) - LCU_QP(non-base layer)
(2-2)dQP(non-base layer) = CurrentQP(non-base layer) - PrevisousQP(non-base layer)
(2-3)dQP(non-base layer) = Current_CU_QP(non-base layer) - Slice_QP(non-base layer)

When the hierarchical coding is performed, it is also possible to obtain the difference between the quantization parameters of each layer (different layers).

(3)base layer/non-base layer:

(3-1)dQP(inter-layer) = Slice_QP(base layer)-Slice_QP(non-base layer)
(3-2)dQP(inter-layer) = LCU_QP(base layer)-LCU_QP(non-base layer)

(4)non-base layer/non-base layer:

(4-1)dQP(inter-layer) = Slice_QP(non-base layer i) - Slice_QP(non-base layer j)
(4-2)dQP(inter-layer) = LCU_QP(non-base layer i)-LCU_QP(non-base layer j)

In this case, it is also possible to combine the above-described (1) to (4). For example, in the non-base layer, a method of obtaining the difference between the quantization parameters in a slice level between the base layer and the non-base layer (3-1 and 2-3 are combined) and a method of obtaining the difference between the quantization parameters in an LCU level between the base layer and the non-base layer (3-2 and 2-1 are combined) are considered. In this manner, by repeatedly applying the difference, it becomes possible to improve coding efficiency also when the hierarchical coding is performed.

As in the above-described method, it is also possible to set a flag to identify whether there is dQP of which value is not 0 for each dQP described above.

[Hierarchical image coding device]

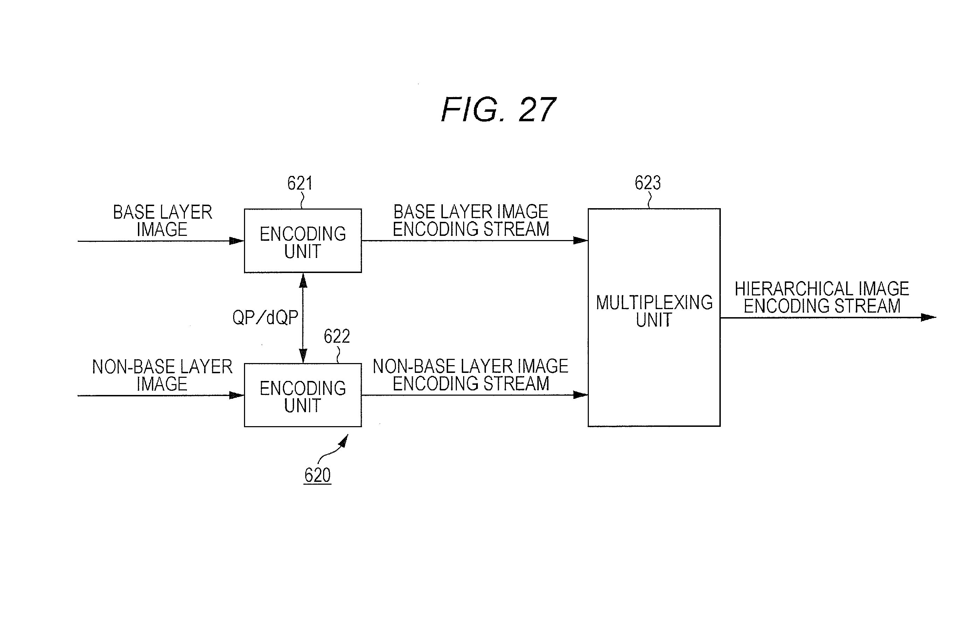

Fig. 27 is a view illustrating a hierarchical image coding device, which performs the above-described hierarchical image coding. As illustrated in Fig. 27, a hierarchical image coding device 620 includes an encoding unit 621, an encoding unit 622, and a multiplexing unit 623.

The encoding unit 621 codes the base layer image to generate a base layer image coded stream. The encoding unit 622 codes the non-base layer image to generate a non-base layer image coded stream. The multiplexing unit 623 multiplexes the base layer image coded stream generated by the encoding unit 621 and the non-base layer image coded stream generated by the encoding unit 622 to generate a hierarchical image coded stream.

The image coding device 100 (Fig. 1) can be applied to the encoding unit 621 and the encoding unit 622 of the hierarchical image coding device 620. In this case, the hierarchical image coding device 600 sets a difference value between the quantization parameter set by the encoding unit 621 and the quantization parameter set by the encoding unit 622 to transmit.

[Hierarchical image decoding device]

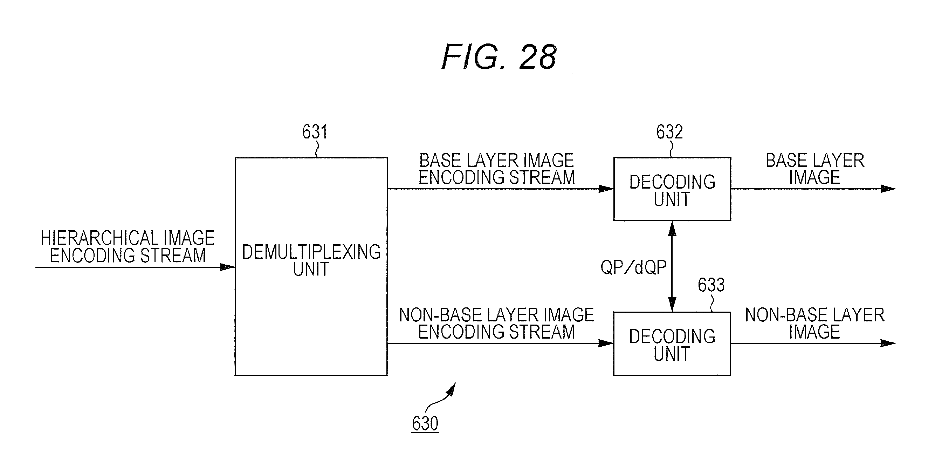

Fig. 28 is a view illustrating a hierarchical image decoding device, which performs the above-described hierarchical image decoding. As illustrated in Fig. 28, a hierarchical image decoding device 630 includes a demultiplexing unit 631, a decoding unit 632, and a decoding unit 633.

The demultiplexing unit 631 demultiplexes the hierarchical image coded stream obtained by multiplexing the base layer image coded stream and the non-base layer image coded stream to extract the base layer image coded stream and the non-base layer image coded stream. The decoding unit 632 decodes the base layer image encoded stream extracted by the demultiplexing unit 631 and obtains the base layer image. The decoding unit 633 decodes the non-base layer image encoded stream extracted by the demultiplexing unit 631 and obtains the non-base layer image.

The image decoding device 200 (Fig. 10) can be applied to the decoding unit 632 and the decoding unit 633 of the hierarchical image decoding device 630. In this case, the hierarchical image decoding device 630 sets the quantization parameter from the difference value between the quantization parameter set by the encoding unit 631 and the quantization parameter set by the encoding unit 632 to perform inverse quantization.

<6. Sixth embodiment>

[Computer]

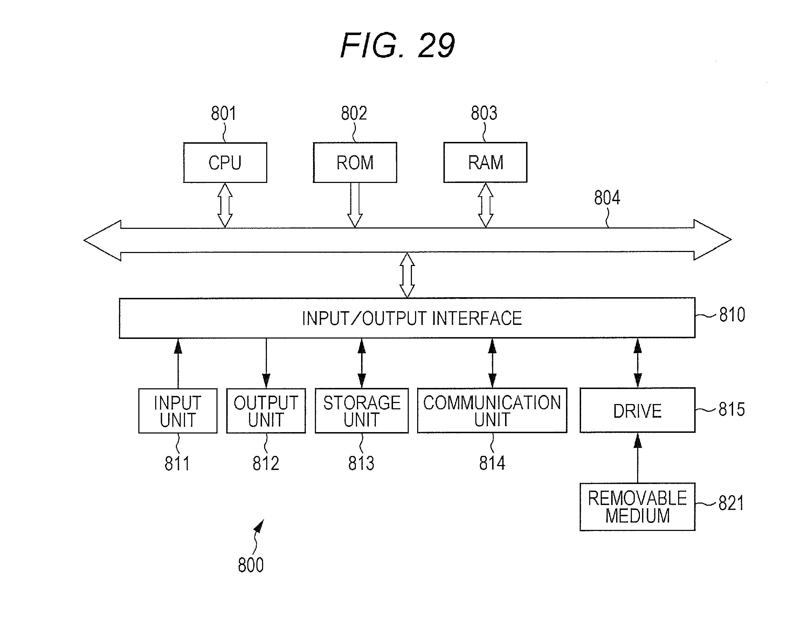

It is possible that the above-described series of processes is executed by hardware or executed by software. In this case, it may be configured as a computer illustrated in Fig. 29, for example.

In Fig. 29, a CPU (Central processing Unit) 801 of a computer 800 executes various kinds of processing in accordance with a program stored in a ROM (Read Only Memory) 802 or program loaded from a storage unit 813 to a RAM (Random Access Memory) 803. As necessary, the RAM 803 also stores, e.g., data required for allowing the CPU 801 to execute various kinds of processing.

The CPU 801, the ROM 802, and the RAM 803 are connected to each other via a bus 804. This bus 804 is also connected to an input/output interface 810.

The input/output interface 810 is connected to an input unit 811 made of a keyboard, a mouse, and the like, a display made of a CRT (Cathode Ray Tube), an LCD (Liquid Crystal Display), and the like, an output unit 812 made of a speaker and the like, a storage unit 813 constituted by a hard disk and the like, and a communication unit 814 constituted by a modem and the like. The communication unit 814 performs communication unit via a network including the Internet.

The input/output interface 810 is also connected to a drive 815 as necessary, and removable medium 821 such as a magnetic disk, an optical disk, a magneto-optical disk, or a semiconductor memory is loaded as necessary, and a computer program read therefrom is installed to a storage unit 813 as necessary.

When the above-described series of processes is executed by the software, a program, which composes the software, is installed from the network or a recording medium.

For example, as illustrated in Fig. 29, this recording medium is constituted by not only a removable medium 821 made of, e.g., a magnetic disk (including a flexible disk) recorded with a program, an optical disk (including CD-ROM (Compact Disc - Read Only Memory), a DVD (Digital Versatile Disc)), a magneto optical disk (including MD (Mini Disc)), or a semiconductor memory, which are distributed to distribute programs to users separately from the device main body but also a ROM 802 recorded with a program and a hard disk included in the storage unit 813 which are distributed to users while they are incorporated into the device main body in advance.

The program executed by the computer may be a program with which processing in performed in time sequence according to the order explained in this specification, or may be a program with which processing is performed in parallel or with necessary timing, e.g., upon call.

Also, in this specification, a step of describing the program recorded in the recording medium includes not only the processes chronologically performed in the described order but also the processes executed in parallel or individually, which are not necessarily chronologically performed.

Also, in this specification, a system means an entire device including a plurality of devices.

A configuration explained as a device (or a processing unit) in the above explanation may be divided, and structured as multiple devices (or processing units). A configuration explained as multiple devices (or processing units) in the above explanation may be combined, and structured as a device (or a processing unit). Alternatively, it is to be understood that the configuration of each device (or each processing unit) may be added with any configuration other than the above. Further, when the configuration and operation of the entire system are substantially the same, a part of configuration of a certain device (or processing unit) may be included in the configuration of another device (or another processing unit). More specifically, the embodiments of the present technique is not limited to the embodiments explained above, and may be changed in various manners as long as it is within the gist of the present technique.

The image coding device 100 (Fig. 1) and the image decoding device 200 (Fig. 10) according to the embodiments explained above can be applied to various kinds of electronic devices such as a transmitter or a receiver for distribution to terminals by satellite broadcasting, cable broadcasting such as cable television, distribution on the Internet, cellular communication, recording devices for recording images to a medium such as an optical disk, magnetic disk, and flash memory, or a reproduction device for reproducing images from these recording media. Hereinafter, four examples of applications will be described.

<7. Seventh embodiment>

[Television device]

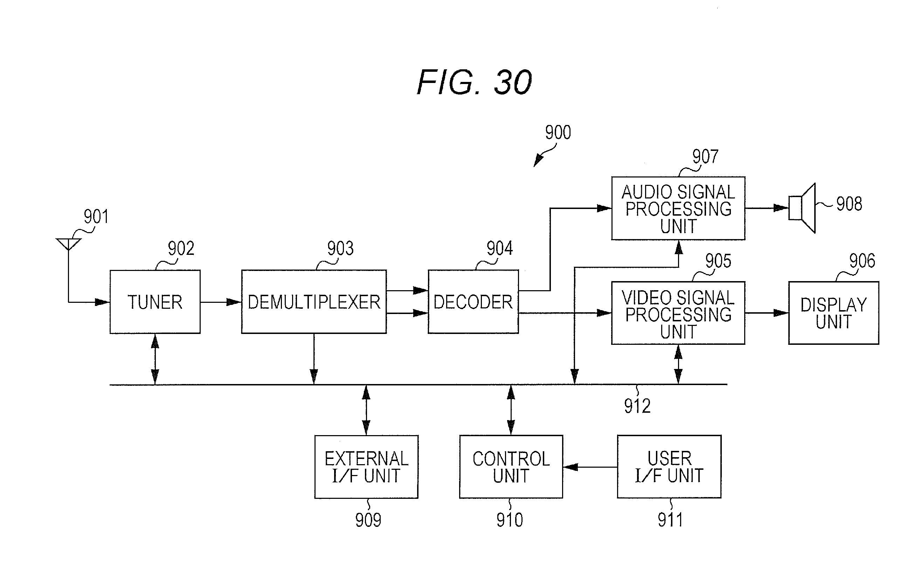

Fig. 30 illustrates an example of a schematic configuration of a television device to which the above-described embodiment is applied. The television device 900 includes an antenna 901, a tuner 902, a demultiplexer 903, a decoder 904, a video signal processing unit 905, a display unit 906, an audio signal processing unit 907, a speaker 908, an external interface 909, a control unit 910, a user interface 911, and a bus 912.

The tuner 902 extracts a signal of a desired channel from a broadcasting signal received via the antenna 901, and demodulates the extracted signal. Then, the tuner 902 outputs the encoded bit stream obtained from demodulation to the demultiplexer 903. More specifically, the tuner 902 plays a role of transmission unit of the television device 900 for receiving the encoded bit stream in which images are encoded.

The demultiplexer 903 separates the video stream and the audio stream of a viewing target program from the encoded bit stream, and outputs each separated stream to the decoder 904. The demultiplexer 903 extracts auxiliary data such as EPG (Electronic Program Guide) from the encoded bit stream, and provides the extracted data to the control unit 910. When the encoded bit stream is scrambled, the demultiplexer 903 may perform descrambling.

The decoder 904 decodes the video stream and the audio stream received from the demultiplexer 903. The decoder 904 outputs the data generated by the decoding processing to the video signal processing unit 905. The decoder 904 outputs the audio data generated from the decoding processing to the audio signal processing unit 907.

The video signal processing unit 905 plays the video data received from the decoder 904, and causes the display unit 906 to display the video. The video signal processing unit 905 may display, on the display unit 906, an application screen provided via the network. The video signal processing unit 905 may perform additional processing such as noise reduction on the video data in accordance with setting. Further, the video signal processing unit 905 generates an image of GUI (Graphical User Interface) such as menu, buttons, or cursor, and overlays the generated image on the output image.

The display unit 906 is driven by a driving signal provided from the video signal processing unit 905, and displays video or image on a video screen of a display device (such as liquid crystal display, plasma display or OELD (Organic ElectroLuminescence Display) (organic EL display) and the like).

The audio signal processing unit 907 performs reproduction processing such as D/A conversion and amplification of audio data received from the decoder 904, and causes the speaker 908 to output audio. The audio signal processing unit 907 may perform additional processing such as noise reduction on the audio data.

The external interface 909 is an interface for connection between the television device 900 and external device or network. For example, a video stream or an audio stream received via the external interface 909 may be decoded by the decoder 904. More specifically, the external interface 909 also has a role of transmission means of the television device 900 receiving the encoded bit stream in which images are encoded.

The control unit 910 has a memory such as a processor for a CPU and the like, and a RAM and a ROM. The memory stores, e.g., programs executed by the CPU, program data, EPG data, and data obtained via the network. The program stored in the memory may be, for example, read and executed by the CPU when the television device 900 is activated. The CPU executes the program to control operation of the television device 900 in accordance with operation signal received from the user interface 911, for example.

The user interface 911 is connected to the control unit 910. The user interface 911 includes, e.g., buttons and switches with which the user operates the television device 900, and a reception unit for receiving a remote control signal. The user interface 911 generates an operation signal by detecting user's operation via these constituent elements, and outputs the generated operation signal to the control unit 910.

The bus 912 connects the tuner 902, the demultiplexer 903, the decoder 904, the video signal processing unit 905, the audio signal processing unit 907, the external interface 909, and the control unit 910 with each other.

In the television device 900 configured as described above, the decoder 904 has a function of an image decoding device 200 (Fig. 10) according to the embodiments explained above. Therefore, decoder 904 sets new quantization parameter for each CU for the CU at the head of the slice for which the difference value delta QP is not transmitted. Therefore, the television device 900 can correctly perform the decoding processing so as to ensure independence of processing for each slice, and can perform decoding processing more efficiently.

<8. Eighth embodiment>

[Portable telephone]

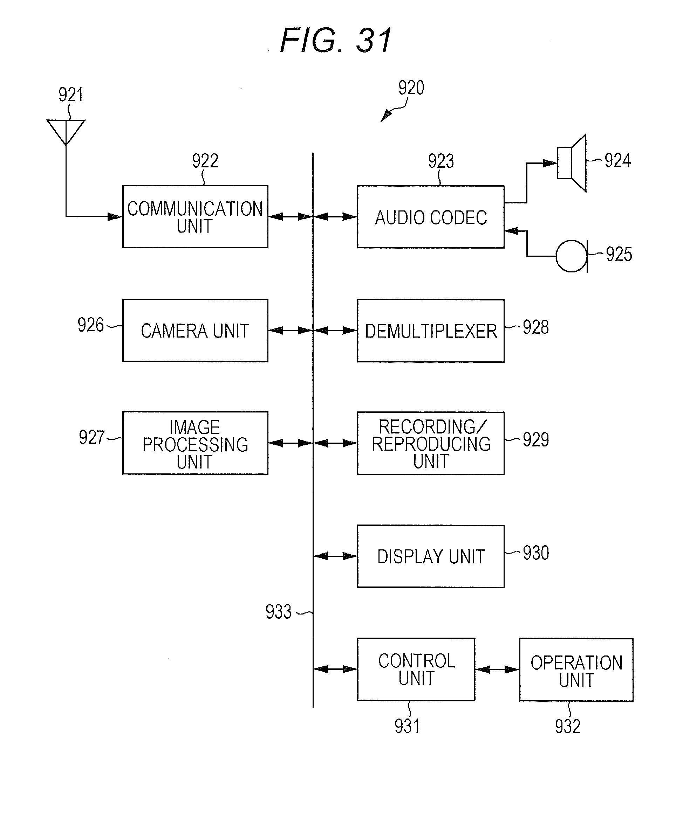

Fig. 31 illustrates an example of schematic configuration illustrating a cellular phone to which the above embodiments are applied. The cellular phone 920 includes an antenna 921, a communication unit 922, an audio codec 923, speaker 924, a microphone 925, a camera unit 926, an image processing unit 927, a demultiplexer 928, a recording/reproducing unit 929, a display unit 930, a control unit 931, an operation unit 932, and a bus 933.

The antenna 921 is connected to the communication unit 922. The speaker 924 and the microphone 925 are connected to the audio codec 923. The operation unit 932 is connected to the control unit 931. The bus 933 connects the communication unit 922, the audio codec 923, the camera unit 926, the image processing unit 927, the demultiplexer 928, the recording/reproducing unit 929, the display unit 930, and the control unit 931 with each other.

The cellular phone 920 performs operation such as transmission/reception of audio signals, transmission/reception of e-mails or image data, capturing images, and recording data in various kinds of modes including audio phone call mode, data communication mode, shooting mode, and video call mode.

In the audio phone call mode, an analog audio signal generated by the microphone 925 is provided to the audio codec 923. The audio codec 923 converts an analog audio signal into audio data, performs A/D conversion on the converted audio data, and compresses the audio data. Then, the audio codec 923 outputs the compressed audio data to the communication unit 922. The communication unit 922 encodes and modulates the audio data, and generates a transmission signal. Then, the communication unit 922 transmits the generated transmission signal to the base station (not illustrated) through the antenna 921. Also, the communication unit 922 amplifies the wireless signal received through the antenna 921 and applies the frequency conversion to the same to obtain the reception signal. Then, the communication unit 922 generates audio data by demodulating and decoding a reception signal, and outputs the generated audio data to the audio codec 923. The audio codec 923 decompresses the audio data, performs D/A conversion, and generates an analog audio signal. Then, the audio codec 923 supplies the generated voice signal to the speaker 924 to output the voice.

In the data communication mode, for example, the control unit 931 generates text data constituting an e-mail in accordance given with user's operation with operation unit 932. The control unit 931 displays characters on the display unit 930. The control unit 931 generates e-mail data in accordance with user's transmission instruction given with the operation unit 932, and outputs the generated e-mail data to the communication unit 922. The communication unit 922 encodes and modulates e-mail data, and generates a transmission signal. Then, the communication unit 922 transmits the generated transmission signal to a base station (not illustrated) through the antenna 921. Also, the communication unit 922 amplifies the wireless signal received through the antenna 921 and applies the frequency conversion to the same to obtain the reception signal. Then, the communication unit 922 restores e-mail data by demodulating and decoding the reception signal, and outputs the restored e-mail data to the control unit 931. The control unit 931 displays the contents of the e-mail on the display unit 930, and stores the e-mail data to the recording medium of the recording/reproducing unit 929.

The recording/reproducing unit 929 has any given recording medium that can be read and written. For example, the recording medium may be an internal recording medium such as a RAM or a flash memory, and may be an externally-attached recording medium such as a hard disk, a magnetic disk, a magneto-optical disk, an optical disk, a USB memory, or a memory card.

In the shooting mode, for example, the camera unit 926 captures an image of a subject, generates image data, and outputs the generated image data to the image processing unit 927. The image processing unit 927 encodes the image data received from the camera unit 926, and records the encoded bit stream to the recording medium of the recording/reproducing unit 929.

In the video call mode, for example, the demultiplexer 928 multiplexes the video stream encoded by the image processing unit 927 and the audio stream received from the audio codec 923, and outputs the multiplexed stream to the communication unit 922. The communication unit 922 encodes and modulates the stream, and generates a transmission signal. Then, the communication unit 922 transmits the generated transmission signal to the base station (not illustrated) through the antenna 921. Also, the communication unit 922 amplifies the wireless signal received through the antenna 921 and applies the frequency conversion to the same to obtain the reception signal. The transmission signal and the reception signal may include an encoded bit stream. Then, the communication unit 922 restores the stream by demodulating and decoding the reception signal, and outputs the restored stream to the demultiplexer 928. The demultiplexer 928 separates the video stream and the audio stream from the received stream, and outputs the video stream to the image processing unit 927 and the audio stream to the audio codec 923. The image processing unit 927 decodes the video stream, and generates video data. The video data are provided to the display unit 930, and the display unit 930 displays a series of images. The audio codec 923 decompresses the audio stream, performs D/A conversion, and generates an analog audio signal. Then, the audio codec 923 supplies the generated voice signal to the speaker 924 to output the voice.

In the cellular phone 920 configured as described above, the image processing unit 927 has the function of the image coding device 100 (Fig. 1) and the function of the image decoding device 200 (Fig. 10) according to the embodiments explained above. Therefore, for an image encoded and decoded by the cellular phone 920, the image processing unit 927 sets new quantization parameter for each CU for the CU at the head of the slice for which new quantization parameter for each CU is not set. Therefore, the cellular phone 920 can correctly perform the coding processing and the decoding processing so as to ensure independence of processing for each slice, and can perform coding and decoding processing more efficiently.

Although it has been described above as the cellular phone 920, the image coding device and the image decoding device to which the present technology is applied may be applied to any device having an imaging function and a communication function similar to those of the cellular phone 920 such as a PDA (Personal Digital Assistants), a smartphone, a UMPC (Ultra Mobile Personal Computer), a netbook, and a notebook computer, for example, as in the case of the cellular phone 920.

<9. Ninth embodiment>

[Recording/reproducing device]

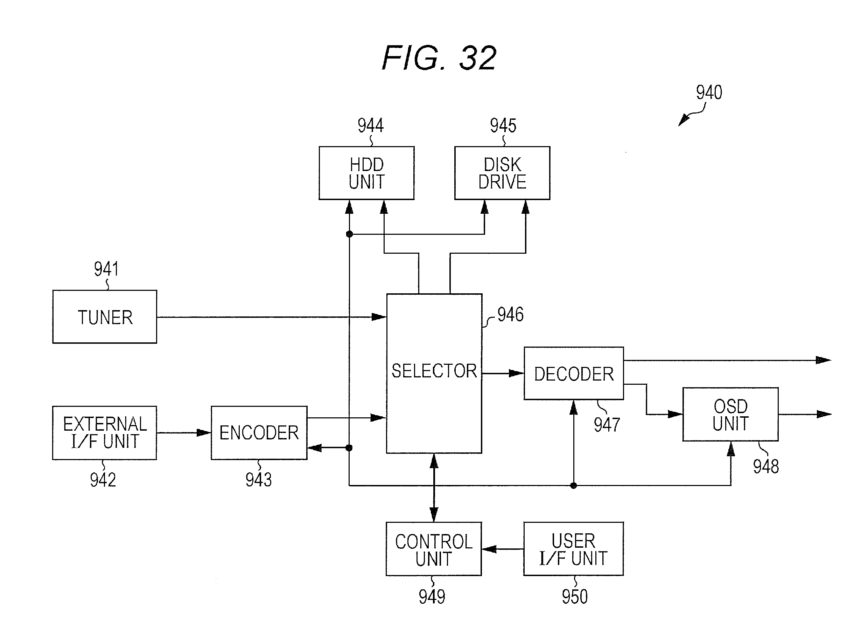

Fig. 32 illustrates an example of schematic configuration illustrating a recording/reproducing device to which the above embodiments are applied. For example, the recording/reproducing device 940 encodes the audio data and the video data of received broadcasting program, and records them to the recording medium. For example, the recording/reproducing device 940 may encode the audio data and the video data of obtained from another device, and may record them to the recording medium. For example, the recording/reproducing device 940 reproduces the data recorded on the recording medium using the monitor and the speaker in accordance with user's instruction. At this occasion, the recording/reproducing device 940 decodes the audio data and the video data.

The recording/reproducing device 940 includes a tuner 941, an external interface 942, an encoder 943, an HDD (Hard Disk Drive) 944, a disk drive 945, a selector 946, a decoder 947, an OSD (On-Screen Display) 948, a control unit 949, and a user interface 950.

The tuner 941 extracts a signal of a desired channel from a broadcasting signal received via an antenna (not shown), and demodulates the extracted signal. Then, the tuner 941 outputs the encoded bit stream obtained from demodulation to the selector 946. That is, the tuner 941 serves as the transmitting unit in the recording/reproducing device 940.

The external interface 942 is an interface for connection between the recording/reproducing device 940 and external device or network. The external interface 942 may be, for example, an IEEE1394 interface, a network interface, a USB interface, a flash memory interface, or the like. For example, the video data and audio data received via the external interface 942 are input into the encoder 943. That is, the external interface 942 serves as the transmitting unit in the recording/reproducing device 940.

When the video data and the audio data received from the external interface 942 are not encoded, the encoder 943 encodes the video data and the audio data. Then, the encoder 943 outputs the encoded bit stream to the selector 946.

The HDD 944 records, within the internal hard disk, the encoded bit stream obtained by compressing the content data such as video and audio and, various kinds of programs, and other data. When the video and audio are reproduced, the HDD 944 reads the data from the hard disk.

The disk drive 945 records and reads data to/from the recording medium loaded. The recording medium loaded to the disk drive 945 may be, for example, a DVD disk (DVD-Video, DVD-RAM, DVD-R, DVD-RW, DVD+R, DVD+RW, and the like) or Blu-ray (registered trademark) disk.

When the video and audio are recorded, the selector 946 selects the encoded bit stream received from the tuner 941 or the encoder 943, and outputs the selected encoded bit stream to the HDD 944 or the disk drive 945. When the video and audio are reproduced, the selector 946 outputs the encoded bit stream received from the HDD 944 or the disk drive 945 to the decoder 947.

The decoder 947 decodes the encoded bit stream, and generates video data and audio data. Then, the decoder 947 outputs the generated video data to an OSD 948. The decoder 904 outputs the generated audio data to an external speaker.

The OSD 948 reproduces the video data received from the decoder 947, and displays video. The OSD 948 may overlays images of GUI such as menu, buttons, or cursor, on the displayed video.

The control unit 949 has a memory such as a processor for a CPU and the like, and a RAM and a ROM. The memory stores the program executed by the CPU and the program data. The program stored in the memory may be, for example, read and executed by the CPU when the recording/reproducing device 940 is activated. The CPU executes the program to control operation of the recording/reproducing device 940 in accordance with operation signal received from the user interface 950, for example.

The user interface 950 is connected to the control unit 949. The user interface 950 includes, e.g., buttons and switches with which the user operates the recording/reproducing device 940, and a reception unit for receiving a remote control signal. The user interface 950 generates an operation signal by detecting user's operation via these constituent elements, and outputs the generated operation signal to the control unit 949.

In the recording/reproducing device 940 configured as described above, the encoder 943 has a function of the image coding device 100 (Fig. 1) according to the above embodiment. The decoder 947 has a function of an image decoding device 200 (Fig. 10) according to the embodiments explained above. Therefore, for an image encoded and decoded by the recording/reproducing device 940, the encoder 943 and the decoder 947 set new quantization parameter for each CU for the CU at the head of the slice for which new quantization parameter for each CU is not set. Therefore, the recording/reproducing device 940 can correctly perform the coding processing and the decoding processing so as to ensure independence of processing for each slice, and can perform coding and decoding processing more efficiently.

<10. Tenth embodiment>

[Image-capturing device]

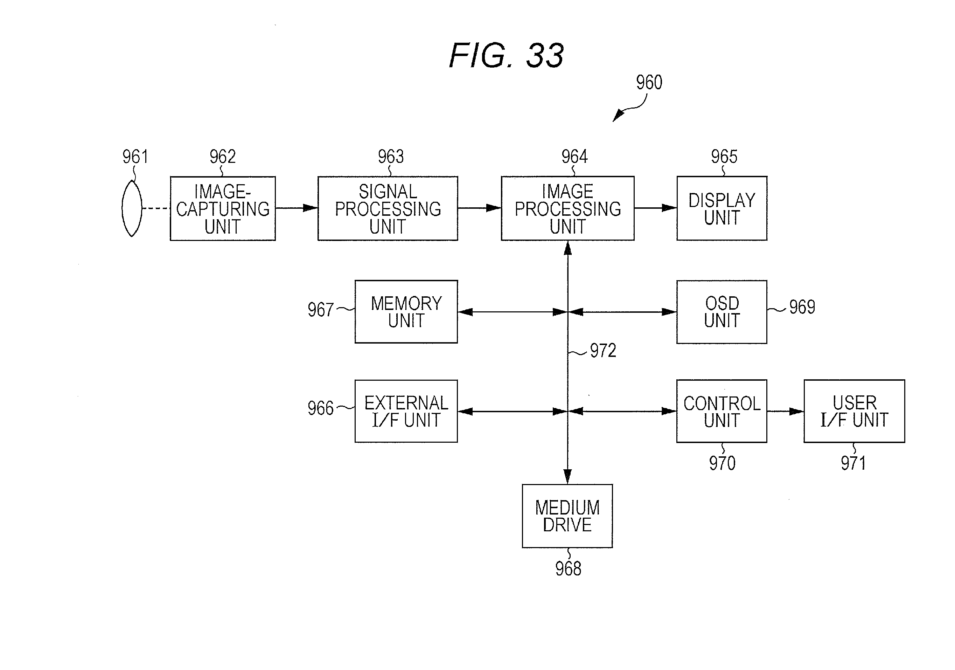

Fig. 33 illustrates an example of schematic configuration illustrating an image-capturing device to which the above embodiments are applied. An image-capturing device 960 captures an image of a subject, generates image data, and records the image data to a recording medium.

The image-capturing device 960 includes an optical block 961, an image-capturing unit 962, a signal processing unit 963, an image processing unit 964, a display unit 965, an external interface 966, a memory 967, a medium drive 968, an OSD 969, a control unit 970, a user interface 971, and a bus 972.

The optical block 961 is connected the image-capturing unit 962. The image-capturing unit 962 is connected to the signal processing unit 963. The display unit 965 is connected to the image processing unit 964. The user interface 971 is connected to the control unit 970. The bus 972 connects the image processing unit 964, the external interface 966, the memory 967, the medium drive 968, the OSD 969, and the control unit 970 with each other.

The optical block 961 includes a focus lens and a diaphragm mechanism. The optical block 961 causes an optical image of a subject to be formed on an image-capturing surface of the image-capturing unit 962. The image-capturing unit 962 includes an image sensor such as a CCD or a CMOS, and converts the optical image formed on the image-capturing surface into an image signal which is an electric signal by photoelectric conversion. Then, the image-capturing unit 962 outputs the image signal to the signal processing unit 963.

The signal processing unit 963 performs various kinds of camera signal processing such as knee correction, gamma correction, and color correction on an image signal received from the image-capturing unit 962. The signal processing unit 963 outputs the image data which have been subjected to the camera signal processing to the image processing unit 964.

The image processing unit 964 encodes the image data received from the signal processing unit 963, and generates coded data. Then, the image processing unit 964 outputs the generated coded data to the external interface 966 or the medium drive 968. The image processing unit 964 decodes the coded data received from the external interface 966 or the medium drive 968, and generates image data. Then, the image processing unit 964 outputs the generated image data to the display unit 965. The image processing unit 964 may output the image data received from the signal processing unit 963 to the display unit 965, and may display the image thereon. The image processing unit 964 may also overlay display data obtained from the OSD 969 on the image which is to be output to the display unit 965.

For example, the OSD 969 may generate images of GUI such as menu, buttons, or cursor, and output the generated image to the image processing unit 964.

The external interface 966 is configured as, for example, a USB input/output terminal. The external interface 966 connects the image-capturing device 960 and a printer during printing of an image, for example. The external interface 966 is connected to a drive, as necessary. In the drive, for example, a removable medium such as a magnetic disk or an optical disk may be loaded. A program which is read from the removable medium may be installed to the image-capturing device 960. Further, the external interface 966 may be configured as a network interface connected to a network such as a LAN or the Internet. That is, the external interface 966 serves as the transmitting unit in the image-capturing device 960.

The recording medium loaded to the medium drive 968 may be any given removable medium which can be read and written, such as a magnetic disk, an optical magnetic disk, an optical disk, or a semiconductor memory. The recording medium loaded to the medium drive 968 in a fixed manner, and, for example, a non-removable storage unit such as an internal hard disk drive or SSD (Solid State Drive) may be configured.

The control unit 970 has a memory such as a processor for a CPU and the like, and a RAM and a ROM. The memory stores the program executed by the CPU and the program data. The program stored in the memory may be, for example, read and executed by the CPU when the image-capturing device 960 is activated. The CPU executes the program to control operation of the image-capturing device 960 in accordance with operation signal received from the user interface 971, for example.

The user interface 971 is connected to the control unit 970. The user interface 971 includes, e.g., buttons and switches with which the user operates the image-capturing device 960. The user interface 971 generates an operation signal by detecting user's operation via these constituent elements, and outputs the generated operation signal to the control unit 970.

In the image-capturing device 960 configured as described above, the image processing unit 964 has the function of the image coding device 100 (Fig. 1) and the function of the image decoding device 200 (Fig. 10) according to the embodiments explained above. Therefore, for an image encoded and decoded by the image-capturing device 960, the image processing unit 964 sets new quantization parameter for each CU for the CU at the head of the slice for which new quantization parameter for each CU is not set. Therefore, the image-capturing device 960 can correctly perform the coding processing and the decoding processing so as to ensure independence of processing for each slice, and can perform coding and decoding processing more efficiently.

It goes without saying that the image coding device and the image decoding device to which the present technology is applied may be applied to the device and system other than the above-described device.

Meanwhile, an example in which the quantization parameter is transmitted from the coding side to the decoding side has been described in this specification. It is possible that a method of transmitting a quantization matrix parameter is transmitted or recorded as separate data associated with the coded bit stream instead of being multiplexed with the coded bit stream. In this case, the term "associated" means that the image included in the bit stream (which may be a part of image such as slice or block) and information corresponding to the image is linked during decoding. More specifically, the information may be transmitted through a transmission path which is separate from the image (or bit stream). The information may be recorded to another recording medium which is different from the image (or bit stream) (or another recording area of the same recording medium). Further, the information and the image (or bit stream) may be associated with each other in any given unit such as multiple frames, a frame, or a portion of a frame.

Although preferred embodiments of this disclosure have been described in detail with reference to the attached drawings, the technical scope of this disclosure is not limited to such examples. It is clear that one skilled in the art of this disclosure may conceive of various modifications and corrections within the scope of the technical idea recited in claims and it is understood that they also naturally belong to the technical scope of this disclosure.

It should be noted that this technique can also be configured as follows.

(1) An image processing device for coding an image with a unit having a hierarchical structure, the image processing device including:

a coding-unit setting unit configured to set a size of a coding unit indicating granularity of a slice border to a size equal to or more than a minimum size of a coding unit for setting a quantization parameter;
a quantization parameter setting unit configured to set the quantization parameter for the coding unit in accordance with the size of the coding unit set by the coding-unit setting unit;
a quantization unit configured to quantize coefficient data of the image using the quantization parameter that is set by the quantization parameter setting unit; and
an encoding unit configured to generate encoded stream by coding the coefficient data that are quantized by the quantization unit.

(2) The image processing device according to (1), wherein the coding-unit setting unit sets, as a setting condition, a condition that the size of the coding unit indicating the granularity of the slice border is equal to or more than the minimum size of the coding unit for setting the quantization parameter.

(3) The image processing device according to (2), wherein the coding-unit setting unit limits the size of the coding unit indicating the granularity of the slice border to a size equal to or more than the minimum size of the coding unit for setting the quantization parameter.

(4) The image processing device according to (3) further including:

an identification information setting unit configured to set limitation identification information for identifying that the size of the coding unit indicating the granularity of the slice border is to be limited to a size equal to or more than the minimum size of the coding unit for setting the quantization parameter; and
a transmission unit configured to transmit limitation identification information that is set by the identification information setting unit and an encoded stream that is generated by the encoding unit.

(5) The image processing device according to (3) or (4), wherein the coding-unit setting unit uses a parameter indicating the granularity of the border of the slice and a parameter indicating the minimum size of the coding unit for setting the quantization parameter to set the setting condition.

(6) The image processing device according to (5) further including a transmission unit for transmitting the parameter indicating the granularity of the border of the slice that is set by the coding-unit setting unit and the encoded stream generated by the encoding unit.

(7) The image processing device according to (6), wherein the transmission unit transmits a parameter indicating the minimum size of the coding unit for setting the quantization parameter.

(8) An image processing method for an image processing device for coding an image with a unit having a hierarchical structure,

wherein the image processing device sets a size of a coding unit indicating granularity of a slice border to a size equal to or more than a minimum size of a coding unit for setting a quantization parameter;

the image processing device sets the quantization parameter for the coding unit in accordance with the size of the coding unit that is set;

the image processing device quantizes coefficient data of the image using the quantization parameter that is set; and

the image processing device generates encoded stream by coding the coefficient data that are quantized by the quantization unit.

(9) An image processing device for decoding an image encoded with a unit having a hierarchical structure, the image processing device including:

 a decoding unit configured to decode an encoded stream obtained by coding coefficient data of the image quantized;

 a reception unit configured to receive a size of a coding unit indicating granularity of a slice border that is set to be equal to or more than a minimum size of a coding unit for setting a quantization parameter;

 a quantization parameter setting unit configured to set the quantization parameter for the coding unit in accordance with the size of the coding unit received by the reception unit; and

 an inverse-quantization unit configured to obtain the coefficient data of the image by performing inverse-quantization on the coefficient data of the image quantized that is obtained by the decoding unit, using the quantization parameter that is set by the quantization parameter setting unit.

(10) The image processing device according to (9), wherein the reception unit receives a condition that the size of the coding unit indicating the granularity of the slice border is equal to or more than the minimum size of the coding unit for setting the quantization parameter that is set as a setting condition.

(11) The image processing device according to (10), wherein the reception unit receives the size of the coding unit indicating the granularity of the slice border, which is limited to be equal to or more than the minimum size of the coding unit for setting the quantization parameter.

(12) The image processing device according to (11), wherein the reception unit further receives limitation identification information for identifying that the size of the coding unit indicating the granularity of the slice border is limited to be equal to or more than the minimum size of the coding unit for setting the quantization parameter.

(13) The image processing device according to (11) or (12), wherein the reception unit uses a parameter indicating the granularity of the border of the slice and a parameter indicating the minimum size of the coding unit for setting the quantization parameter to receive the setting condition that has been set.

(14) The image processing device according to (13), wherein the reception unit receives the parameter indicating the granularity of the border of the slice and the encoded stream.

(15) The image processing device according to (14), wherein the reception unit receives the parameter indicating the minimum size of the coding unit for setting the quantization parameter.

(16) An image processing method for an image processing device for decoding an image encoded with a unit having a hierarchical structure,

wherein the image processing device decodes an encoded stream obtained by coding coefficient data of the image quantized;

the image processing device receives a size of a coding unit indicating granularity of a slice border that is set to be equal to or more than a minimum size of a coding unit for setting a quantization parameter;

the image processing device sets the quantization parameter for the coding unit in accordance with the size of the coding unit; and

the image processing device obtains the coefficient data of the image by performing inverse-quantization on the coefficient data of the image quantized, using the quantization parameter that is set.

(17) An image processing device for coding an image with a unit having a hierarchical structure, including:

 a coding-unit setting unit configured to set a minimum size of a coding unit for setting a quantization parameter to a size equal to or more than a minimum size of a transform unit;

 a quantization parameter setting unit configured to set the quantization parameter for the coding unit in accordance with the size of the coding unit set by the coding-unit setting unit;

 a quantization unit configured to quantize coefficient data of the image using the quantization parameter that is set by the quantization parameter setting unit; and

 an encoding unit configured to generate encoded stream by coding the coefficient data that are quantized by the quantization unit.

(18) An image processing method for an image processing device for coding an image with a unit having a hierarchical structure,
wherein the image processing device sets a minimum size of a coding unit for setting a quantization parameter to a size equal to or more than a minimum size of a transform unit;
the image processing device sets a the quantization parameter for the coding unit in accordance with the size of the coding unit that is set;
the image processing device quantizes coefficient data of the image using the quantization parameter that is set; and
the image processing device generates encoded stream by coding the coefficient data that are quantized.

(19) An image processing device for decoding an image encoded with a unit having a hierarchical structure, including:

a decoding unit configured to decode an encoded stream obtained by coding coefficient data of the image quantized;

a reception unit configured to receive a size of a coding unit indicating granularity of a slice border that is set to be equal to or more than a minimum size of a transform unit;

a quantization parameter setting unit configured to set the quantization parameter for the coding unit in accordance with the size of the coding unit received by the reception unit; and

an inverse-quantization unit configured to obtain the coefficient data of the image by performing inverse-quantization on the coefficient data of the image quantized that is obtained by the decoding unit, using the quantization parameter that is set by the quantization parameter setting unit.

(20) An image processing method for an image processing device for decoding an image encoded with a unit having a hierarchical structure,
wherein the image processing device decodes an encoded stream obtained by coding coefficient data of the image quantized;
the image processing device receives a size of a coding unit indicating granularity of a slice border that is set to be equal to or more than a minimum size of a transform unit;
the image processing device sets the quantization parameter for the coding unit in accordance with the size of the coding unit received; and
the image processing device obtains the coefficient data of the image by performing inverse-quantization on the coefficient data of the image quantized, using the quantization parameter that is set.

REFERENCE SIGNS LIST

| 100 | Image coding device |
|---|---|
| 105 | Quantization unit |
| 108 | Inverse-quantization unit |
| 121 | Quantization setting unit |
| 154 | Focused CUQP setting unit |
| 191 | Focused CU determination unit |
| 192 | QP selection unit |
| 200 | Image decoding device |
| 203 | Inverse-quantization unit |
| 221 | Inverse-quantization setting unit |
| 234 | CUQP restructuring unit |
| 261 | Focused CU determination unit |
| 262 | QP selection unit |
| 263 | CUQP generation unit |
| 351 | Parameter setting unit |
| 361 | Slice border granularity setting unit |
| 362 | QP transmission unit setting unit |
| 434 | CUQP restructuring unit |
| 461 | Focused CU determination unit |
| 462 | QP selection unit |
| 463 | CUQP generation unit |

**Claims**

1.  An image processing device for coding an image with a unit having a hierarchical structure, the image processing device comprising:

    a coding-unit setting unit configured to set a size of a coding unit indicating granularity of a slice border to a size equal to or more than a minimum size of a coding unit for setting a quantization parameter;
    a quantization parameter setting unit configured to set the quantization parameter for the coding unit in accordance with the size of the coding unit set by the coding-unit setting unit;
    a quantization unit configured to quantize coefficient data of the image using the quantization parameter that is set by the quantization parameter setting unit; and
    an encoding unit configured to generate encoded stream by coding the coefficient data that are quantized by the quantization unit.

2.  The image processing device according to claim 1, wherein the coding-unit setting unit sets, as a setting condition, a condition that the size of the coding unit indicating the granularity of the slice border is equal to or more than the minimum size of the coding unit for setting the quantization parameter.

3.  The image processing device according to claim 2, wherein the coding-unit setting unit limits the size of the coding unit indicating the granularity of the slice border to a size equal to or more than the minimum size of the coding unit for setting the quantization parameter.

4.  The image processing device according to claim 3 further comprising:

    an identification information setting unit configured to set limitation identification information for identifying that the size of the coding unit indicating the granularity of the slice border is to be limited to a size equal to or more than the minimum size of the coding unit for setting the quantization parameter; and
    a transmission unit configured to transmit limitation identification information that is set by the identification information setting unit and an encoded stream that is generated by the encoding unit.

5.  The image processing device according to claim 3, wherein the coding-unit setting unit uses a parameter indicating the granularity of the border of the slice and a parameter indicating the minimum size of the coding unit for setting the quantization parameter to set the setting condition.

6.  The image processing device according to claim 5 further comprising a transmission unit for transmitting the parameter indicating the granularity of the border of the slice that is set by the coding-unit setting unit and the encoded stream generated by the encoding unit.

7.  The image processing device according to claim 6, wherein the transmission unit transmits a parameter indicating the minimum size of the coding unit for setting the quantization parameter.

8.  An image processing method for an image processing device for coding an image with a unit having a hierarchical structure,
    wherein the image processing device sets a size of a coding unit indicating granularity of a slice border to a size equal to or more than a minimum size of a coding unit for setting a quantization parameter;
    the image processing device sets the quantization parameter for the coding unit in accordance with the size of the coding unit that is set;
    the image processing device quantizes coefficient data of the image using the quantization parameter that is set; and
    the image processing device generates encoded stream by coding the coefficient data that are quantized by the quantization unit.

9.  An image processing device for decoding an image encoded with a unit having a hierarchical structure, the image processing device comprising:

    a decoding unit configured to decode an encoded stream obtained by coding coefficient data of the image quantized;
    a reception unit configured to receive a size of a coding unit indicating granularity of a slice border that is set to be equal to or more than a minimum size of a coding unit for setting a quantization parameter;

a quantization parameter setting unit configured to set the quantization parameter for the coding unit in accordance with the size of the coding unit received by the reception unit; and

an inverse-quantization unit configured to obtain the coefficient data of the image by performing inverse-quantization on the coefficient data of the image quantized that is obtained by the decoding unit, using the quantization parameter that is set by the quantization parameter setting unit.

10. The image processing device according to claim 9, wherein the reception unit receives a condition that the size of the coding unit indicating the granularity of the slice border is equal to or more than the minimum size of the coding unit for setting the quantization parameter that is set as a setting condition.

11. The image processing device according to claim 10, wherein the reception unit receives the size of the coding unit indicating the granularity of the slice border, which is limited to be equal to or more than the minimum size of the coding unit for setting the quantization parameter.

12. The image processing device according to claim 11, wherein the reception unit further receives limitation identification information for identifying that the size of the coding unit indicating the granularity of the slice border is limited to be equal to or more than the minimum size of the coding unit for setting the quantization parameter.

13. The image processing device according to claim 11, wherein the reception unit uses a parameter indicating the granularity of the border of the slice and a parameter indicating the minimum size of the coding unit for setting the quantization parameter to receive the setting condition that has been set.

14. The image processing device according to claim 13, wherein the reception unit receives the parameter indicating the granularity of the border of the slice and the encoded stream.

15. The image processing device according to claim 14, wherein the reception unit receives the parameter indicating the minimum size of the coding unit for setting the quantization parameter.

16. An image processing method for an image processing device for decoding an image encoded with a unit having a hierarchical structure,

wherein the image processing device decodes an encoded stream obtained by coding coefficient data of the image quantized;

the image processing device receives a size of a coding unit indicating granularity of a slice border that is set to be equal to or more than a minimum size of a coding unit for setting a quantization parameter;

the image processing device sets the quantization parameter for the coding unit in accordance with the size of the coding unit; and

the image processing device obtains the coefficient data of the image by performing inverse-quantization on the coefficient data of the image quantized, using the quantization parameter that is set.

17. An image processing device for coding an image with a unit having a hierarchical structure, comprising:

a coding-unit setting unit configured to set a minimum size of a coding unit for setting a quantization parameter to a size equal to or more than a minimum size of a transform unit;

a quantization parameter setting unit configured to set the quantization parameter for the coding unit in accordance with the size of the coding unit set by the coding-unit setting unit;

a quantization unit configured to quantize coefficient data of the image using the quantization parameter that is set by the quantization parameter setting unit; and

an encoding unit configured to generate encoded stream by coding the coefficient data that are quantized by the quantization unit.

18. An image processing method for an image processing device for coding an image with a unit having a hierarchical structure, wherein the image processing device sets a minimum size of a coding unit for setting a quantization parameter to a size equal to or more than a minimum size of a transform unit;

the image processing device sets a the quantization parameter for the coding unit in accordance with the size of the coding unit that is set;

the image processing device quantizes coefficient data of the image using the quantization parameter that is set; and

the image processing device generates encoded stream by coding the coefficient data that are quantized.

19. An image processing device for decoding an image encoded with a unit having a hierarchical structure, comprising:

    a decoding unit configured to decode an encoded stream obtained by coding coefficient data of the image quantized;

    a reception unit configured to receive a size of a coding unit indicating granularity of a slice border that is set to be equal to or more than a minimum size of a transform unit;

    a quantization parameter setting unit configured to set the quantization parameter for the coding unit in accordance with the size of the coding unit received by the reception unit; and

    an inverse-quantization unit configured to obtain the coefficient data of the image by performing inverse-quantization on the coefficient data of the image quantized that is obtained by the decoding unit, using the quantization parameter that is set by the quantization parameter setting unit.

20. An image processing method for an image processing device for decoding an image encoded with a unit having a hierarchical structure,

    wherein the image processing device decodes an encoded stream obtained by coding coefficient data of the image quantized;

    the image processing device receives a size of a coding unit indicating granularity of a slice border that is set to be equal to or more than a minimum size of a transform unit;

    the image processing device sets the quantization parameter for the coding unit in accordance with the size of the coding unit received; and

    the image processing device obtains the coefficient data of the image by performing inverse-quantization on the coefficient data of the image quantized, using the quantization parameter that is set.

FIG. 1

EP 2 763 412 A1

# FIG. 2

Largest Coding Unit

Depth=0, N=64

split flag=0    split flag=1

2N    $CU_0$

| 0 | 1 |
| 2 | 3 |

2N

Depth=1, N=32

split flag=0    split flag=1

2N    $CU_1$

| 0 | 1 |
| 2 | 3 |

2N

Smallest Coding Unit    Depth=4, N=4

Last depth: No split flag

2N    $CU_4$

2N

# FIG. 3

| pic_parameter_set_rbsp( ) { | Descriptor |
|---|---|
| pic_parameter_set_id | ue(v) |
| seq_parameter_set_id | ue(v) |
| entropy_coding_mode_flag | u(1) |
| num_temporal_layer_switching_point_flags | ue(v) |
| for( i = 0; i < num_temporal_layer_switching_point_flags; i++ ) | |
| tempora l_layer_switching_point_flag [ i ] | u(1) |
| num_ref_idx_l0_default_active_minus1 | ue(v) |
| num_ref_idx_l1_default_active_minus1 | ue(v) |
| pic_init_qp_minus26 /* relative to 26 */ | se(v) |
| constrained_intra_pred_flag | u(1) |
| slice_granularity | u(2) |
| shared_pps_info_enabled_flag | u(1) |
| if( shared_pps_info_enabled_flag ) | |
| if( adaptive_loop_filter_enabled_flag ) | |
| alf_param ( ) | |
| if( cu_qp_delta_enabled_flag ) | |
| max_cu_qp_delta_depth | u(4) |
| rbsp_trailing_bits( ) | |
| } | |

# FIG. 4

| slice_header( ) { | Descriptor |
|---|---|
| lightweig ht_slice_flag | u(1) |
| if( !lightweight_slice_flag ) { | |
| slice_type | ue(v) |
| pic_parameter_set_id | ue(v) |
| frame_num | u(v) |
| if( IdrPicFlag ) | |
| idr_pic_id | ue(v) |
| if( pic_order_cnt_type  = = 0 ) | |
| pic_order_cnt_lsb /* | u(v) |
| if( slice_type  = =    P || slice_type  = = B ) { | |
| num_ref_idx_active_override_flag | u(1) |
| if( num_ref_idx_active_override_flag ) { | |
| num_ref_idx_l0_active_minus1 | ue(v) |
| if( slice_type  = = B ) | |
| num_ref_idx_l1_active_minus1 | ue(v) |
| } | |
| } | |
| ref_pic_list_modification( ) | |
| ref_pic_list_combination( ) | |
| if( nal_ref_idc != 0 ) | |
| dec_ref_pic_marking(  ) | |
| } | |
| if( entropy_coding_mode_flag && slice_type != I) | |
| cabac_init_idc | ue(v) |
| first_slice_in_pic_flag | u(1) |
| if( first_slice_in_pic_flag = = 0 ) | |
| slice_address | u(v) |
| if( !lightweight_slice_flag ) { | |
| slice_qp_delta | se(v) |
| if( sample_adaptive_offset_enabled_flag ) | |
| sao_param() | |
| if( deblocking_filter_control_present_flag ) { | |
| disable_deblocking_filter_idc | |
| if( disable_deb locking_filter_idc != 1 ) { | |
| slice_alpha_c0_offset_div2 | |
| slice_beta_offset_div2 | |
| } | |
| } | |
| if( slice_type = = B ) | |
| collocated_from_l0_flag | u(1) |
| if( adaptive_loop_filter_enabled_flag ) { | |
| if( !shared_pps_info_enabled_flag ) | |
| alf_param( ) | |
| alf_cu_control_param( ) | |
| } | |
| } | |
| } | |

# FIG. 5

FIG. 6

QUANTIZATION SETTING UNIT
121

PARAMETER SETTING UNIT
151

SLICE BORDER GRANULARITY SETTING UNIT — 161

QP TRANSMISSION UNIT SETTING UNIT — 162

117

PICTURE QP SETTING UNIT — 171

SLICE QP SETTING UNIT — 172

CUQP SETTING UNIT — 173

QP SETTING UNIT — 152

slice_granularity

slice_granularity

max_cu_qp_delta_depth

SliceQP

SliceQP

CUQP

SLICE ΔQP CALCULATION UNIT — 181

CU ΔQP CALCULATION UNIT — 182

ΔQP CALCULATION UNIT — 153

slice_granularity

pic_init_qp_minus 26

slice_qp_delta

deltaQP

106

slice_granularity

CUQP

max_cu_qp_delta_depth

max_cu_qp_delta_depth

slice_granularity

FOCUSED CU DETERMINATION UNIT — 191

QP SELECTION UNIT — 192

FOCUSED CUQP SETTING UNIT — 154

CU ADDRESS
102

FOCUSED CUQP

105    108

EP 2 763 412 A1

# FIG. 7

```
        ( START ENCODING PROCESSING )
                       │
                       ▼              S101
        ┌─────────────────────────────────┐
        │ MAKE SETTING OF QUANTIZATION     │
        └─────────────────────────────────┘
                       │
                       ▼              S102
        ┌─────────────────────────────────┐
        │        A/D CONVERSION            │
        └─────────────────────────────────┘
                       │
                       ▼              S103
        ┌─────────────────────────────────┐
        │             SORT                 │
        └─────────────────────────────────┘
                       │
                       ▼              S104
        ┌─────────────────────────────────┐
        │  PERFORM INTRA-PREDICTION        │
        │        PROCESSING                │
        └─────────────────────────────────┘
                       │
                       ▼              S105
        ┌─────────────────────────────────┐
        │  INTER-MOTION PREDICTION         │
        │        PROCESSING                │
        └─────────────────────────────────┘
                       │
                       ▼              S106
        ┌─────────────────────────────────┐
        │    SELECT PREDICTION IMAGE       │
        └─────────────────────────────────┘
                       │
                       ▼              S107
        ┌─────────────────────────────────┐
        │ CALCULATE DIFFERENCE BETWEEN     │
        │  IMAGE AND PREDICTION IMAGE      │
        └─────────────────────────────────┘
                       │
                       ▼              S108
        ┌─────────────────────────────────┐
        │   ORTHOGONAL TRANSFORMATION      │
        └─────────────────────────────────┘
                       │
                       ▼              S109
        ┌─────────────────────────────────┐
        │ MAKE SETTING OF QUANTIZATION     │
        └─────────────────────────────────┘
```

```
                       ▼              S110
        ┌─────────────────────────────────┐
        │        QUANTIZATION              │
        └─────────────────────────────────┘
                       │
                       ▼              S111
        ┌─────────────────────────────────┐
        │     INVERSE-QUANTIZATION         │
        └─────────────────────────────────┘
                       │
                       ▼              S112
        ┌─────────────────────────────────┐
        │   INVERSE-ORTHOGONAL             │
        │      TRANSFORMATION              │
        └─────────────────────────────────┘
                       │
                       ▼              S113
        ┌─────────────────────────────────┐
        │    ADD PREDICTION IMAGE          │
        └─────────────────────────────────┘
                       │
                       ▼              S114
        ┌─────────────────────────────────┐
        │   LOOP FILTER PROCESSING         │
        └─────────────────────────────────┘
                       │
                       ▼              S115
        ┌─────────────────────────────────┐
        │            STORE                 │
        └─────────────────────────────────┘
                       │
                       ▼              S116
        ┌─────────────────────────────────┐
        │   LOSSLESS ENCODING              │
        │      PROCESSING                  │
        └─────────────────────────────────┘
                       │
                       ▼              S117
        ┌─────────────────────────────────┐
        │        ACCUMULATE                │
        └─────────────────────────────────┘
                       │
                       ▼              S118
        ┌─────────────────────────────────┐
        │       CONTROL RATE               │
        └─────────────────────────────────┘
                       │
                       ▼
                   (   END   )
```

47

# FIG. 8

```
        ┌─────────────────────────────┐
        │   START QUANTIZATION        │
        │   SETTING PROCESSING        │
        └─────────────────────────────┘
                      │            S131
                      ▼
┌───────────────────────────────────────────────┐
│ SET GRANULARITY OF SLICE BORDER slice_granularity │
└───────────────────────────────────────────────┘
                      │            S132
                      ▼
┌───────────────────────────────────────────────┐
│           SET TRANSMISSION MINIMUM UNIT        │
│ max_cu_qp_delta_depth OF QUANTIZATION PARAMETER │
└───────────────────────────────────────────────┘
                      │            S133
                      ▼
┌───────────────────────────────────────────────┐
│      SET INFORMATION pic_init_qp_minus 26      │
│    OF QUANTIZATION PARAMETER OF PICTURE         │
└───────────────────────────────────────────────┘
                      │            S134
                      ▼
┌───────────────────────────────────────────────┐
│    TRANSMIT INFORMATION pic_init_qp_minus 26   │
│    OF QUANTIZATION PARAMETER OF PICTURE         │
└───────────────────────────────────────────────┘
                      │            S135
                      ▼
┌───────────────────────────────────────────────┐
│  SET QUANTIZATION PARAMETER SliceQP OF SLICE   │
└───────────────────────────────────────────────┘
                      │            S136
                      ▼
┌───────────────────────────────────────────────┐
│   CALCULATE DIFFERENCE VALUE slice_qp_delta    │
│ BETWEEN QUANTIZATION PARAMETER OF PICTURE      │
│    AND QUANTIZATION PARAMETER OF SLICE         │
└───────────────────────────────────────────────┘
                      │            S137
                      ▼
┌───────────────────────────────────────────────┐
│   TRANSMIT DIFFERENCE VALUE slice_qp_delta     │
│ BETWEEN QUANTIZATION PARAMETER OF PICTURE      │
│    AND QUANTIZATION PARAMETER OF SLICE         │
└───────────────────────────────────────────────┘
                      │
                      ▼
              ┌───────────────┐
              │    RETURN     │
              └───────────────┘
```

## FIG. 9

```
    ( START QUANTIZATION
      SETTING PROCESSING )
              |
              v                      S151
   +-------------------------+
   | SET QUANTIZATION        |
   | PARAMETER CUQP OF CU    |
   +-------------------------+
              |
              v                      S152
   < CU AT HEAD OF SLICE? >------No----------------------------+
              |Yes                                             |
              v                      S153                      |
   < SMALLER THAN TRANSMISSION MINIMUM >---No----+             |
     UNIT OF QUANTIZATION PARAMETER?             |             |
              |Yes              S154             |             |
   +-------------------------+                   |             |
   | SELECT QUANTIZATION     |                   |             |
   | PARAMETER OF SLICE AS   |                   |             |
   | QUANTIZATION PARAMETER  |                   |             |
   | OF FOCUSED CU           |                   |             |
   +-------------------------+                   |             |
              |                                  v    S155     |
              |          +-------------------------------+     |
              |          | SELECT QUANTIZATION PARAMETER |     |
              |          | OF CU AS QUANTIZATION         |     |
              |          | PARAMETER OF FOCUSED CU       |     |
              |          +-------------------------------+     |
              |                       |         S156           |
              |          +-------------------------------+     |
              |          | CALCULATE DIFFERENCE VALUE    |     |
              |          | deltaQP BETWEEN QUANTIZATION  |     |
              |          | PARAMETER OF SLICE AND        |     |
              |          | QUANTIZATION PARAMETER OF CU  |     |
              |          +-------------------------------+     |
              |                       |         S157           |
              |          +-------------------------------+     |
              |          | TRANSMIT DIFFERENCE VALUE     |     |
              |          | deltaQP BETWEEN QUANTIZATION  |     |
              |          | PARAMETER OF SLICE AND        |     |
              |          | QUANTIZATION PARAMETER OF CU  |     |
              |          +-------------------------------+     |
              |                       |                        v    S158
              |                       |       +----------------------------+
              |                       |       | SELECT QUANTIZATION        |
              |                       |       | PARAMETER OF CU AS         |
              |                       |       | QUANTIZATION PARAMETER     |
              |                       |       | OF FOCUSED CU              |
              |                       |       +----------------------------+
              |                       |                   |    S159
              |                       |       +----------------------------+
              |                       |       | CALCULATE DIFFERENCE VALUE |
              |                       |       | deltaQP BETWEEN QUANTIZATION|
              |                       |       | PARAMETER OF CU IMMEDIATELY|
              |                       |       | BEFORE AND QUANTIZATION    |
              |                       |       | PARAMETER OF FOCUSED CU    |
              |                       |       +----------------------------+
              |                       |                   |    S160
              |                       |       +----------------------------+
              |                       |       | TRANSMIT DIFFERENCE VALUE  |
              |                       |       | deltaQP BETWEEN QUANTIZATION|
              |                       |       | PARAMETER OF CU IMMEDIATELY|
              |                       |       | BEFORE AND QUANTIZATION    |
              |                       |       | PARAMETER OF FOCUSED CU    |
              |                       |       +----------------------------+
              |                       |                   |
              +-----------------------+-------------------+
              |
              v
        ( RETURN )
```

# FIG. 10

EP 2 763 412 A1

FIG. 11

# FIG. 12

```
              ┌──────────────────────────────┐
              │   START DECODING PROCESSING   │
              └──────────────────────────────┘
                            │
                            ▼
        ┌───────────────────────────────────────┐  S201
        │           ACCUMULATE IMAGE            │
        └───────────────────────────────────────┘
                            │
                            ▼
        ┌───────────────────────────────────────┐  S202
        │       LOSSLESS DECODING PROCESSING     │
        └───────────────────────────────────────┘
                            │
                            ▼
        ┌───────────────────────────────────────┐  S203
        │ INVERSE-QUANTIZATION SETTING PROCESSING│
        └───────────────────────────────────────┘
                            │
                            ▼
        ┌───────────────────────────────────────┐  S204
        │          INVERSE-QUANTIZATION          │
        └───────────────────────────────────────┘
                            │
                            ▼
        ┌───────────────────────────────────────┐  S205
        │    INVERSE-ORTHOGONAL TRANSFORMATION   │
        └───────────────────────────────────────┘
                            │
                            ▼
        ┌───────────────────────────────────────┐  S206
        │          PREDICTION PROCESSING         │
        └───────────────────────────────────────┘
                            │
                            ▼
        ┌───────────────────────────────────────┐  S207
        │           ADD PREDICTION IMAGE         │
        └───────────────────────────────────────┘
                            │
                            ▼
        ┌───────────────────────────────────────┐  S208
        │          LOOP FILTER PROCESSING        │
        └───────────────────────────────────────┘
                            │
                            ▼
        ┌───────────────────────────────────────┐  S209
        │                 SORT                   │
        └───────────────────────────────────────┘
                            │
                            ▼
        ┌───────────────────────────────────────┐  S210
        │             D/A CONVERSION             │
        └───────────────────────────────────────┘
                            │
                            ▼
        ┌───────────────────────────────────────┐  S211
        │                 STORE                  │
        └───────────────────────────────────────┘
                            │
                            ▼
              ┌──────────────────────────────┐
              │             END              │
              └──────────────────────────────┘
```

*FIG. 13*

START INVERSE-QUANTIZATION
SETTING PROCESSING

OBTAIN GRANULARITY OF SLICE BORDER
slice_granularity — S231

OBTAIN TRANSMISSION MINIMUM UNIT
max_cu_qp_delta_depth OF QUANTIZATION PARAMETER — S232

OBTAIN INFORMATION pic_init_qp_minus 26
ABOUT QUANTIZATION PARAMETER OF PICTURE — S233

OBTAIN DIFFERENCE VALUE slice_qp_delta
OF QUANTIZATION PARAMETER OF PICTURE
AND QUANTIZATION PARAMETER OF SLICE — S234

GENERATE QUANTIZATION
PARAMETER SliceQP OF SLICE — S235

OBTAIN INFORMATION deltaQP
ABOUT QUANTIZATION PARAMETER OF FOCUSED CU — S236

CU AT HEAD OF SLICE? — S237
No →

Yes ↓

SMALLER THAN TRANSMISSION MINIMUM UNIT
OF QUANTIZATION PARAMETER? — S238
No →

Yes ↓

SELECT QUANTIZATION PARAMETER SliceQP OF SLICE — S239

ADOPT QUANTIZATION PARAMETER SliceQP OF
SLICE AS QUANTIZATION PARAMETER OF FOCUSED CU — S240

SELECT SliceQP AND deltaQP — S241

USE SliceQP AND deltaQP TO
GENERATE QUANTIZATION
PARAMETER OF FOCUSED CU — S242

SELECT CUQP IMMEDIATELY
BEFORE AND deltaQP — S243

USE CUQP IMMEDIATELY
BEFORE AND deltaQP TO
GENERATE QUANTIZATION
PARAMETER OF FOCUSED CU — S244

RETURN

# FIG. 14

## FIG. 15

EP 2 763 412 A1

# FIG. 16

```
        ┌──────────────────────────┐
        │   START QUANTIZATION      │
        │   SETTING PROCESSING      │
        └──────────────────────────┘
                    │
                    ▼                        S301
┌───────────────────────────────────────────────┐
│         SET TRANSMISSION MINIMUM UNIT           │
│  max_cu_qp_delta_depth OF QUANTIZATION PARAMETER│
└───────────────────────────────────────────────┘
                    │
                    ▼                        S302
┌───────────────────────────────────────────────┐
│  SET QUANTIZATION GRANULARITY OF SLICE BORDER   │
│     slice_granularity LARGER THAN TRANSMISSION  │
│           MINIMUM UNIT OF PARAMETER             │
└───────────────────────────────────────────────┘
                    │
                    ▼                        S303
┌───────────────────────────────────────────────┐
│      SET INFORMATION pic_init_qp_minus 26       │
│    OF QUANTIZATION PARAMETER OF PICTURE          │
└───────────────────────────────────────────────┘
                    │
                    ▼                        S304
┌───────────────────────────────────────────────┐
│   TRANSMIT INFORMATION pic_init_qp_minus 26     │
│    OF QUANTIZATION PARAMETER OF PICTURE          │
└───────────────────────────────────────────────┘
                    │
                    ▼                        S305
┌───────────────────────────────────────────────┐
│  SET QUANTIZATION PARAMETER SliceQP OF SLICE    │
└───────────────────────────────────────────────┘
                    │
                    ▼                        S306
┌───────────────────────────────────────────────┐
│    CALCULATE DIFFERENCE VALUE slice_qp_delta    │
│  BETWEEN QUANTIZATION PARAMETER OF PICTURE       │
│      AND QUANTIZATION PARAMETER OF SLICE         │
└───────────────────────────────────────────────┘
                    │
                    ▼                        S307
┌───────────────────────────────────────────────┐
│    TRANSMIT DIFFERENCE VALUE slice_qp_delta     │
│  BETWEEN QUANTIZATION PARAMETER OF PICTURE       │
│      AND QUANTIZATION PARAMETER OF SLICE         │
└───────────────────────────────────────────────┘
                    │
                    ▼
             ┌──────────────┐
             │   RETURN     │
             └──────────────┘
```

# FIG. 17

START QUANTIZATION
SETTING PROCESSING

S321
SET QUANTIZATION
PARAMETER CUQP OF CU

S322
CU AT HEAD OF SLICE? — No

Yes

S323
CALCULATE DIFFERENCE VALUE
deltaQP BETWEEN QUANTIZATION
PARAMETER OF SLICE AND
QUANTIZATION PARAMETER OF CU

S324
TRANSMIT DIFFERENCE VALUE
deltaQP BETWEEN QUANTIZATION
PARAMETER OF SLICE AND
QUANTIZATION PARAMETER OF CU

S325
CALCULATE DIFFERENCE VALUE
deltaQP BETWEEN QUANTIZATION
PARAMETER OF CU IMMEDIATELY
BEFORE AND QUANTIZATION
PARAMETER OF FOCUSED CU

S326
TRANSMIT DIFFERENCE VALUE
deltaQP BETWEEN QUANTIZATION
PARAMETER OF CU IMMEDIATELY
BEFORE AND QUANTIZATION
PARAMETER OF FOCUSED CU

RETURN

FIG. 18

EP 2 763 412 A1

# FIG. 19

```
       ┌─────────────────────────────────┐
       │   START INVERSE-QUANTIZATION    │
       │      SETTING PROCESSING         │
       └─────────────────────────────────┘
                       │
                       ▼
┌──────────────────────────────────────────┐  S401
│    OBTAIN GRANULARITY OF SLICE BORDER      │
│           slice_granularity               │
└──────────────────────────────────────────┘
                       │
                       ▼
┌──────────────────────────────────────────┐  S402
│      OBTAIN TRANSMISSION MINIMUM UNIT      │
│ max_cu_qp_delta_depth OF QUANTIZATION PARAMETER │
└──────────────────────────────────────────┘
                       │
                       ▼
┌──────────────────────────────────────────┐  S403
│    OBTAIN INFORMATION pic_init_qp_minus 26 │
│    ABOUT QUANTIZATION PARAMETER OF PICTURE  │
└──────────────────────────────────────────┘
                       │
                       ▼
┌──────────────────────────────────────────┐  S404
│      OBTAIN DIFFERENCE VALUE slice_qp_delta │
│    OF QUANTIZATION PARAMETER OF PICTURE     │
│   AND QUANTIZATION PARAMETER OF SLICE       │
└──────────────────────────────────────────┘
                       │
                       ▼
┌──────────────────────────────────────────┐  S405
│         GENERATE QUANTIZATION              │
│      PARAMETER SliceQP OF SLICE            │
└──────────────────────────────────────────┘
                       │
                       ▼
┌──────────────────────────────────────────┐  S406
│      OBTAIN INFORMATION deltaQP            │
│ ABOUT QUANTIZATION PARAMETER OF FOCUSED CU │
└──────────────────────────────────────────┘
                       │
                       ▼
        ⟨      CU AT HEAD OF SLICE?      ⟩ S407
                       │                    NO ──────────┐
                    YES│                                 │
                       ▼                                 ▼
┌──────────────────────────┐ S408    ┌──────────────────────────┐ S410
│  SELECT SliceQP AND deltaQP │        │   SELECT CUQP IMMEDIATELY │
└──────────────────────────┘         │    BEFORE AND deltaQP     │
                       │              └──────────────────────────┘
                       ▼ S409                        │
┌──────────────────────────┐          ▼ S411
│  USE SliceQP AND deltaQP TO │        ┌──────────────────────────┐
│    GENERATE QUANTIZATION   │        │   USE CUQP IMMEDIATELY    │
│  PARAMETER OF FOCUSED CU   │        │   BEFORE AND deltaQP TO   │
└──────────────────────────┘         │   GENERATE QUANTIZATION   │
                       │              │  PARAMETER OF FOCUSED CU  │
                       │              └──────────────────────────┘
                       │◄─────────────────────────────┘
                       ▼
                ┌─────────────┐
                │   RETURN    │
                └─────────────┘
```

## FIG. 20

| MODE NUMBER | METHOD | ADVANTAGE | DISADVANTAGE |
|---|---|---|---|
| 1 | USE SLICE QP | HIGH DEGREE OF FLEXIBILITY IN SLICE SETTING | WITH CONDITIONAL BRANCH |
| 2 | USE CUQP THEREAFTER | HIGH DEGREE OF FLEXIBILITY IN SLICE SETTING | WITH CONDITIONAL BRANCH, BUFFER REQUIRED |
| 3 | BORDER SETTING PROHIBITION CONTROL | NO CONDITIONAL BRANCH | LOW DEGREE OF FLEXIBILITY IN SLICE SETTING |

EP 2 763 412 A1

# FIG. 21

| pic_parameter_set_rbsp( ) { | Descriptor |
|---|---|
| pic_parameter_set_id | ue(v) |
| seq_parameter_set_id | ue(v) |
| entropy_coding_mode_flag | u(1) |
| num_temporal_layer_switching_point_flags | ue(v) |
| mode_no | |
| for( i = 0; i < num_temporal_layer_switching_point_flags; i++ ) | |
| tempora l_layer_switching_point_flag [ i ] | u(1) |
| num_ref_idx_l0_default_active_minus1 | ue(v) |
| num_ref_idx_l1_default_active_minus1 | ue(v) |
| pic_init_qp_minus26 /* relative to 26 */ | se(v) |
| constrained_intra_pred_flag | u(1) |
| slice_granularity | u(2) |
| shared_pps_info_enabled_flag | u(1) |
| if( shared_pps_info_enabled_flag ) | |
| if( adaptive_loop_filter_enabled_flag ) | |
| alf_param ( ) | |
| if( cu_qp_delta_enabled_flag ) | |
| max_cu_qp_delta_depth | u(4) |
| rbsp_trailing_bits( ) | |
| } | |

# FIG. 22

SUPPOSE THAT GRANULARITY OF deltaQP TRANSMISSION IS SET AS 8x8

TUSize = 16x16    TUSize = 32x32

● deltaQP

IN REALITY, NOT TRANSMITTED AS 8x8

REDUNDANT INFORMATION IS TRANSMITTED
WITH Max_cu_qp_delta_depth

EP 2 763 412 A1

EP 2 763 412 A1

## FIG. 23

FIG. 24

EP 2 763 412 A1

*FIG. 25*

EP 2 763 412 A1

## FIG. 26

## FIG. 27

BASE LAYER
IMAGE →
621
ENCODING
UNIT
→ BASE LAYER IMAGE
ENCODING STREAM
→ 623
MULTIPLEXING
UNIT
→ HIERARCHICAL IMAGE
ENCODING STREAM

QP/dQP ↕

NON-BASE LAYER
IMAGE →
622
ENCODING
UNIT
→ NON-BASE LAYER IMAGE
ENCODING STREAM

620

EP 2 763 412 A1

## FIG. 28

# FIG. 29

CPU 801   ROM 802   RAM 803

804

INPUT/OUTPUT INTERFACE 810

INPUT UNIT 811   OUTPUT UNIT 812   STORAGE UNIT 813   COMMUNICATION UNIT 814   DRIVE 815

REMOVABLE MEDIUM 821

800

EP 2 763 412 A1

# FIG. 30

## FIG. 31

EP 2 763 412 A1

## FIG. 32

## FIG. 33

EP 2 763 412 A1

## INTERNATIONAL SEARCH REPORT

| | International application No. |
|---|---|
| | PCT/JP2012/074093 |

**A. CLASSIFICATION OF SUBJECT MATTER**
*H04N7/26(2006.01)i*

According to International Patent Classification (IPC) or to both national classification and IPC

**B. FIELDS SEARCHED**

Minimum documentation searched (classification system followed by classification symbols)
H04N7/24-7/68

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | Thomas Wiegand et al., WD3: Working Draft 3 of High-Efficiency Video Coding, Joint Collaborative Team on Video Coding (JCT-VC) of ITU-T SG16 WP3 and ISO/IEC JTC1/SC29/WG11 5th Meeting: Geneva, CH, 2011.06.27, 7.4.2.1, 7.4.2.2, [JCTVC-E603] | 1-20 |
| A | Peisong Chen et al., Slice Design with Fine Granularity, Joint Collaborative Team on Video Coding (JCT-VC) of ITU-T SG16 WP3 and ISO/IEC JTC1/SC29/WG11 5th Meeting: Geneva, CH, 2011. 03.16, [JCTVC-E401] | 1-20 |

☐ Further documents are listed in the continuation of Box C.       ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 30 November, 2012 (30.11.12) | 11 December, 2012 (11.12.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BENJAMIN BROSS ; WOO-JIN HAN ; JENS-RAINER OHM ; GARY J. SULLIVAN ; THOMAS WIEGAND.** Working Draft 4 of High-Efficiency Video Coding. *ITU-T SG16 WP3 and ISO/IEC JTC1/SC29/WG116th Meeting,* 14 July 2011